(19) **Europäisches Patentamt European Patent Office Office européen des brevets**

(11) **EP 4 654 513 A1**

(12) **EUROPEAN PATENT APPLICATION**
published in accordance with Art. 153(4) EPC

(43) Date of publication:
26.11.2025 Bulletin 2025/48

(21) Application number: 24749664.9

(22) Date of filing: 30.01.2024

(51) International Patent Classification (IPC):
**H04L 5/00** (2006.01)

(52) Cooperative Patent Classification (CPC):
**H04L 5/00**

(86) International application number:
**PCT/CN2024/074580**

(87) International publication number:
**WO 2024/160185 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 03.02.2023 CN 202310127389

(71) Applicant: **Huawei Technologies Co., Ltd.**
**Shenzhen, Guangdong 518129 (CN)**

(72) Inventors:
• **LI, Ting**
  **Shenzhen, Guangdong 518129 (CN)**
• **WANG, Xiaohan**
  **Shenzhen, Guangdong 518129 (CN)**
• **CHEN, Xinyue**
  **Shenzhen, Guangdong 518129 (CN)**
• **JIN, Huangping**
  **Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **CHANNEL STATE INFORMATION REPORTING METHOD AND APPARATUS, AND READABLE STORAGE MEDIUM**

(57) This application relates to the field of communication technologies, and in particular, to a channel state information reporting method, an apparatus, and a readable storage medium. The method includes: determining indication information of M coefficients based on reference signals on N reference signal resources, where priorities of the M coefficients are determined based on priorities of the N reference signal resources, and the M coefficients are used to determine a precoding matrix; and sending first information, where the first information includes indication information of K coefficients, and the K coefficients are determined from the M coefficients based on the priorities of the M coefficients. It is ensured as much as possible that more important information can be preferentially reported, to reduce a performance loss of a communication system.

FIG. 4

## Description

This application claims priority to Chinese Patent Application No. 202310127389.5, filed with the China National Intellectual Property Administration on February 3, 2023 and entitled "CHANNEL STATE INFORMATION REPORTING METHOD, APPARATUS, AND READABLE STORAGE MEDIUM", which is incorporated herein by reference in its entirety.

## TECHNICAL FIELD

This application relates to the field of communication technologies, and in particular, to a channel state information reporting method, an apparatus, and a readable storage medium.

## BACKGROUND

In an existing long term evolution (long term evolution, LTE) communication system and a new generation radio access technology (new radio, NR) communication system, a base station (base station, BS) needs to obtain downlink channel state information (channel state information, CSI), to determine configurations such as a resource, a modulation and coding scheme (modulation and coding scheme, MCS), and precoding for scheduling a downlink data channel of a user equipment (user equipment, UE). In a time division duplex (time division duplex, TDD) system, because there is reciprocity between an uplink channel and a downlink channel, a base station may obtain uplink CSI by measuring an uplink reference signal, to infer accurate downlink CSI, for example, use the uplink CSI as the downlink CSI. However, in a frequency division duplex (frequency division duplex, FDD) system, reciprocity between an uplink channel and a downlink channel cannot be ensured, and downlink CSI is obtained by a UE by measuring a downlink reference signal. For example, a UE obtains downlink CSI by measuring a channel state information reference signal (channel state information reference signal, CSI-RS) or a synchronization signal/physical broadcast channel block (synchronizion signal/physical broadcast channel block, SS/PBCH block, SSB). Then, the UE generates a CSI report in a manner predefined in a protocol or configured by a base station, and reports the CSI report to the base station, so that the base station obtains the downlink CSI.

To improve throughput performance of a communication system and user experience, a plurality of transmission reception points (transmission reception points, TRPs) may be used to serve one user equipment in a multi-station coordination manner. There are a plurality of multi-station coordination manners, for example, coherent joint transmission (coherent joint transmission, CJT) and non-coherent joint transmission (non-coherent joint transmission, NCJT). In the CJT coordination manner, a plurality of TRPs may simultaneously serve a UE. The UE needs to jointly report downlink channel state information CSI of the TRPs in a multi-station coordination set, to enable multi-TRP coherent joint transmission. However, in a current downlink CSI reporting solution, there is no effective CSI reporting mechanism for a multi-TRP coherent joint transmission scenario.

## SUMMARY

Embodiments of this application provide a channel state information reporting method, an apparatus, and a readable storage medium. When CSI is reported for a multi-TRP CJT scenario, a reference signal resource dimension (namely, a TRP dimension) is additionally introduced, so that a UE can report joint downlink CSI of all TRPs, and multi-TRP coherent joint transmission is enabled. A provided priority function can be used to effectively resolve a problem of determining a reporting sequence of related information of different coefficients corresponding to different TRPs, ensuring as much as possible that more important information can be preferentially reported, to reduce a performance loss of a communication system.

The following describes this application from different aspects. It should be understood that the following implementations and beneficial effects of different aspects may be mutually referenced.

According to a first aspect, this application provides a channel state information reporting method, applied to a terminal device. The method includes: receiving reference signals on N reference signal resources; determining indication information of M coefficients based on the reference signals on the N reference signal resources, where priorities of the M coefficients are determined based on priorities of the N reference signal resources, both M and N are integers greater than 1, and the M coefficients are used to determine a precoding matrix; and

sending first information, where the first information includes indication information of K coefficients, the K coefficients are determined from the M coefficients based on the priorities of the M coefficients, and K is a positive integer less than or equal to M.

For a current Rel-16 eType-II codebook and a Rel-17 FeType-II codebook, only a coefficient priority definition solution during CSI reporting for a single-TRP (corresponding to a single reference signal resource) transmission scenario or two-TRP non-coherent joint transmission scenario is considered, and cannot be applied to a multi-TRP joint CJT scenario. In this embodiment of this application, when the terminal device (UE) reports CSI for a multi-TRP joint transmission scenario, a reference signal resource dimension (namely, a TRP dimension) is additionally introduced, so that the UE can report joint downlink CSI of each TRP, and multi-TRP coherent joint transmission is enabled. Priorities of coefficients may be determined based on priorities of different TRPs (corresponding to reference signal resources), to reflect a difference in priorities of the coefficients corresponding to the different TRPs. This can effectively resolve a problem of determining a reporting sequence of related information of the different coefficients corresponding to the different TRPs, and ensure that more important information is preferentially reported as much as possible, to reduce a performance loss of a communication system.

According to a second aspect, this application provides a channel state information reporting method, applied to a network device. The method includes: sending a reference signal on a reference signal resource; and receiving first information, where the first information includes indication information of K coefficients, the K coefficients are determined from M coefficients based on priorities of the M coefficients, the reference signal resource is any one of N reference signal resources, both M and N are integers greater than 1, K is a positive integer less than or equal to M, the priorities of the M coefficients are determined based on priorities of the N reference signal resources, and the M coefficients are used to determine a precoding matrix.

With reference to the second aspect, in a possible implementation, the method further includes: determining the precoding matrix based on the indication information that is of the K coefficients and that is included in the first information.

With reference to the first aspect or the second aspect, in a possible implementation, the first information includes indication information of some or all of the M coefficients, and the some or all of the coefficients may be determined from the M coefficients based on the priorities of the M coefficients.

In this embodiment of this application, when reporting CSI, the terminal device (UE) may first compare overheads of the to-be-reported CSI with a size of a CSI reporting resource configured by a network device (base station). Then, indication information of a coefficient that needs to be reported may be determined based on a comparison result and a priority of the coefficient, so as to ensure effective transmission of the indication information of the coefficient.

With reference to the first aspect or the second aspect, in a possible implementation, the priorities of the M coefficients are further determined based on one or more of the following: a transmission layer sequence number, a spatial domain basis vector sequence number, a reference signal port sequence number, and a frequency domain basis vector sequence number.

In this embodiment of this application, the UE may determine the priorities of the M coefficients based on the priority of the reference signal resource, and one or more of the transmission layer sequence number, the spatial domain basis vector sequence number, the reference signal port sequence number, and the frequency domain basis vector sequence number. For example, priority functions of coefficients corresponding to different transmission layers, different TRPs, different spatial domain basis vectors/reference signal ports, and different frequency domain basis vectors may be predefined, to resolve a problem of how to determine a reporting sequence of related information of different coefficients.

With reference to the first aspect or the second aspect, in a possible implementation, a priority of a coefficient associated with a spatial domain basis vector or a reference signal port that corresponds to any one of the N reference signal resources is determined according to any one or more items of the following first preset rule:

if a priority of an $n_1$th reference signal resource in the N reference signal resources is higher than a priority of an $n_2$th reference signal resource in the N reference signal resources, a priority of a coefficient associated with any spatial domain basis vector corresponding to the $n_1$th reference signal resource is higher than a priority of a coefficient associated with any spatial domain basis vector corresponding to the $n_2$th reference signal resource; a priority of a coefficient associated with any reference signal port corresponding to the $n_1$th reference signal resource is higher than a priority of a coefficient associated with any reference signal port corresponding to the $n_2$th reference signal resource; or

if a priority of an $n_1$th reference signal resource in the N reference signal resources is higher than a priority of an $n_2$th reference signal resource in the N reference signal resources, a priority of a coefficient associated with an $i$th spatial domain basis vector corresponding to the $n_1$th reference signal resource is higher than a priority of a coefficient associated with an $i$th spatial domain basis vector that is with the same sequence number and that corresponds to the $n_2$th reference signal resource; or a priority of a coefficient associated with an $i$th reference signal port corresponding to the $n_1$th reference signal resource is higher than a priority of a coefficient associated with an $i$th reference signal port that is with the same sequence number and that corresponds to the $n_2$th reference signal resource, where $i$ represents the sequence number of the spatial domain basis vector or the reference signal port.

In this embodiment of this application, several rules for determining the priority of the coefficient are provided, to provide reference for the UE to determine the priorities of the M coefficients, so as to ensure that the UE can effectively transmit the indication information of the coefficients when reporting the CSI.

With reference to the first aspect or the second aspect, in a possible implementation, the priorities of the M

coefficients satisfy:

$$\mathrm{Pri}(l, i, f, n) = 2L_{max} \cdot X \cdot v \cdot \pi(f) + v \cdot \varphi(i, n) + l,$$

where $l$ represents the transmission layer sequence number, and $l$ is set to 1, 2, ..., $v$; $v$ represents a quantity of transmission layers; $i$ represents the spatial domain basis vector sequence number, and $i$ is set to $0, 1, ..., 2L_n$ - 1; $L_n$ represents a quantity of spatial domain basis vectors corresponding to an $n$th reference signal resource; $f$ represents the frequency domain basis vector sequence number, and $f$ is set to 0, 1, ..., $M_v$ - 1; $M_v$ represents a quantity of frequency domain basis vectors; $n$ represents sequence numbers of the N reference signal resources; $\varphi(i, n)$ represents a priority of a coefficient set associated with an $i$th spatial domain basis vector corresponding to the $n$th reference signal resource, and satisfies $\varphi(i, n) < 2L_{max} \cdot X$; $X$ is an integer greater than or equal to $N$; $L_{max}$ is greater than or equal to a maximum value of quantities of spatial domain basis vectors respectively corresponding to the N reference signal resources; $\pi(f)$ represents a first remapping function, which is used to remap a sequence number or an index of a frequency domain basis vector selected for the $l$th transmission layer and the $n$th reference signal resource; and $\mathrm{Pri}(l, i, f, n)$ represents a priority of a coefficient corresponding to a given combination of the $l$th transmission layer, the $n$th reference signal resource, the $i$th spatial domain basis vector, and the $f$th frequency domain basis vector.

In this embodiment of this application, when determining the priorities of the M coefficients, the UE may determine the priorities of the coefficients with reference to the specified priority function, and determine a priority value $\mathrm{Pri}(l, i, f, n)$ of the coefficient corresponding to the given sequence number combination $(l, i, f, n)$; in other words, when each of $l, i, f, n$ in the given sequence number combination $(l, i, f, n)$ is set to different values, priority values of different coefficients may be obtained, so as to determine the priorities of the M coefficients. In the foregoing specified priority function, the various constraint conditions, for example, $(\varphi(i, n) < 2L_{max} \cdot X$, $X$ is an integer greater than or equal to $N$, and another constraint, can ensure that when each of $l, i, f, n$ in different given sequence number combinations $(l, i, f, n)$ is set to different values, priority values $\mathrm{Pri}(l, i, f, n)$ of coefficients corresponding to all the combinations are different.

With reference to the first aspect or the second aspect, in a possible implementation, $\varphi(i, n)$ satisfies any one of the following formulas:

$$\varphi(i, n) = 2L_{max} \cdot G(n) + i, \ \text{where} \ \ G(n)$$

represents a priority ranking of the $n$th reference signal resource in the N reference signal resources; $L_{max}$ is greater than or equal to the maximum value of the quantities of spatial domain basis vectors respectively corresponding to the N reference signal resources; $i$ represents the spatial domain basis vector sequence number, and $i$ is set to 0, 1, ..., $2L_n$ - 1; and $L_n$ represents the quantity of spatial domain basis vectors corresponding to the $n$th reference signal resource;

$$\varphi(i, n) = N \cdot \phi_n(i) + G(n), \ \text{where} \ \ G(n)$$

represents a priority ranking of the $n$th reference signal resource in the N reference signal resources; $i$ represents the spatial domain basis vector sequence number, and $i$ is set to 0, 1, ..., $2L_n$ - 1; $L_n$ represents the quantity of spatial domain basis vectors corresponding to the $n$th reference signal resource; and $\Phi_n(i) = i$ or $\Phi_n(i) = i + 2L_{max} - 2L_n$, where $\Phi_n(i)$ represents a second remapping function, which is used to remap the spatial domain basis vector sequence number; or

$$\varphi(i, n) = N \cdot a_{max} \cdot \left\lfloor \frac{i}{a_n} \right\rfloor + G(n) \cdot a_{max} + i \bmod a_n,$$

where $a_n$ is a positive integer greater than or equal to 1 and is in direct proportion to a value of $L_n$, and a greatest common divisor of all $a_n$ is 1; $i$ represents the spatial domain basis vector sequence number, and $i$ is set to 0, 1, ... , $2L_n$ - 1; $L_n$ represents the quantity of spatial domain basis vectors corresponding to the $n$th reference signal resource; and $a_{max}$ is a maximum value of all $a_n$.

In this embodiment of this application, when the priorities of the M coefficients are determined, the reference signal resource dimension and a spatial domain basis vector dimension may be combined, so that for a combination $(i, n)$ of the reference signal resource and the spatial domain basis vector with given sequence numbers, $\varphi(i, n)$ indicates the priority of the coefficient set associated with the $i$th spatial domain basis vector corresponding to the $n$th reference signal resource. During design of $\varphi(i, n)$, refer to any one of the foregoing formulas, so that a basis can be provided for determining the priorities of the M coefficients.

With reference to the first aspect or the second aspect, in a possible implementation, if a priority of an $n_1$th reference signal resource in the N reference signal resources is higher than a priority of an $n_2$th reference signal resource in the N reference signal resources, a priority of any coefficient associated with the $n_1$th reference signal resource is higher than a priority of any coefficient associated with the $n_2^{th}$ reference signal resource.

In this embodiment of this application, several rules for determining the priority of the coefficient are provided, to provide reference for the UE to determine the priorities of the M coefficients, so as to ensure that the UE can effectively transmit indication information of an important coefficient when reporting the CSI.

With reference to the first aspect or the second aspect, in a possible implementation, the priorities of the M coefficients satisfy:

$$\mathrm{Pri}(l, i, f, n) = 2L_{max} \cdot v \cdot Y \cdot G(n) + 2L_{max} \cdot v \cdot \pi(f) + v \cdot i + l,$$

where $l$ represents the transmission layer sequence number, and $l$ is set to 1, 2, ..., $v$; $v$ represents a quantity of transmission layers; $i$ represents the spatial domain basis vector sequence number, and $i$ is set to 0, 1, ..., $2L_n$ - 1; $L_n$ represents a quantity of spatial domain basis vectors corresponding to an $n^{th}$ reference signal resource; $f$ represents the frequency domain basis vector sequence number, and $f$ is set to 0, 1, ..., $M_v$ - 1; $M_v$ represents a quantity of frequency domain basis vectors; $n$ represents sequence numbers of the N reference signal resources; $G(n)$ represents a priority ranking of the $n^{th}$ reference signal resource in the N reference signal resources; $L_{max}$ is greater than or equal to a maximum value of quantities of spatial domain basis vectors respectively corresponding to the N reference signal resources; $Y$ is an integer greater than or equal to $M_v$, or $Y$ is an integer greater than or equal to $N_3$; $N_3$ is a quantity of subbands or a quantity of frequency domain units; $\pi(f)$ represents a first remapping function, which is used to remap a sequence number or an index of a frequency domain basis vector selected for the $l^{th}$ transmission layer and the $n^{th}$ reference signal resource; and Pri($l, i, f, n$) represents a priority of a coefficient corresponding to a given combination of the $l^{th}$ transmission layer, the $n^{th}$ reference signal resource, the $i^{th}$ spatial domain basis vector, and the $f^{th}$ frequency domain basis vector.

In this embodiment of this application, when determining the priorities of the M coefficients, the UE may determine the priorities of the coefficients with reference to the specified priority function, and determine a priority value Pri($l, i, f, n$) of the coefficient corresponding to the given sequence number combination ($l, i, f, n$); in other words, when each of $l, i, f, n$ in the given sequence number combination ($l, i, f, n$) is set to different values, priority values of different coefficients may be obtained, so as to determine the priorities of the M coefficients. In the foregoing specified priority function, the various constraint conditions, for example, $Y$ is an integer greater than or equal to $M_v$, $Y$ is an integer greater than or equal to $N_3$, or another constraint, can ensure that when each of $l, i, f, n$ in different given sequence number combinations ($l, i, f, n$) is set to different values, priority values Pri($l, i, f, n$) of coefficients corresponding to all the combinations are different.

With reference to the first aspect or the second aspect, in a possible implementation, $\pi(f)$ satisfies any one of the following formulas:

$$\pi(f) = f;$$

$$\pi(f) = \min \left(2 \cdot k_{3,l,n}^{(f)}, 2 \cdot \left(N_3 - k_{3,l,n}^{(f)}\right) - 1\right), \quad \text{where} \quad k_{3,l,n}^{(f)} = \left(k_{3,l,n}^{(f)} - k_{3,l,n^*}^{(f_l^*)}\right) \bmod N_3 \; ; \quad k_{3,l,n}^{(f)}$$

represents an index, in a frequency domain basis vector universal set, of the $f^{th}$ frequency domain basis vector of the $n^{th}$ reference signal resource corresponding to the $l^{th}$ transmission layer; $k_{3,l,n^*}^{(f_l^*)}$ represents an original index of a frequency domain basis vector corresponding to a strongest coefficient in the N reference signal resources corresponding to the $l^{th}$ transmission layer; $f_l^*$ represents a sequence number of the frequency domain basis vector corresponding to the strongest coefficient of the $l^{th}$ transmission layer; and $n^*$ represents a reference signal resource sequence number corresponding to the strongest coefficient of the $l^{th}$ transmission layer; or

$$\pi(f) = \min \left(2 \cdot k_{3,l,n}^{(f)}, 2 \cdot \left(N_3 - k_{3,l,n}^{(f)}\right) - 1\right), \quad \text{where} \quad k_{3,l,n}^{(f)} = \left(k_{3,l,n}^{(f)} - k_{3,l,n}^{(f_{l,n}^*)}\right) \bmod N_3 \; ; \quad k_{3,l,n}^{(f)}$$

represents an index, in a frequency domain basis vector universal set, of the $f^{th}$ frequency domain basis vector of the $n^{th}$ reference signal resource corresponding to the $l^{th}$ transmission layer; $k_{3,l,n}^{(f_{l,n}^*)}$ represents an original index of a frequency domain basis vector corresponding to a strongest coefficient of the $n^{th}$ reference signal resource corresponding to the $l^{th}$ transmission layer; and $f_{l,n}^*$ represents a sequence number of the frequency domain basis vector corresponding to the strongest coefficient of the $n^{th}$ reference signal resource corresponding to the $l^{th}$ transmission layer.

In this embodiment of this application, when determining the priorities of the M coefficients, the UE may refer to the foregoing remapping function $\pi(f)$, to perform overall remapping on the sequence number or the index of the frequency domain basis vector selected for the $l^{th}$ transmission layer and the $n^{th}$ reference signal resource, so that a frequency domain basis vector corresponding to a strongest coefficient of each transmission layer is always located at a position of a 1st frequency domain basis vector; or to perform remapping on a sequence number or an index of a frequency domain basis vector selected for each reference signal resource corresponding to the $l^{th}$ transmission layer is remapped, so that a frequency domain basis vector corresponding to a strongest coefficient of each reference signal resource corresponding to each transmission layer is always located at a position of a 1st frequency domain basis vector of the reference signal resource. In this way, it is ensured that the UE may preferentially report a coefficient corresponding to a frequency domain basis vector corresponding to a strongest coefficient, and then report coefficients corresponding to frequency domain basis vectors on two sides of the frequency domain basis vector corresponding to the strongest coefficient.

With reference to the first aspect or the second aspect, in a possible implementation, the priorities of the M coefficients satisfy:

$$\mathrm{Pri}(l, i, f, n) = K_{1,max} \cdot v \cdot Y \cdot G(n) + K_{1,max} \cdot v \cdot f + v \cdot i + l,$$

where $l$ represents the transmission layer sequence number, and $l$ is set to 1, 2, ... , $v$; $v$ represents a quantity of transmission layers; $i$ represents the reference signal port sequence number, and $i$ is set to $0, 1, ... , K_{1,n} - 1$; $K_{1,n}$ represents a quantity of selected reference signal ports corresponding to an $n^{th}$ reference signal resource; $f$ represents the frequency domain basis vector sequence number, and $f$ is set to 0, 1, ... , $M_v - 1$; $M_v$ represents a quantity of frequency domain basis vectors; $n$ represents sequence numbers of the N reference signal resources; $G(n)$ represents a priority ranking of the $n^{th}$ reference signal resource in the N reference signal resources; $K_{1,max}$ is greater than or equal to a maximum value of a quantity of selected reference signal ports corresponding to each of the N reference signal resources; $Y$ is an integer greater than or equal to $M_v$; and Pri($l, i, f, n$) represents a priority of a coefficient corresponding to a given combination of the $l^{th}$ transmission layer, the $n^{th}$ reference signal resource, the $i^{th}$ reference signal port, and the $f^{th}$ frequency domain basis vector.

In this embodiment of this application, when determining the priorities of the M coefficients, the UE may determine the priorities of the coefficients with reference to the specified priority function, and determine a priority value Pri($l, i, f, n$) of the coefficient corresponding to the given sequence number combination ($l, i, f, n$); in other words, when each of $l, i, f, n$ in the given sequence number combination ($l, i, f, n$) is set to different values, priority values of different coefficients may be obtained, so as to determine the priorities of the M coefficients. In the foregoing specified priority function, the various constraint conditions, for example, $Y$ is an integer greater than or equal to $M_v$, can ensure that when each of $l, i, f, n$ in different given sequence number combinations ($l, i, f, n$) is set to different values, priority values Pri($l, i, f, n$) of coefficients corresponding to all the combinations are different.

With reference to the first aspect or the second aspect, in a possible implementation, the priorities of the M coefficients satisfy:

$$\mathrm{Pri}(l, i, f, n) = K_{1,max} \cdot v \cdot X \cdot f + v \cdot \varphi(i, n) + l,$$

where $l$ represents the transmission layer sequence number, and $l$ is set to 1, 2, ..., $v$; $v$ represents a quantity of transmission layers; $i$ represents the reference signal port sequence number, and $i$ is set to 0, 1, ..., $K_{1,n} - 1$; $K_{1,n}$ represents a quantity of selected reference signal ports corresponding to an $n^{th}$ reference signal resource; $f$ represents the frequency domain basis vector sequence number, and $f$ is set to 0, 1, ..., $M_v - 1$; $M_v$ represents a quantity of frequency domain basis vectors; $X$ is an integer greater than or equal to $N$; $n$ represents sequence numbers of the N reference signal resources; $\varphi(i, n)$ represents a priority of a coefficient set associated with an $i^{th}$ reference signal port corresponding to the $n^{th}$ reference signal resource, and satisfies ($\varphi(i, n) < 2L_{max} \cdot X$; $K_{1,max}$ is greater than or equal to a maximum value of a quantity of selected reference signal ports corresponding to each of the N reference signal resources; and Pri($l, i, f, n$) represents a priority of a coefficient corresponding to a given combination of the $l^{th}$ transmission layer, the $n^{th}$ reference signal resource, the $i^{th}$ reference signal port, and the $f^{th}$ frequency domain basis vector.

In this embodiment of this application, when determining the priorities of the M coefficients, the UE may determine the priorities of the coefficients with reference to the specified priority function, and determine a priority value Pri($l, i, f, n$) of the coefficient corresponding to the given sequence number combination ($l, i, f, n$); in other words, when each of $l, i, f, n$ in the given sequence number combination ($l, i, f, n$) is set to different values, priority values of different coefficients may be obtained, so as to determine the priorities of the M coefficients. In the foregoing specified priority function, the various constraint conditions, for example, $X$ is an integer greater than or equal to $N$, $\varphi(i, n) < 2L_{max} \cdot X$, and another constraint, can ensure that when each of $l, i, f, n$ in different given sequence number combinations ($l, i, f, n$) is set to different values, priority values Pri($l, i, f, n$) of coefficients corresponding to all the combinations are different.

With reference to the first aspect or the second aspect, in a possible implementation, $\varphi(i, n)$ satisfies any one of the following formulas:

$$\varphi(i, n) = K_{1,max} \cdot G(n) + i, \text{ where } G(n)$$

represents a priority ranking of the $n^{th}$ reference signal resource in the N reference signal resources; $K_{1,max}$ is greater than or equal to the maximum value of the quantities of selected reference signal ports respectively corresponding to the N reference signal resources; $i$ represents the reference signal port sequence number, and $i$ is set to 0, 1, ... , $K_{1,n}$ - 1; and $K_{1,n}$ represents the quantity of selected reference signal ports corresponding to the $n^{th}$ reference signal resource;

$$\varphi(i, n) = N \cdot i + G(n),$$

where $G(n)$ represents a priority ranking of the $n^{th}$ reference signal resource in the N reference signal resources; $i$ represents the reference signal port sequence number, and $i$ is set to 0, 1, ... , $K_{1,n}$ - 1; and $K_{1,n}$ represents the quantity of selected reference signal ports corresponding to the $n^{th}$ reference signal resource;

$$\varphi(i, n) = N \cdot \phi_n(i) + G(n),$$

where $G(n)$ represents a priority ranking of the $n^{th}$ reference signal resource in the N reference signal resources; $i$ represents the reference signal port sequence number, and $i$ is set to 0, 1, ... , $K_{1,n}$ - 1; $K_{1,n}$ represents the quantity of selected reference signal ports corresponding to the $n^{th}$ reference signal resource; and $\Phi_n(i) = i$ or $\Phi_n(i) = i + K_{1,max} - K_{1,n}$, where $\Phi_n(i)$ represents a third remapping function, used to remap the reference signal port sequence number; or

$$\varphi(i, n) = N \cdot a_{max} \cdot \left\lfloor \frac{i}{a_n} \right\rfloor + G(n) \cdot a_{max} + i \mod a_n,$$

where $a_n$ is a positive integer greater than or equal to and is in direct proportion to a value of $K_{1,n}$, and a greatest common divisor of all $a_n$ is 1; $i$ represents the reference signal port sequence number, and $i$ is set to 0, 1, ..., $K_{1,n}$ - 1; $K_{1,n}$ represents the quantity of selected reference signal ports corresponding to the $n^{th}$ reference signal resource; and $a_{max}$ is a maximum value of all $a_n$.

In this embodiment of this application, when the priorities of the M coefficients are determined, the reference signal resource dimension and a reference signal port dimension may be combined, so that for a combination $(i, n)$ of the reference signal resource and the reference signal port with given sequence numbers, $\varphi(i, n)$ indicates the priority of the coefficient set associated with the $i^{th}$ reference signal port corresponding to the $n^{th}$ reference signal resource. During design of $\varphi(i, n)$, refer to any one of the foregoing formulas, so that a basis can be provided for determining the priorities of the M coefficients.

With reference to the first aspect or the second aspect, in a possible implementation, a smaller value of Pri($l, i, f, n$) indicates a higher priority of a coefficient corresponding to a given sequence number combination of the $l^{th}$ transmission layer, the $n^{th}$ reference signal resource, the $i^{th}$ spatial domain basis vector or reference signal port, and the $f^{th}$ frequency domain basis vector.

With reference to the first aspect or the second aspect, in a possible implementation, the priorities of the N reference signal resources are determined according to any one or more items of the following second preset rule:

a larger quantity of spatial domain basis vectors corresponding to the reference signal resource or a larger quantity of reference signal ports selected for the reference signal resource indicates a higher priority of the reference signal resource;

a larger amplitude of a strongest coefficient corresponding to the reference signal resource indicates a higher priority of the reference signal resource;

a higher signal strength of a reference signal corresponding to the reference signal resource indicates a higher priority of the reference signal resource; or

a smaller sequence number of the reference signal resource indicates a higher priority of the reference signal resource.

With reference to the first aspect or the second aspect, in a possible implementation, a smaller value of $G(n)$ indicates a higher priority of the $n^{th}$ reference signal resource.

With reference to the first aspect or the second aspect, in a possible implementation, indication information of the coefficients includes one or more of amplitude indication information of the coefficients, phase indication information of the coefficients, and position indication information of the coefficients.

With reference to the first aspect or the second aspect, in a possible implementation, a smaller value of $\varphi(i, n)$ indicates a higher priority of the coefficient set associated with the $i^{th}$ spatial domain basis vector or reference signal port that corresponds to the $n^{th}$ reference signal resource.

With reference to the first aspect or the second aspect, in a possible implementation, when the preset condition is satisfied, the priorities of the M coefficients are determined based on a function that is in a preset function and that corresponds to the preset condition, and the preset function includes one or more of the following functions:

$$\text{Pri}(l,i,f,n) = 2L_{max} \cdot X \cdot v \cdot \pi(f) + v \cdot \varphi(i,n) + l;$$

$$\text{Pri}(l,i,f,n) = K_{1,max} \cdot v \cdot X \cdot f + v \cdot \varphi(i,n) + l;$$

$$\text{Pri}(l,i,f,n) = 2L_{max} \cdot v \cdot Y \cdot G(n) + 2L_{max} \cdot v \cdot \pi(f) + v \cdot i + l; \text{ or}$$

$$\text{Pri}(l,i,f,n) = K_{1,max} \cdot v \cdot Y \cdot G(n) + K_{1,max} \cdot v \cdot f + v \cdot i + l.$$

According to a third aspect, this application provides a communication apparatus. The communication apparatus includes: a receiving unit, configured to receive reference signals on N reference signal resources; a processing unit, configured to determine indication information of M coefficients based on the reference signals on the N reference signal resources, where priorities of the M coefficients are determined based on priorities of the N reference signal resources, both M and N are integers greater than 1, and the M coefficients are used to determine a precoding matrix; and a sending unit, configured to send first information, where the first information includes indication information of K coefficients, the K coefficients are determined from the M coefficients based on the priorities of the M coefficients, and K is a positive integer less than or equal to M.

According to a fourth aspect, this application provides a communication apparatus. The communication apparatus is configured to perform a step or a function performed by a second communication apparatus. The communication apparatus includes: a processing unit, configured to generate a reference signal; a sending unit, configured to send the reference signal on a corresponding reference signal resource in N reference signal resources; and a receiving unit, configured to receive first information, where the first information includes indication information of K coefficients, the K coefficients are determined from M coefficients based on priorities of the M coefficients, the reference signal resource is any one of the N reference signal resources, both M and N are integers greater than 1, K is a positive integer less than or equal to M, the priorities of the M coefficients are determined based on priorities of the N reference signal resources, and the M coefficients are used to determine a precoding matrix.

With reference to the fourth aspect, in a possible implementation, the processing unit is further configured to determine the precoding matrix based on the indication information that is of the K coefficients and that is included in the first information.

With reference to the third aspect or the fourth aspect, in a possible implementation, the priorities of the M coefficients are further determined based on one or more of the following: a transmission layer sequence number, a spatial domain basis vector sequence number, a reference signal port sequence number, and a frequency domain basis vector sequence number.

With reference to the third aspect or the fourth aspect, in a possible implementation, a priority of a coefficient associated with a spatial domain basis vector or a reference signal port that corresponds to any one of the N reference signal resources is determined according to any one or more items of the following first preset rule:

if a priority of an $n_1^{th}$ reference signal resource in the N reference signal resources is higher than a priority of an $n_2^{th}$ reference signal resource in the N reference signal resources, a priority of a coefficient associated with any spatial domain basis vector corresponding to the $n_1^{th}$ reference signal resource is higher than a priority of a coefficient associated with any spatial domain basis vector corresponding to the $n_2^{th}$ reference signal resource; a priority of a coefficient associated with any reference signal port corresponding to the $n_1^{th}$ reference signal resource is higher than a priority of a coefficient associated with any reference signal port corresponding to the $n_2^{th}$ reference signal resource; or

if a priority of an $n_1^{th}$ reference signal resource in the N reference signal resources is higher than a priority of an $n_2^{th}$ reference signal resource in the N reference signal resources, a priority of a coefficient associated with an $i^{th}$ spatial domain basis vector corresponding to the $n_1^{th}$ reference signal resource is higher than a priority of a coefficient associated with an $i^{th}$ spatial domain basis vector that is with an identical sequence number and that corresponds to the $n_2^{th}$ reference signal resource; or a priority of a coefficient associated with an $i^{th}$ reference signal port corresponding to the $n_1^{th}$ reference signal resource is higher than a priority of a coefficient associated with an $i^{th}$ reference signal port that is with an identical sequence number and that corresponds to the $n_2^{th}$ reference signal resource, where $i$ represents the sequence number of the spatial domain basis vector or the reference signal port.

With reference to the third aspect or the fourth aspect, in a possible implementation, the priorities of the M coefficients satisfy:

$$\text{Pri}(l, i, f, n) = 2L_{max} \cdot X \cdot v \cdot \pi(f) + v \cdot \varphi(i, n) + l,$$

where $l$ represents the transmission layer sequence number, and $l$ is set to 1, 2, ... , $v$; $v$ represents a quantity of transmission layers; $i$ represents the spatial domain basis vector sequence number, and $i$ is set to 0,1, ... , $2L_n$ - 1; $L_n$ represents a quantity of spatial domain basis vectors corresponding to an $n^{th}$ reference signal resource; $f$ represents the frequency domain basis vector sequence number, and $f$ is set to 0, 1, ..., $M_v$ - 1; $M_v$ represents a quantity of frequency domain basis vectors; $n$ represents sequence numbers of the N reference signal resources; $\varphi(i, n)$ represents a priority of a coefficient set associated with an $i^{th}$ spatial domain basis vector corresponding to the $n^{th}$ reference signal resource, and satisfies $\varphi(i, n) < 2L_{max} \cdot X$; $X$ is an integer greater than or equal to $N$; $L_{max}$ is greater than or equal to a maximum value of quantities of spatial domain basis vectors respectively corresponding to the N reference signal resources; $\pi(f)$ represents a first remapping function, which is used to remap a sequence number or an index of a frequency domain basis vector selected for the $l^{th}$ transmission layer and the $n^{th}$ reference signal resource; and Pri($l$, $i$, $f$, $n$) represents a priority of a coefficient corresponding to a given combination of the $l^{th}$ transmission layer, the $n^{th}$ reference signal resource, the $i^{th}$ spatial domain basis vector, and the $f^{th}$ frequency domain basis vector.

With reference to the third aspect or the fourth aspect, in a possible implementation, $\varphi(i, n)$ satisfies any one of the following formulas:

$$\varphi(i, n) = 2L_{max} \cdot G(n) + i,$$

where $G(n)$ represents a priority ranking of the $n^{th}$ reference signal resource in the N reference signal resources; $L_{max}$ is greater than or equal to the maximum value of the quantities of spatial domain basis vectors respectively corresponding to the N reference signal resources; $i$ represents the spatial domain basis vector sequence number, and $i$ is set to 0, 1, ..., $2L_n$ - 1; and $L_n$ represents the quantity of spatial domain basis vectors corresponding to the $n^{th}$ reference signal resource;

$$\varphi(i, n) = N \cdot \phi_n(i) + G(n),$$

where $G(n)$ represents a priority ranking of the $n^{th}$ reference signal resource in the N reference signal resources; $i$ represents the spatial domain basis vector sequence number, and $i$ is set to 0, 1, ..., $2L_n$ - 1; $L_n$ represents the quantity of spatial domain basis vectors corresponding to the $n^{th}$ reference signal resource; and $\Phi_n(i) = i$ or $\phi_n(i) = i + 2L_{max} - 2L_n$, where $\Phi_n(i)$ represents a second remapping function, which is used to remap the spatial domain basis vector sequence number; or

$$\varphi(i, n) = N \cdot a_{max} \cdot \left\lfloor \frac{i}{a_n} \right\rfloor + G(n) \cdot a_{max} + i \mod a_n,$$

where $a_n$ is a positive integer greater than or equal to 1 and is in direct proportion to a value of $L_n$, and a greatest common divisor of all $a_n$ is 1; $i$ represents the spatial domain basis vector sequence number, and $i$ is set to 0, 1, ..., $2L_n$ - 1; $L_n$ represents the quantity of spatial domain basis vectors corresponding to the $n^{th}$ reference signal resource; and $a_{max}$ is a maximum value of all $a_n$.

With reference to the third aspect or the fourth aspect, in a possible implementation, if a priority of an $n_1^{th}$ reference signal resource in the N reference signal resources is higher than a priority of an $n_2^{th}$ reference signal resource in the N reference signal resources, a priority of any coefficient associated with the $n_1^{th}$ reference signal resource is higher than a priority of any coefficient associated with the $n_2^{th}$ reference signal resource.

With reference to the third aspect or the fourth aspect, in a possible implementation, the priorities of the M coefficients satisfy:

$$\text{Pri}(l, i, f, n) = 2L_{max} \cdot v \cdot Y \cdot G(n) + 2L_{max} \cdot v \cdot \pi(f) + v \cdot i + l,$$

where $l$ represents the transmission layer sequence number, and $l$ is set to 1, 2, ..., $v$; $v$ represents a quantity of transmission layers; $i$ represents the spatial domain basis vector sequence number, and $i$ is set to 0,1, ... , $2L_n$ - 1; $L_n$ represents a quantity of spatial domain basis vectors corresponding to an $n^{th}$ reference signal resource; $f$ represents the frequency domain basis vector sequence number, and $f$ is set to 0, 1, ... , $M_v$ - 1; $M_v$ represents a quantity of frequency domain basis vectors; $n$ represents sequence numbers of the N reference signal resources; $G(n)$ represents a priority ranking of the $n^{th}$ reference signal resource in the N reference signal resources; $L_{max}$ is greater than or equal to a maximum value of quantities of spatial domain basis vectors respectively corresponding to the N reference signal resources; $Y$ is an integer greater than or equal to $M_v$, or $Y$ is an integer greater than or equal to $N_3$; $N_3$ is a quantity of subbands or a quantity of frequency domain units; $\pi(f)$ represents a first remapping function, which is used to remap a sequence number or an index of a frequency domain basis vector selected for the $l$th transmission layer and the $n$th reference signal resource; and Pri($l$, $i$, $f$, $n$) represents a priority of a coefficient corresponding to a given combination of the $l$th transmission layer, the $n$th reference signal resource, the $i$th spatial domain basis vector, and the $f$th frequency domain basis vector.

With reference to the third aspect or the fourth aspect, in a possible implementation, $\pi(f)$ satisfies any one of the following formulas:

$$\pi(f) = f,$$

$$\pi(f) = \min\left(2 \cdot k_{3,l,n}^{(f)}, 2 \cdot \left(N_3 - k_{3,l,n}^{(f)}\right) - 1\right), \quad \text{where} \quad k_{3,l,n}^{(f)} = \left(k_{3,l,n}^{(f)} - k_{3,l,n^*}^{(f_l^*)}\right) \bmod N_3 \; ; \quad k_{3,l,n}^{(f)}$$

represents an index, in a frequency domain basis vector universal set, of the $f$th frequency domain basis vector of the $n$th reference signal resource corresponding to the $l$th transmission layer; $k_{3,l,n^*}^{(f_l^*)}$ represents an original index of a frequency domain basis vector corresponding to a strongest coefficient in the N reference signal resources corresponding to the $l$th transmission layer; $f_l^*$ represents a sequence number of the frequency domain basis vector corresponding to the strongest coefficient of the $l$th transmission layer; and $n^*$ represents a reference signal resource sequence number corresponding to the strongest coefficient of the $l$th transmission layer; or

$$\pi(f) = \min\left(2 \cdot k_{3,l,n}^{(f)}, 2 \cdot \left(N_3 - k_{3,l,n}^{(f)}\right) - 1\right), \quad \text{where} \quad k_{3,l,n}^{(f)} = \left(k_{3,l,n}^{(f)} - k_{3,l,n}^{(f_{l,n}^*)}\right) \bmod N_3 \; ; \quad k_{3,l,n}^{(f)}$$

represents an index, in a frequency domain basis vector universal set, of the $f$th frequency domain basis vector of the $n$th reference signal resource corresponding to the $l$th transmission layer; $k_{3,l,n}^{(f_{l,n}^*)}$ represents an original index of a frequency domain basis vector corresponding to a strongest coefficient of the $n$th reference signal resource corresponding to the $l$th transmission layer; and $f_{l,n}^*$ represents a sequence number of the frequency domain basis vector corresponding to the strongest coefficient of the $n$th reference signal resource corresponding to the $l$th transmission layer.

With reference to the third aspect or the fourth aspect, in a possible implementation, the priorities of the M coefficients satisfy:

$$\mathrm{Pri}(l, i, f, n) = K_{1,max} \cdot v \cdot Y \cdot G(n) + K_{1,max} \cdot v \cdot f + v \cdot i + l,$$

where $l$ represents the transmission layer sequence number, and $l$ is set to 1, 2, ..., $v$; $v$ represents a quantity of transmission layers; $i$ represents the reference signal port sequence number, and $i$ is set to 0, 1, ... , $K_{1,n}$ - 1; $K_{1,n}$ represents a quantity of selected reference signal ports corresponding to an $n$th reference signal resource; $f$ represents the frequency domain basis vector sequence number, and $f$ is set to 0, 1, ... , $M_v$ - 1; $M_v$ represents a quantity of frequency domain basis vectors; $n$ represents sequence numbers of the N reference signal resources; $G(n)$ represents a priority ranking of the $n$th reference signal resource in the N reference signal resources; $K_{1,max}$ is greater than or equal to a maximum value of a quantity of selected reference signal ports corresponding to each of the N reference signal resources; $Y$ is an integer greater than or equal to $M_v$; and Pri($l$, $i$, $f$, $n$) represents a priority of a coefficient corresponding to a given combination of the $l$th transmission layer, the $n$th reference signal resource, the $i$th reference signal port, and the $f$th frequency domain basis vector.

With reference to the third aspect or the fourth aspect, in a possible implementation, the priorities of the M coefficients satisfy:

$$\mathrm{Pri}(l, i, f, n) = K_{1,max} \cdot v \cdot X \cdot f + v \cdot \varphi(i, n) + l,$$

where $l$ represents the transmission layer sequence number, and $l$ is set to 1, 2, ..., $v$; $v$ represents a quantity of transmission layers; $i$ represents the reference signal port sequence number, and $i$ is set to 0, 1, ..., $K_{1,n}$ - 1; $K_{1,n}$ represents a quantity of selected reference signal ports corresponding to an $n$th reference signal resource; $f$ represents the frequency domain basis vector sequence number, and $f$ is set to 0, 1, ... , $M_v$ - 1; $M_v$ represents a quantity of frequency domain basis vectors; $X$ is an integer greater than or equal to $N$; $n$ represents sequence numbers of the N reference signal resources; $\varphi(i, n)$ represents a priority of a coefficient set associated with an $i^{th}$ reference signal port corresponding to the $n^{th}$ reference signal resource, and satisfies $\varphi(i, n) < 2L_{max} \cdot X$; $K_{1,max}$ is greater than or equal to a maximum value of a quantity of selected reference signal ports corresponding to each of the N reference signal resources; and Pri($l$, $i$, $f$, $n$) represents a priority of a coefficient corresponding to a given combination of the $l^{th}$ transmission layer, the $n^{th}$ reference signal resource, the $i^{th}$ reference signal port, and the $f^{th}$ frequency domain basis vector.

With reference to the third aspect or the fourth aspect, in a possible implementation, $\varphi(i, n)$ satisfies any one of the following formulas:

$$\varphi(i, n) = K_{1,max} \cdot G(n) + i, \text{ where } G(n)$$

represents a priority ranking of the $n^{th}$ reference signal resource in the N reference signal resources; $K_{1,max}$ is greater than or equal to the maximum value of the quantities of selected reference signal ports respectively corresponding to the N reference signal resources; $i$ represents the reference signal port sequence number, and $i$ is set to 0, 1, ... , $K_{1,n}$ - 1; and $K_{1,n}$ represents the quantity of selected reference signal ports corresponding to the $n^{th}$ reference signal resource;

$$\varphi(i, n) = N \cdot i + G(n), \text{ where } G(n)$$

represents a priority ranking of the $n^{th}$ reference signal resource in the N reference signal resources; $i$ represents the reference signal port sequence number, and $i$ is set to 0, 1, ... , $K_{1,n}$ - 1; and $K_{1,n}$ represents the quantity of selected reference signal ports corresponding to the $n^{th}$ reference signal resource;

$$\varphi(i, n) = N \cdot \phi_n(i) + G(n), \text{ where } G(n)$$

represents a priority ranking of the $n^{th}$ reference signal resource in the N reference signal resources; $i$ represents the reference signal port sequence number, and $i$ is set to 0, 1, ... , $K_{1,n}$ - 1; $K_{1,n}$ represents the quantity of selected reference signal ports corresponding to the $n^{th}$ reference signal resource; and $\Phi_n(i) = i$ or $\Phi_n(i) = i + K_{1,max} - K_{1,n}$, where $\Phi_n(i)$ represents a third remapping function, used to remap the reference signal port sequence number; or

$$\varphi(i, n) = N \cdot a_{max} \cdot \left\lfloor \frac{i}{a_n} \right\rfloor + G(n) \cdot a_{max} + i \bmod a_n,$$

where $a_n$ is a positive integer greater than or equal to 1 and is in direct proportion to a value of $K_{1,n}$, and a greatest common divisor of all $a_n$ is 1; $i$ represents the reference signal port sequence number, and $i$ is set to 0, 1, ... , $K_{1,n}$ - 1; $K_{1,n}$ represents the quantity of selected reference signal ports corresponding to the $n^{th}$ reference signal resource; and $a_{max}$ is a maximum value of all $a_n$.

With reference to the third aspect or the fourth aspect, in a possible implementation, a smaller value of Pri($l$, $i$, $f$, $n$) indicates a higher priority of a coefficient corresponding to a given sequence number combination of the $l^{th}$ transmission layer, the $n^{th}$ reference signal resource, the $i^{th}$ spatial domain basis vector or reference signal port, and the $f^{th}$ frequency domain basis vector.

With reference to the third aspect or the fourth aspect, in a possible implementation, the priorities of the N reference signal resources are determined according to any one or more items of the following second preset rule:

a larger quantity of spatial domain basis vectors corresponding to the reference signal resource or a larger quantity of reference signal ports selected for the reference signal resource indicates a higher priority of the reference signal resource;

a larger amplitude of a strongest coefficient corresponding to the reference signal resource indicates a higher priority of the reference signal resource;

a higher signal strength of a reference signal corresponding to the reference signal resource indicates a higher priority of the reference signal resource; or

a smaller sequence number of the reference signal resource indicates a higher priority of the reference signal resource.

With reference to the third aspect or the fourth aspect, in a possible implementation, a smaller value of $G(n)$ indicates a higher priority of the $n^{th}$ reference signal resource.

With reference to the third aspect or the fourth aspect, in a possible implementation, indication information of the coefficient includes one or more of amplitude indication information of the coefficient, phase indication information of the coefficient, and position indication information of the coefficient.

With reference to the third aspect or the fourth aspect, in a possible implementation, a smaller value of $\varphi(i, n)$ indicates a higher priority of the coefficient set associated with the $i^{th}$ spatial domain basis vector or reference signal port that corresponds to the $n^{th}$ reference signal resource.

With reference to the third aspect or the fourth aspect, in a possible implementation, when the preset condition is satisfied, the priorities of the M coefficients are determined based on a function that is in a preset function and that corresponds to the preset condition, and the preset function includes one or more of the following functions:

$$\mathrm{Pri}(l, i, f, n) = 2L_{max} \cdot X \cdot v \cdot \pi(f) + v \cdot \varphi(i, n) + l;$$

$$\mathrm{Pri}(l, i, f, n) = K_{1,max} \cdot v \cdot X \cdot f + v \cdot \varphi(i, n) + l;$$

$$\mathrm{Pri}(l, i, f, n) = 2L_{max} \cdot v \cdot Y \cdot G(n) + 2L_{max} \cdot v \cdot \pi(f) + v \cdot i + l; \text{ or}$$

$$\mathrm{Pri}(l, i, f, n) = K_{1,max} \cdot v \cdot Y \cdot G(n) + K_{1,max} \cdot v \cdot f + v \cdot i + l.$$

According to a fifth aspect, this application provides a communication apparatus. The communication apparatus may include a processor, a transceiver, and a memory. The memory is configured to store a computer program. The transceiver is configured to send and receive various messages. The computer program includes program instructions. When the processor runs the program instructions, the communication apparatus is enabled to perform the method according to any one of the first aspect, the second aspect, or the possible implementations of the first aspect or the second aspect. The transceiver may be a radio frequency module, a combination of a radio frequency module and an antenna, or an input/output interface of a chip or a circuit in the communication apparatus.

According to a sixth aspect, this application provides a readable storage medium. The readable storage medium stores program instructions. When the program instructions are run on a computer, the computer is enabled to perform the method according to any one of the first aspect, the second aspect, or the possible implementations of the first aspect or the second aspect.

According to a seventh aspect, this application provides a program product including program instructions. When the program product runs, the method according to any one of the first aspect, the second aspect, or the possible implementations of the first aspect or the second aspect is performed.

According to an eighth aspect, this application provides an apparatus. The apparatus may be implemented in a form of a chip, or may be implemented in a form of a device. The apparatus includes a processor. The processor is configured to read and execute a program stored in a memory, to perform the channel state information reporting method according to any one or more of the first aspect, the second aspect, or the possible implementations of the first aspect or the second aspect. Optionally, the apparatus further includes the memory, and the memory is connected to the processor through a circuit. Further, optionally, the apparatus further includes a communication interface, and the processor is connected to the communication interface. The communication interface is configured to receive a to-be-processed data packet and/or to-be-processed information. The processor obtains the data packet and/or the information from the communication interface, processes the data packet and/or the information, and outputs a processing result through the communication interface. The communication interface may be an input/output interface.

Optionally, the processor and the memory may be physically mutually independent units, or the memory may be integrated with the processor.

According to a ninth aspect, this application provides a wireless communication system. The wireless communication system includes a terminal device and a network device, the terminal device is configured to perform the method according to any one of the first aspect or the possible implementations of the first aspect, and the network device is configured to perform the method according to any one of the second aspect or the possible implementations of the second aspect.

For technical effect achieved in the foregoing aspects, refer to each other or refer to beneficial effect in the following method embodiments. Details are not described herein again.

## BRIEF DESCRIPTION OF DRAWINGS

To describe the technical solutions in embodiments of this application or in the background more clearly, the following briefly describes the accompanying drawings for describing embodiments of this application or the background.

FIG. 1a is a diagram of an architecture of a communication system according to an embodiment of this application;
FIG. 1b is a diagram of another architecture of a communication system according to an embodiment of this application;

FIG. 2 is a simplified diagram of structures of a UE and a base station according to an embodiment of this application;

FIG. 3a is a schematic flowchart in which a base station obtains CSI of a downlink channel;

FIG. 3b is a diagram of a precoding matrix of a channel according to an embodiment of this application;

FIG. 4 is a schematic flowchart of a channel state information reporting method according to an embodiment of this application;

FIG. 5 is a diagram of frequency domain basis vector cyclic shift according to an embodiment of this application;

FIG. 6 is a diagram of a priority definition in which a spatial domain and a reference signal resource are combined according to an embodiment of this application;

FIG. 7 is a diagram of a structure of a communication apparatus according to an embodiment of this application;

FIG. 8 is a diagram of a structure of another communication apparatus according to an embodiment of this application;

FIG. 9 is a diagram of a structure of another communication apparatus according to an embodiment of this application; and

FIG. 10 is a diagram of a structure of still another communication apparatus according to an embodiment of this application.

## DESCRIPTION OF EMBODIMENTS

The following clearly and completely describes the technical solutions in embodiments of this application with reference to the accompanying drawings in embodiments of this application.

In descriptions of this application, the terms "first", "second", and the like are merely intended to distinguish between different objects, but do not limit a quantity or an execution sequence, and the terms "first", "second", and the like do not indicate a definite difference. For example, a first remapping function, a second remapping function, and the like are merely intended to distinguish between different information, and a sequence thereof is not limited. In addition, terms "include", "have", and any other variants thereof are intended to cover a non-exclusive inclusion. For example, processes, methods, systems, products, or devices that include a series of steps or units are not limited to listed steps or units, and optionally further include steps or units that are not listed, or optionally further include other steps or units inherent to these processes, methods, products, or devices.

In descriptions of this application, unless otherwise specified, "/" indicates "or". For example, A/B may indicate A or B. A term "and/or" in this specification describes only an association relationship between associated objects and indicates that there may be three relationships. For example, A and/or B may represent the following three cases: Only A exists, both A and B exist, and only B exists. In addition, "at least one piece (item)", "one or more of the following items (pieces)", or a similar expression thereof refers to any combination of these items, including a single item (piece) or any combination of a plurality of items (pieces). For example, at least one item (piece) of a, b, or c may represent a; b; c; a and b; a and c; b and c; or a, b, and c. Each of a, b, and c may be in a singular form or a plural form.

In descriptions of this application, the word such as "example" or "for example" represents giving an example, an illustration, or a description. Any embodiment or design scheme described as "example", "such as" or "for example" in this application should not be explained as being more preferred or having more advantages than another embodiment or design scheme. Exactly, use of the word "example", "such as", "for example", or the like is intended to present a related concept in a specific manner.

It may be understood that, in descriptions of this application, "when", "if", and "assuming" all mean that an apparatus performs corresponding processing in an objective case, and are not intended to limit time, and do not mean that the apparatus needs to have a determining action during implementation, and do not mean any other limitation.

"Simultaneously" in this application may be understood as being at a same time point, may be understood as being in a period of time, or may be understood as being in a same periodicity, and may be specifically understood with reference to a context.

In this application, an element represented in a singular form is intended to represent "one or more", but does not represent "one and only one", unless otherwise specified.

In addition, the terms "system" and "network" may be used interchangeably in this specification.

It may be understood that, in embodiments of this application, "B corresponding to A" indicates that B is associated with A, and B may be determined based on A. However, it should be further understood that determining B based on A does not mean that B is determined based only on A. B may alternatively be determined based on A and/or other information.

It may be understood that, in embodiments of this application, "indication" may include a direct indication and an indirect indication, or may include an explicit indication and an implicit indication. When "a piece of indication information indicates A" or "indication information of A" is described, the indication information may directly indicate A or indirectly indicate A, but it does not indicate that the indication information definitely carries A. Information indicated by a piece of information (for example, indication information of a coefficient in the following descriptions) is referred to as to-be-indicated information. In a specific implementation process, the to-be-indicated information is indicated in a plurality of manners, for example, but not limited to, directly indicating the to-be-indicated information, for example, indicating the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using a pre-agreed (for example, protocol-stipulated) arrangement sequence of a plurality of pieces of information, to reduce indication overheads to some extent. In addition, a common part of various pieces of information may be further identified and indicated in a unified manner, to reduce indication overheads caused by separately indicating same information. Furthermore, specific indication manners may alternatively be various existing indication manners, for example, but not limited to, the foregoing indication manners and various combinations thereof. For details of the various indication manners, refer to the conventional technology. Details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit-end device by sending configuration information to a receive-end device. For example, the configuration information may include, but is not limited to, one or a combination of at least two of radio resource control signaling, MAC layer signaling, and physical layer signaling.

The technical solutions in embodiments of this application may be applied to various communication systems such as a long term evolution (long term evolution, LTE) system, a worldwide interoperability for microwave access (worldwide interoperability for microwave access, WiMAX) communication system, a 5th generation (5th generation, 5G) system, for example, a new generation radio access technology (new radio, NR) system, a network that integrates a plurality of systems, an internet of things system, a vehicle-to-everything system, and a future communication system such as a 6G system.

It should be understood that the network architecture described in embodiments of this application is intended to describe the technical solutions in embodiments of this application more clearly, and does not constitute a limitation on the technical solutions provided in embodiments of this application. A person of ordinary skill in the art may know that, as the network architecture evolves, the technical solutions provided in embodiments of this application are also applicable to a similar technical problem.

In embodiments of this application, an NR network scenario in a wireless communication network is used as an example to describe some scenarios. It should be noted that the solutions in embodiments of this application may further be applied to another wireless communication network, and a corresponding name may also be replaced with a name of a corresponding function in the another wireless communication network.

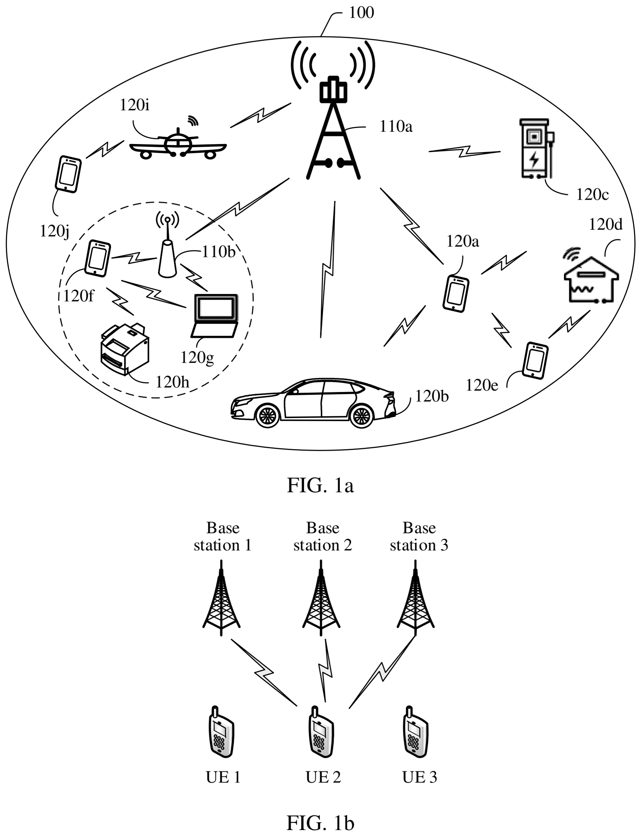

FIG. 1a is a diagram of an architecture of a communication system according to an embodiment of this application. As shown in FIG. 1a, the communication system includes a radio access network 100. The radio access network 100 may include at least one radio access network device (for example, 110a and 110b in FIG. 1a), and may further include at least one terminal device (for example, 120a to 120j in FIG. 1a). The terminal device may be connected to the radio access network device in a wireless manner. Terminal devices may be connected to each other in a wired or wireless manner, and radio access network devices may be connected to each other in a wired or wireless manner.

The radio access network device may be referred to as a network device for short, and is an access device that is used by the terminal to wirelessly access the communication system. The radio access network device may be a base station (base station, BS), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a wireless fidelity (wireless fidelity, Wi-Fi) system, or the like. The radio access network device may alternatively be a module or unit that completes some functions of a base station, for example, may be a central unit (central unit, CU), or may be a distributed unit (distributed unit, DU). A base station including a CU and a DU may also be referred to as a base station in which a CU and a DU are separated. For example, the base station includes a gNB-CU and a gNB-DU. The CU may be further separated into a CU control plane (CU control plane, CU-CP) and a CU user plane (CU user plane, CU-CP). For example, the base station includes a gNB-CU-CP, a gNB-CU-UP, and a gNB-DU. The CU herein may complete functions of a radio resource control protocol and a packet data convergence protocol (packet data convergence protocol, PDCP) of the base station, and may further complete a function of a service data adaptation protocol (service data adaptation protocol, SDAP). The DU may complete functions of a radio link control layer and a medium access control (medium access control, MAC) layer of the base station, and may further complete some or all of functions of a physical layer. For specific descriptions of the foregoing protocol layers, refer to 3rd generation partnership project (3rd generation partnership project, 3GPP)-related technical specifications. The radio access network device may be a macro base station (for example, 110a in FIG. 1a), may be a micro base station or an indoor base station (for example, 110b in FIG. 1a), or may be a relay node, a donor node, or the like. A specific technology and a specific device form that are used for the radio access network device are not limited in embodiments of this application. For ease of description, the following uses an example in which a base station is used as a radio access network device for description. It may be understood that in embodiments of this application, one base station may correspond to one TRP, or one TRP may also be referred to as one base station.

In embodiments of this application, an apparatus configured to implement a function of the network device may be a network device, or may be an apparatus that can support the network device in implementing a function, for example, a chip system, a communication module, or a modem. The apparatus may be installed in the network device. In the technical solutions provided in embodiments of this application, the technical solutions provided in embodiments of this application are described by using an example in which an apparatus configured to implement the function of the network device is a network device, and the network device is a base station. The base station may support networks using a same access technology or different access technologies. A specific technology and a specific device form that are used for the network device are not limited in embodiments of this application.

The terminal device is a device having a wireless transceiver function, and may send a signal to the base station, or receive a signal from the base station. The terminal device may also be referred to as a terminal, a user equipment (user equipment, UE), a mobile station, a mobile terminal, or the like. The terminal device may be widely used in various scenarios, for example, device-to-device (device-to-device, D2D), vehicle to everything (vehicle to everything, V2X) communication, machine-type communication (machine-type communication, MTC), an internet of things (internet of things, IoT), virtual reality, augmented reality, industrial control, self-driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used for the terminal are not limited in embodiments of this application.

The base station and the terminal may be at fixed positions or movable. The base station and the terminal may be deployed on land, where the deployment includes indoor or outdoor, or handheld or vehicle-mounted deployment; may be deployed on water; or may be deployed on an airplane, a balloon, and a satellite. Application scenarios of the base station and the terminal are not limited in embodiments of this application.

Roles of the base station and the terminal may be relative. For example, the helicopter or uncrewed aerial vehicle 120i in FIG. 1a may be configured as a mobile base station. For those terminals 120j accessing the radio access network 100 through 120i, the terminal 120i is a base station. However, for the base station 110a, 120i is a terminal. In other words, communication between 110a and 120i is performed according to a radio air interface protocol. Certainly, communication between 110a and 120i may alternatively be performed according to an interface protocol between base stations. In this case, for 110a, 120i is also a base station. Therefore, both the base station and the terminal may be collectively referred to as communication apparatuses, 110a and 110b in FIG. 1a may be referred to as communication apparatuses having a base station function, and 120a to 120j in FIG. 1a may be referred to as communication apparatuses having a terminal function.

Communication between the base station and the terminal, between base stations, or between terminals may be performed by using a licensed spectrum, may be performed by using an unlicensed spectrum, or may be performed by using both a licensed spectrum and an unlicensed spectrum. Communication may be performed by using a spectrum below 6 gigahertz (gigahertz, GHz), may be performed by using a spectrum above 6 GHz, or may be performed by using both a spectrum below 6 GHz and a spectrum above 6 GHz.

In embodiments of this application, an apparatus configured to implement a function of the terminal may be a terminal, or may be an apparatus that can support the terminal in implementing the function, for example, a chip system, a communication module, or a modem. The apparatus may be installed in the terminal. In embodiments of this application, the chip system may include a chip, or may include a chip and another discrete component. In the technical solutions provided in embodiments of this application, the technical solutions provided in embodiments of this application are described by using an example in which an apparatus configured to implement the function of the terminal is a terminal, and the terminal is a UE. A specific technology and a specific device form that are used for the terminal device are not limited in embodiments of this application.

In some scenarios, the UE may alternatively be configured as a base station. For example, the UE may serve as a scheduling entity that provides a sidelink signal between UEs in vehicle-to-everything (vehicle-to-everything, V2X), device-to-device (device-to-device, D2D), peer-to-peer (peer-to-peer, P2P), or the like.

In some scenarios, the UE may alternatively be configured as a relay node. For example, the UE may serve as a relay device (relay) or an integrated access and backhaul (integrated access and backhaul, IAB) node, and is configured to provide a wireless backhaul service for a terminal device.

FIG. 1b is a diagram of another architecture of a communication system according to an embodiment of this application. A plurality of base stations (for example, a base station 1, a base station 2, and a base station 3) and a plurality of UEs (for example, a UE 1, a UE 2, and a UE 3) form one communication system. The plurality of base stations (for example, the base station 1, the base station 2, and the base station 3) may simultaneously serve one UE (for example, the UE 2). The UE may be connected to the base station in a wireless manner. UEs may be connected to each other in a wired or wireless manner, and base stations may be connected to each other in a wired or wireless manner.

Optionally, in FIG. 1a and FIG. 1b, one or more antennas may be configured for the terminal device, for sending and receiving data/information. Similarly, one or more antennas may also be configured for the network device, for sending and receiving data/information. It may be understood that the network device and the terminal device may further include a plurality of components (for example, a processor, a modulator, a multiplexer, a demodulator, or a demultiplexer) related to data/information sending and receiving. It may be further understood that FIG. 1a and FIG. 1b are merely diagrams. The communication system may further include another device, for example, may further include a core network device, a wireless relay device, and/or a wireless backhaul device, which are not shown in FIG. 1a and FIG. 1b. It may be further understood that FIG. 1a and FIG. 1b are merely examples, and quantities of network devices and terminal devices included in the communication system are not limited in embodiments of this application.

In embodiments of this application, the term "wireless communication" may be referred to as "communication" for short, and the term "communication" may alternatively be described as "data transmission", "information transmission", or "transmission".

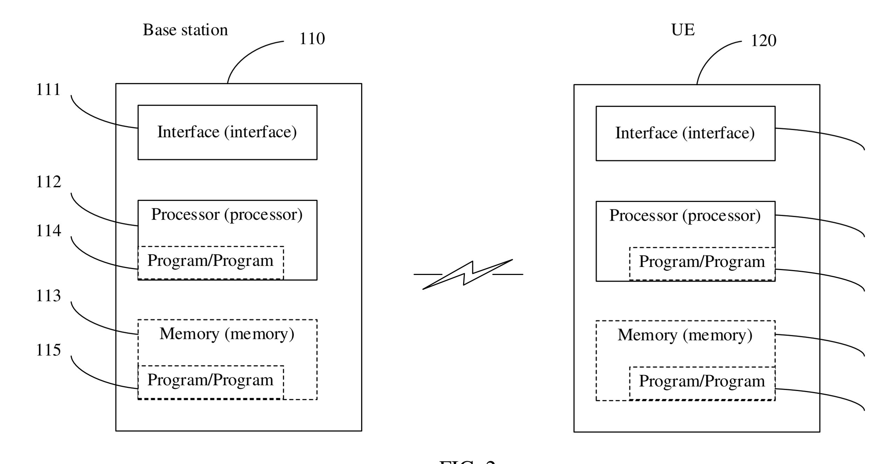

FIG. 2 is a simplified diagram of structures of a UE and a base station according to an embodiment of this application. For simplicity, FIG. 2 shows only main components of a base station 110 and a UE 120. In an actual application, structures of the base station and the UE may have components greater than or less than the components shown in FIG. 2, or may include only the components shown in FIG. 2. It should be understood that the base station shown in FIG. 2 may use an architecture in which a CU and a DU are separated, or may use an architecture in which a CU and a DU are not separated. The following briefly describes each component in FIG. 2.

The base station 110 includes an interface 111 and a processor 112. The processor 112 may optionally store a program 114. The base station 110 may optionally include a memory 113. The memory 113 may optionally store a program 115. The UE 120 includes an interface 121 and a processor 122. The processor 122 may optionally store a program 124. The UE 120 may optionally include a memory 123. The memory 123 may optionally store a program 125. These components operate together to provide various functions described in this application. For example, the processor 112 and the interface 111 operate together to provide a wireless connection between the base station 110 and the UE 120. The processor 122 and the interface 121 operate together to implement downlink transmission and/or uplink transmission of the UE 120.

A processor (for example, the processor 112 and/or the processor 122) may include one or more processors and is implemented as a combination of computing devices. The processor (for example, the processor 112 and/or the processor 122) may include one or more of the following: a microprocessor, a microcontroller, a digital signal processor (digital signal processor, DSP), a digital signal processing device (DSP device, DSPD), an application-specific integrated circuit (application-specific integrated circuit, ASIC), a field programmable gate array (field programmable gate array, FPGA), a programmable logic device (programmable logic device, PLD), gating logic, transistor logic, a discrete hardware circuit, a processing circuit or other appropriate hardware, firmware, and/or a combination of hardware and software, to perform various functions described in this application. The processor (for example, the processor 112 and/or the processor 122) may be a general-purpose processor or a dedicated processor. For example, the processor 112 and/or the processor 122 may be a baseband processor or a central processing unit. The baseband processor may be configured to process a communication protocol and communication data. The central processing unit may be configured to enable the base station 110 and/or the UE 120 to execute a software program and process data in the software program.

An interface (for example, the interface 111 and/or the interface 121) may be configured to implement communication with one or more computer devices (for example, UEs, BSs, and/or network nodes). In some embodiments, the interface may include a wire for coupling a wired connection, or a pin for coupling a wireless transceiver, or a chip and/or a pin for a wireless connection. In some embodiments, the interface may include a transmitter, a receiver, a transceiver, and/or an antenna. The interface may be configured to use any available protocol (for example, a 3GPP standard).

The program in this application represents software in a broad sense. A non-limiting example of the software is program code, a program, a subprogram, an instruction, an instruction set, code, a code segment, a software module, an application program, or a software application program. The program may run in a processor and/or a computer, so that the base station 110 and/or the UE 120 perform various functions and/or processes described in this application.

A memory (for example, the memory 113 and/or the memory 123) may store data manipulated by the processors 112 and 122 during execution of the software. The memories 113 and 123 may be implemented by using any storage technology. For example, the memory may be any available storage medium that can be accessed by a processor and/or a computer. A non-limiting example of the storage medium includes a RAM, a ROM, an EEPROM, a CD-ROM, a removable medium, an optical disc memory, a magnetic disk storage medium, a magnetic storage device, a flash memory, a register, a state memory, a remote mounted memory, a local or remote storage component, or any other medium that can carry or store software, data, or information and that can be accessed by a processor/computer.

The memory (for example, the memory 113 and/or the memory 123) and the processor (for example, the processor 112 and/or the processor 122) may be separately disposed or integrated together. The memory may be configured to be connected to the processor, so that the processor can read information from the memory, and store information in and/or write information into the memory. The memory 113 may be integrated into the processor 112. The memory 123 may be integrated into the processor 122. The processor (for example, the processor 112 and/or the processor 122) and the memory (for example, the memory 113 and/or the memory 123) may be disposed in an integrated circuit (for example, the integrated circuit may be disposed in a UE, a base station, or another network node).

Optionally, the components in the base station 110 and the UE 120 may alternatively exist in a form of various exchange modules, for example, a radio resource control (radio resource control, RRC) signaling exchange module, to be specific, a module used by the base station 110 and the UE 120 to send and receive RRC signaling; a MAC signaling exchange module, to be specific, a module used by the base station 110 and the UE 120 to send and receive medium access control-control element (medium access control-control element, MAC-CE) signaling; and a PHY signaling and data exchange module, to be specific, a module used by the base station 110 and the UE 120 to send and receive uplink/downlink control signaling and uplink/downlink data.

A communication system architecture to which embodiments of this application can be applied is described in the foregoing content. To better understand the technical solutions in embodiments of this application, the following briefly describes several terms or nouns related to this application, to help a person skilled in the art have a better understanding.

1. Downlink channel CSI measurement

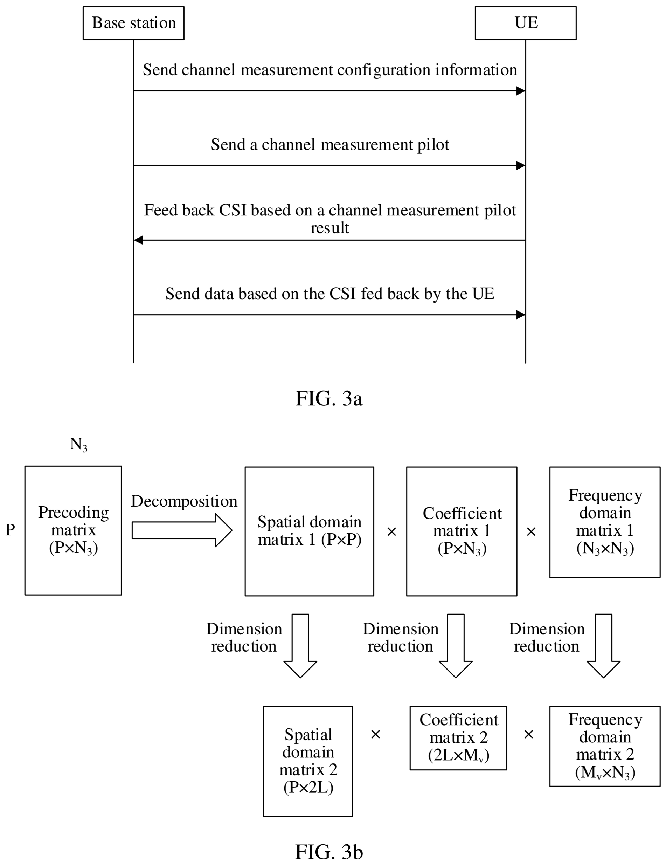

In an FDD system, a UE needs to report CSI of a downlink channel to a base station. A basic procedure is shown in FIG. 3a. FIG. 3a is a schematic flowchart in which a base station obtains CSI of a downlink channel. First, the base station needs to send channel measurement configuration information to a UE, so as to configure a channel measurement related parameter (or related information) for the UE, for example, a resource used for channel measurement, channel measurement time, and a channel measurement behavior. Then, the base station sends a channel measurement pilot (namely, a reference signal) to the UE, for the UE to perform channel measurement. The UE measures the received channel measurement pilot, and determines CSI that finally needs to be reported. Finally, the UE reports the CSI to the base station, and the base station determines precoding information of downlink data based on the CSI reported by the UE, so as to perform precoding on the downlink data and then send the downlink data.

It may be understood that some information of an uplink channel and a downlink channel in the FDD system has reciprocity, for example, angle reciprocity and delay reciprocity. Therefore, a downlink CSI obtaining solution of the FDD system may be designed based on the angle reciprocity and the delay reciprocity. For example, a base station may first perform channel estimation on the uplink channel, and then obtain some prior information of the downlink channel, for example, angle and delay information of the downlink channel, based on the estimated uplink channel information. Then, the base station may load the angle and delay information of the downlink channel to a downlink channel measurement pilot, for example, perform precoding processing on the downlink channel measurement pilot by using the angle and delay information of the downlink channel. Then, the base station may send a channel measurement pilot on which the precoding processing is performed to the UE, and the UE performs channel measurement on the channel measurement pilot to obtain downlink equivalent channel information (to be specific, channel information of the channel measurement pilot on which the precoding processing is performed), and reports, to the base station based on the downlink equivalent channel information, other information (to be specific, other information than the angle and delay information of the downlink channel) used for determining precoding information. Finally, the base station may determine the precoding information based on the prior information determined through the uplink channel estimation and the other information reported by the UE, so as to perform precoding on the downlink data and then send the downlink data.

2. CSI reporting

After completing downlink channel measurement, a UE may report CSI by using uplink control information (uplink control information, UCI). The CSI included in the CSI reporting may be usually divided into two parts, which are referred to as a first part (part 1) and a second part (Part 2). Overheads of the part 1 are generally fixed, and overheads of the Part 2 may be usually determined based on a reporting quantity in the part 1. For example, reporting overheads of indication information of a coefficient amplitude and a phase in the Part 2 may be determined based on a total quantity of coefficients that correspond to all transmission layers and that are reported in the part 1.

For an enhanced type-II codebook (enhanced type-II codebook, which is referred to as a Rel-16 eType-II codebook for short below) in TS 38.214 release 16, the part 1 may usually include a channel rank indicator (rank indicator, RI), a channel state indicator (channel quality indicator, CQI), and a quantity of coefficients reported for all transmission layers (namely, layers, where a quantity of transmission layers may be determined based on the RI, and the transmission layer may also be referred to as a layer, a spatial layer, a data layer, or a data stream); and the Part 2 may include spatial domain basis vector indication information, a spatial domain oversampling factor, frequency domain basis vector indication information, strongest coefficient indication information, coefficient position indication information (usually, a bitmap bitmap indicates a position of the reported coefficient), and an amplitude and a phase of a quantized coefficient. Usually, the total quantity of coefficients reported for all the transmission layers in the part 1 and the Part 2 may also be referred to as a precoding matrix indicator (precoding matrix indicator, PMI). For a further enhanced type-II port selection codebook (further enhanced type-II port selection codebook, which is referred to as a Rel-17 FeType-II codebook for short below) in TS 38.214 release 17, a part 1 is the same as the part 1 of the Rel-16 eType-II codebook, and a Part 2 may include port selection indication information, frequency domain basis vector indication information, strongest coefficient indication information, coefficient position indication information, and an amplitude and a phase of a quantized coefficient. In other words, the Part 2 of the Rel-17 FeType-II codebook is compared with the Part 2 of the Rel-16 eType-II codebook, in the Part 2 of the Rel-17 FeType-II codebook, the spatial domain basis vector indication information and the spatial domain oversampling factor in the Part 2 of the Rel-16 eType-II codebook are replaced with the port selection indication information.

The base station may determine a precoding matrix based on the CSI reported by the UE. It should be noted that when overheads of CSI to be reported by the UE exceed a size of a resource (for example, a physical uplink shared channel (physical uplink shared channel, PUSCH)) allocated by the base station, the UE needs to discard a part of the CSI to ensure effective transmission of important CSI. For example, it may be specified in a protocol that to-be-reported CSI is grouped based on different priorities. When a resource is insufficient, the UE may sequentially discard some CSI by group based on the priorities, and usually discard CSI with a low priority. For the amplitude, phase, and coefficient position indication information of the coefficient, a coefficient reporting priority calculation method may be defined in a protocol, and the method is used as a part of a basis for CSI grouping based on priorities.

3. PMI reporting

PMI reporting may be usually determined and reported based on a set of codebooks, and a codebook of a three-level structure is usually used, for example, $W = W_1 \widetilde{W}_2 W_f^H$, where $W$ represents a to-be-reported precoding matrix for each transmission layer.

For a Rel-16 eType-II codebook, namely, a scenario in which a Part 2 includes spatial domain basis vector indication information and a spatial domain oversampling factor, $W_1 \in \mathbb{C}^{P \times 2L}$ represents a spatial domain matrix formed by 2L spatial domain basis vectors that are shared by all transmission layers and that are used for spatial domain compression (each of two polarization directions corresponds to same L spatial domain basis vectors), and P is a quantity of reference signal (for example, CSI-RS) ports, and is usually equal to a quantity of antenna ports at a transmit end. The L spatial domain basis vectors are selected from a spatial domain basis vector universal set, the spatial domain basis vector universal set includes P/2 orthogonal spatial domain basis vectors. $W_f \in \mathbb{C}^{N_3 \times M_v}$ represents a frequency domain matrix formed by $M_v$ frequency domain basis vectors that correspond to each transmission layer and that are used for frequency domain compression, where $N_3$ is a quantity of subbands or a quantity of frequency domain units, the $M_v$ frequency domain basis vectors are selected from a frequency domain basis vector universal set, and the frequency domain basis vector universal set includes $N_3$ frequency domain basis vectors. $\widetilde{W}_2 \in \mathbb{C}^{2L \times M_v}$ represents a coefficient matrix of $2L \times M_v$ linear combination coefficients corresponding to the spatial domain basis vectors and the frequency domain basis vectors. The UE only needs to select several coefficients for reporting from the coefficient matrix of the linear combination coefficients, and a position of the coefficient that needs to be reported may be indicated by using a bitmap (bitmap).

For example, for each transmission layer, a dimension of a to-be-reported precoding matrix $W$ is $P \times N3$. FIG. 3b is a diagram of a precoding matrix of a channel according to an embodiment of this application. As shown in FIG. 3b, the precoding matrix may be decomposed into three matrices that are multiplied. For ease of description, the three matrices are respectively referred to as a spatial domain matrix, a coefficient matrix, and a frequency domain matrix (for example, a spatial domain matrix 1, a coefficient matrix 1, and a frequency domain matrix 1 in FIG. 3b). A dimension of the spatial domain matrix 1 is $P \times P$, and is a block diagonal matrix. Two diagonal blocks respectively correspond to two polarization directions, and are matrices corresponding to a spatial domain basis vector universal set whose dimension is $P/2 \times P/2$, including P/2 spatial domain basis vectors. A dimension of the coefficient matrix 1 is $P \times N3$, and a dimension of the frequency domain matrix 1 is $N3 \times N3$, namely, a matrix corresponding to a frequency domain basis vector universal set.

Because there is a large quantity of coefficients with smaller values in the coefficient matrix 1, dimension reduction may be performed on the three matrices: the spatial domain matrix 1, the coefficient matrix 1, and the frequency domain matrix 1. For example, a spatial domain basis vector and a frequency domain basis vector that correspond to a coefficient with a larger value in the coefficient matrix 1 are reserved. For example, 2L spatial domain basis vectors (same L spatial domain basis vectors are selected in each polarization direction) are selected from the P×P-dimensional spatial domain matrix 1, to obtain a P×2L-dimensional spatial domain matrix 2. $M_v$ frequency domain basis vectors are selected from the N3×N3-dimensional frequency domain matrix 1, to obtain an $M_v$ ×N3-dimensional spatial domain matrix 2. 2L×$M_v$ coefficients corresponding to the selected 2L spatial domain basis vectors and the selected $M_v$ frequency domain basis vectors are determined from the P×N3-dimensional coefficient matrix 1, to obtain a 2L×$M_v$ dimensional coefficient matrix 2. Then, a particular quantity of coefficients may be selected from the 2L×$M_v$ coefficients for quantization. It may be understood that spatial domain basis vector indication information in a PMI indicates specific L spatial domain basis vectors that are selected from a spatial domain basis vector universal set, frequency domain basis vector indication information for each transmission layer indicates specific $M_v$ frequency domain basis vector that are selected from a frequency domain basis vector universal set, and coefficient indication information for each transmission layer indicates a position of a selected coefficient in 2L×$M_v$ coefficients, and an amplitude and a phase of a quantized selected coefficient.

For a Rel-17 FeType-II codebook, namely, a scenario in which a Part 2 includes port selection indication information, $W_1 \in \mathbb{N}^{P \times K_1}$ is a port selection matrix, and represents that $K_1$ reference signal ports are selected from P reference signal ports, and $K_1$ = 2L, same L reference signal ports are selected from P/2 reference signal ports in each polarization direction, and P is a quantity of reference signal (for example, CSI-RS) ports. $W_f \in \mathbb{C}^{N_3 \times M_v}$ is a frequency domain matrix formed by Mv frequency domain basis vectors used for frequency domain compression, where $N_3$ is a quantity of subbands or a quantity of frequency domain units. $\widetilde{W}_2 \in \mathbb{C}^{K_1 \times M_v}$ is a coefficient matrix of $K_1 \times$ Mv linear combination coefficients corresponding to the reference signal ports and the frequency domain basis vectors. The UE only needs to select several coefficients for reporting from the coefficient matrix of the linear combination coefficients, and a position of the coefficient that needs to be reported may be indicated by using a bitmap.

In a CJT coordination manner, a plurality of TRPs may simultaneously serve one UE, and the plurality of TRPs may be equivalent to one large base station for the UE. Therefore, the UE needs to report joint channel state information all the TRPs in a multi-station coordination set, to enable coherent joint transmission. In a possible implementation, for a codebook form in the CJT coordination manner, refer to the following two CJT codebook forms (where N is a quantity of TRPs selected by the UE for CJT):

$$\begin{bmatrix} W_{1,1}\widetilde{W}_{2,1}W_{f,1}^H \\ \vdots \\ W_{1,N}\widetilde{W}_{2,N}W_{f,N}^H \end{bmatrix} \text{ or } \begin{bmatrix} W_{1,1}\widetilde{W}_{2,1}W_f^H \\ \vdots \\ W_{1,N}\widetilde{W}_{2,N}W_f^H \end{bmatrix}.$$

Similar to the codebook structure described above, for each transmission layer, $W_{1,n}$ is a spatial domain matrix or a port selection matrix of an $n^{th}$ TRP, and a dimension is $P \times 2L_n$ or $P \times K_{1,n}$; $\widetilde{W}_{2,n}$ is a linear combination coefficient matrix of the $n^{th}$ TRP, and a dimension is $2L_n \times M_v$ or $K_{1,n} \times M_v$; $W_{f,n}$ is a frequency domain matrix of the $n^{th}$ TRP, $W_f$ is a frequency domain matrix shared by the N TRPs, and dimensions are both $N_3 \times M_v$. $W_{1,n}$, $\bar{W}_{2,n}$, and $W_{f,n}/W_f$ represent a precoding matrix that corresponds to the $n^{th}$ TRP and that is for the transmission layer. For example, the precoding matrix corresponding to the $n^{th}$ TRP may also be represented by the precoding matrix in FIG. 3b, $W_{1,n}$, $\bar{W}_{2,n}$, and $W_{f,n}/W_f$ respectively correspond to the spatial domain matrix 2, the coefficient matrix 2, and the frequency domain matrix 2. For example, n=1, ..., N. For each transmission layer, coefficient matrices corresponding to all the TRPs has $\sum_{n=1}^{N} 2L_n M_v$ or $\sum_{n=1}^{N} K_{1,n} M_v$ coefficients in total, where n represents an $n^{th}$ TRP of the N TRPs (corresponding to reference signal resources below), $L_n$ represents a quantity of spatial domain basis vectors corresponding to the $n^{th}$ TRP, and $K_{1,n}$ represents a quantity of selected reference signal ports corresponding to the $n^{th}$ TRP.

Compared with the Rel-16 eType-II codebook and the Rel-17 FeType-II codebook, the foregoing CJT codebook introduces a TRP dimension, and includes joint CSI information a plurality of TRPs.

It should be noted that each TRP may correspond to one reference signal resource (for example, a CSI-RS resource), or each TRP may correspond to one port group on one reference signal resource (for example, a CSI-RS resource). In other words, there is a correspondence between a reference signal resource and a TRP in this application, and one reference signal resource may represent one TRP. For example, the reference signal resource is a time-frequency resource used to send a reference signal, and includes one or more reference signal ports.

It may be understood that, in this application, CSI may be channel state information, and represents a channel.

CSI may be a channel response, or may be an eigenvector of a channel or a matrix formed by a plurality of eigenvectors. CSI is obtained by a communication apparatus by performing channel measurement. For example, CSI is obtained by a UE by measuring a reference signal. Alternatively, CSI may be a result obtained after a channel response obtained by a communication apparatus by performing channel measurement is processed, for example, a channel eigenvector obtained by performing singular value decomposition on the channel response obtained by performing channel measurement. This is not limited in this application.

4. Spatial domain basis vector

Each spatial domain basis vector corresponds to one transmit beam of a transmit-end device (corresponding to a TRP), and each element in the spatial domain basis vector may be represented as a weight of each antenna port. Based on the weights of all the antenna ports represented by all the elements in the spatial domain basis vector, signals of all the antenna ports are linearly superimposed to form a region with stronger signals in a direction in space. Optionally, the spatial domain basis vector is obtained from a two-dimensional discrete Fourier transform (discrete Fourier transform, DFT) matrix, and the two-dimensional DFT matrix is a spatial domain basis vector universal set. Each column vector in the two-dimensional DFT matrix may be referred to as a two-dimensional DFT vector. In other words, the spatial domain basis vector may be a two-dimensional DFT vector, and the two-dimensional DFT vector may be usually used to describe a beam obtained by superposing a beam in a horizontal direction and a beam in a vertical direction. A dimension of a spatial domain basis vector is N1*N2x1, in other words, the spatial domain basis vector includes N1*N2 elements, where N1 and N2 may be respectively quantities of horizontal transmit antenna ports and vertical transmit antenna ports of the transmit-end device in one polarization direction. In this case, a spatial domain basis vector universal set includes N1*N2 spatial domain basis vectors. When a PMI is reported, L spatial domain basis vectors are selected from the N1*N2 spatial domain basis vectors to represent a spatial domain feature of a channel.

5. Frequency domain basis vector

The frequency domain basis vector may also be referred to as a frequency domain vector, and is a vector that may indicate a change rule of a channel in frequency domain. Each frequency domain basis vector may represent one change rule. When a signal is transmitted through a wireless channel, the signal may arrive at a receive antenna through a plurality of paths from a transmit antenna. Frequency selective fading caused by delays on the plurality of paths is a change of a frequency domain channel. Therefore, change rules, caused by delays on different transmission paths, of the channel in frequency domain may be represented by using different frequency domain basis vectors. Optionally, the frequency domain basis vector may be selected from a DFT matrix or an inverse discrete Fourier transform (inverse discrete Fourier transform, IDFT) matrix, and the DFT matrix or the IDFT matrix (namely, a conjugate transposition matrix of the DFT matrix) is a frequency domain basis vector universal set. In other words, the frequency domain basis vector may be a DFT vector or an IDFT vector.

A length of the frequency domain basis vector may be determined based on a quantity of to-be-reported frequency domain units that is pre-configured in a reporting bandwidth, may be determined based on a length of the reporting bandwidth, or may be a value predefined in a protocol. The length of the frequency domain basis vector is not limited in this application. The reporting bandwidth may be a CSI reporting bandwidth (CSI-ReportingBand) carried in a CSI reporting configuration in higher layer signaling (for example, an RRC message). If a dimension of a frequency domain basis vector is N3×1, a frequency domain basis vector universal set includes N3 frequency domain basis vectors. When a PMI is reported, Mv frequency domain basis vectors are selected from the N3 frequency domain basis vectors to represent a frequency domain feature of a channel.

6. Linear combination coefficient

The linear combination coefficient may also be referred to as a coefficient, a weighting coefficient, or the like. For single-station transmission, a single-TRP precoding matrix is reported by using a PMI. For multi-station coherent transmission, a multi-TRP joint precoding matrix is reported by using a PMI, and a precoding matrix corresponding to each TRP or each reference signal resource is a submatrix of the multi-TRP joint precoding matrix. When a PMI is reported, the codebook mentioned above is essentially that, for each transmission layer, a precoding matrix or a precoding submatrix that corresponds to each TRP for the transmission layer is represented by using several spatial domain basis vectors and several frequency domain basis vectors in a linear weighting form, where a weighting coefficient is a linear combination coefficient. For each transmission layer and each reference signal resource, a plurality of linear combination coefficients are included, and each linear combination coefficient corresponds to one spatial domain basis vector and one frequency domain basis vector. For a port selection codebook (for example, a Rel-17 FeType-II codebook or a Rel-17 FeType-II codebook-based multi-station codebook), for each transmission layer and each reference signal resource, a plurality of linear combination coefficients are included, and each linear combination coefficient corresponds to one reference signal port and one frequency domain basis vector. When a PMI is reported, some coefficients are selected for reporting from all linear combination coefficients corresponding to all transmission layers and all reference signal resources. Usually, an amplitude of a reported coefficient is not 0, and the coefficient may also be referred to as a nonzero coefficient.

7. Transmission layer (layer)

The transmission layer may also be referred to as a layer, a spatial layer, a data layer, a data stream, or the like. In a multiple-input multiple-output (multiple-input multiple-output, MIMO) system, a transmission layer may be considered as a data stream whose transmission can be independently performed, and each transmission layer may have one transmission layer sequence number. To improve spectrum resource utilization and improve a data transmission capability of a communication system, a network device may transmit data to a terminal device through a plurality of transmission layers.

A quantity of transmission layers is a rank of a channel matrix. The terminal device may determine the quantity of transmission layers based on the channel matrix obtained through channel estimation. It may be understood that a UE may determine a precoding matrix based on a channel matrix. For example, a UE may determine a precoding matrix by performing singular value decomposition (singular value decomposition, SVD) on a channel matrix or a covariance matrix of the channel matrix. In an SVD process, different transmission layers may be distinguished based on eigenvalues. For example, a UE may correspond, to a $1^{st}$ transmission layer, a precoding vector determined by using an eigenvector corresponding to a maximum eigenvalue, and correspond, to a $v^{th}$ transmission layer, a precoding vector determined by using an eigenvector corresponding to a minimum eigenvalue. In other words, eigenvalues corresponding to the $1^{st}$ transmission layer to the $v^{th}$ transmission layer are in descending order. Simply speaking, in the v transmission layers, strengths from the $1^{st}$ transmission layer to the last transmission layer are in descending order.

It may be understood that a reference signal in this application may be one or more of the following: a CSI-RS, an SSB, and a demodulation reference signal (demodulation reference signal, DMRS), and a reference signal resource in this application may be one or more of the following: a CSI-RS resource, an SSB resource, and a DMRS resource. A channel to be measured may be a physical downlink shared channel (physical downlink shared channel, PDSCH) or a physical downlink control channel (physical downlink control channel, PDCCH).

In the conventional technology, for a Rel-16 eType-II codebook and a Rel-17 FeType-II codebook, design principles of priorities of coefficients are similar. Specifically, a sequence number combination $(l, i, f)$ is given, and a priority of a coefficient corresponding to the combination may be represented as Pri$(l, i, f)$. A smaller value of Pri$(l, i, f)$ indicates a higher priority of the coefficient corresponding to the combination, and indication information such as amplitude, phase, and position indication information of a coefficient with a higher priority may be preferentially reported. In other words, for a coefficient with a higher priority, a position of indication information, such as amplitude, phase, and position indication information, of the coefficient in a CSI reporting field is higher. A transmission layer sequence number is $l$, where $l$ = 1, 2, ... , $v$; a sequence number of a spatial domain basis vector or a selected reference signal port is $i$, where $i$ = 0, 1, ..., $2L$ - 1 or $i$ = 0, 1, ... , $K_1$ - 1; and a frequency domain basis vector sequence number is $f$, where $f$ = 0, 1, ..., $M_v$ - 1. v is a total quantity of transmission layers, $L$ is a quantity of polarization shared spatial domain basis vectors, $K_1$ is a quantity of selected reference signal ports, and $M_v$ is a quantity of frequency domain basis vectors.

In the Rel-16 eType-II codebook, Pri$(l, i, f)$ = $2 \cdot L \cdot v \cdot \pi(f) + v \cdot i + l$. It can be learned that changes of values of $f, i,$ and $l$ have different impact on Pri$(l, i, f)$. A coefficient reporting priority of the Rel-16 eType-II codebook may be defined as follows: First, a frequency domain dimension and a spatial domain dimension are fixed, and coefficients corresponding to different transmission layers are reported; then, a frequency domain dimension is fixed, and coefficients corresponding to different spatial domain basis vectors are reported; and finally, coefficients corresponding to different frequency domain basis vectors are reported.

In the Rel-17 FeType-II codebook, $Pri(l, i, f)$ = $K_1 \cdot v \cdot f + v \cdot i + l$. Similarly, changes of values of $f, i,$ and $l$ have different impact on Pri$(l, i, f)$. A coefficient reporting priority of the Rel-17 FeType-II codebook may be defined as follows: First, a frequency domain dimension and a reference signal port dimension are fixed, and coefficients corresponding to different transmission layers are reported; then, a frequency domain dimension is fixed, and coefficients corresponding to different reference signal ports are reported; and finally, coefficients corresponding to different frequency domain basis vectors are reported.

However, this solution is not applicable to a multi-TRP joint transmission CJT scenario. Specifically, currently, in the Rel-16 eType-II codebook and the Rel-17 FeType-II codebook, only a coefficient priority definition during CSI reporting for a single TRP is considered, and a coefficient priority definition during CSI reporting in multi-TRP joint transmission is not considered. For a CJT codebook, a plurality of TRPs need to simultaneously serve a UE, and a TRP dimension needs to be additionally introduced. Therefore, currently, for priority definitions of coefficients of the Rel-16 eType-II codebook and the Rel-17 FeType-II codebook, only a coefficient priority definition during CSI reporting in a single TRP scenario is considered, and is not applicable to multi-TRP joint transmission.

Therefore, this application provides a coefficient priority sorting manner of a multi-station CJT codebook for multi-TRP joint transmission. Specifically, for a CJT codebook, when CSI is reported for a multi-TRP joint transmission scenario, a TRP dimension, namely, a reference signal resource (for example, CSI-RS resource) dimension, needs to be additionally considered for defining a priority of a coefficient, so that a UE can report joint downlink CSI of all TRPs, and multi-TRP coherent joint transmission is enabled. Priority sorting of the plurality of TRPs (or CSI-RS resources) is considered, to distinguish reporting priorities of coefficients corresponding to the different TRPs. Optionally, priority functions of coefficients corresponding to different transmission layers, different TRPs, different spatial domain basis vectors/reference signal ports, and different frequency domain basis vectors may be specified, to implement effective CSI reporting in UCI reporting of a multi-station CJT codebook.

The following describes in detail the technical solutions provided in this application with reference to more accompanying drawings.

In this application, unless otherwise specified, for same or similar parts of embodiments or implementations, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application are not intended to limit the protection scope of this application.

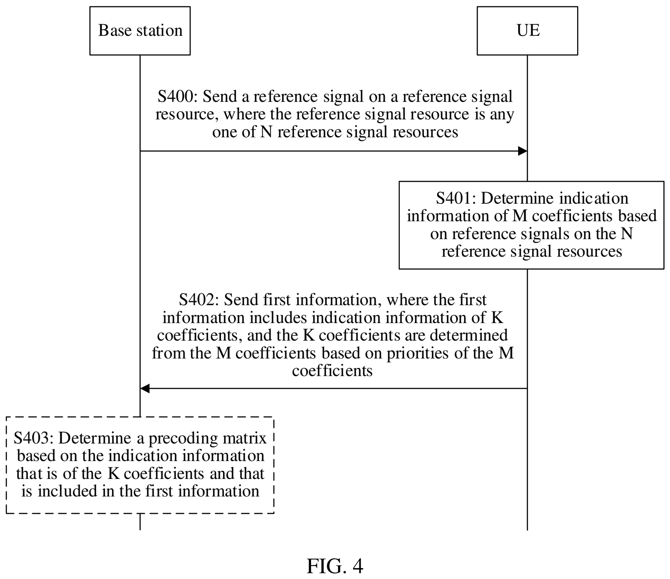

FIG. 4 is a schematic flowchart of a channel state information reporting method according to an embodiment of this application. As shown in FIG. 4, the channel state information reporting method includes but is not limited to the following steps.

S400: A base station sends a reference signal on a reference signal resource, where the reference signal resource is any one of N reference signal resources.

One base station may correspond to one reference signal resource. Each of a plurality of base stations may generate a reference signal, and send the reference signal to a UE on a reference signal resource corresponding to the base station. For example, if N base stations configure N reference signal resources for a UE, any one of the N base stations may send a reference signal to the UE on the reference signal resource configured by the base station for the UE.

Correspondingly, the UE separately receives the reference signal sent by each base station on the reference signal resource that corresponds to the base station and that is of the N reference signal resources.

S401: The UE determines indication information of M coefficients based on reference signals on the N reference signal resources.

Optionally, before S400, the base station may configure a plurality of reference signal resources and CSI reporting resources for the UE. The plurality of reference signal resources may be periodic, semi-persistent, or aperiodic. The CSI reporting resource is a resource used by the UE during CSI reporting. The CSI reporting resource may be a resource on a PUSCH or a resource on which UCI is located. The plurality of reference signal resources may be separately configured by a plurality of base stations, or may be configured by a single base station (in this case, the base station may share configuration information with another base station). For example, one base station corresponds to one reference signal resource, and each base station participating in coherent joint transmission may send a reference signal to the UE on a reference signal resource corresponding to the base station. Optionally, the UE may select the N reference signal resources from the plurality of reference signal resources configured by the base station, and determine the indication information of the M coefficients based on the reference signals on the N reference signal resources. It may be understood that, when a quantity of reference signal resources selected by the UE is less than a total quantity of reference signal resources configured by the base station, the UE may indicate, when reporting CSI, specific reference signal resources that are selected; or report, to the base station by using other indication information, specific reference signal resources that are selected. For example, each of four base stations configures one reference signal resource for a UE, and there are four reference signal resources in total. The UE may select reference signal resources configured by a 1st base station and a 3rd base station of the four base stations. For example, the UE may receive reference signals on the two reference signal resources, and then may perform channel measurement on the received reference signals to obtain corresponding channel state information CSI. It may be understood that the UE may obtain one piece of CSI by measuring the reference signals received from the N reference signal resources. Then, the UE may perform processing such as compression and quantization on a precoding matrix obtained based on a channel measurement result, to obtain the indication information of the M coefficients. The indication information of the coefficient may include one or more of amplitude indication information of the coefficient, phase indication information of the coefficient, and position indication information of the coefficient. For example, n=1, ..., N. The M coefficients are determined from $v \sum_{n=1}^{N} 2L_n M_v$ or $v \sum_{n=1}^{N} K_{1,n} M_v$ linear combination coefficients corresponding to $v$ transmission layers and the N reference signal resources, where n represents sequence numbers of the N reference signal resources, namely, an $n^{th}$ reference signal resource of the N reference signal resources, $L_n$ represents a quantity of spatial domain basis vectors corresponding to the $n^{th}$ reference signal resource, and $K_{1,n}$ represents a quantity of selected reference signal ports corresponding to the $n^{th}$ reference signal resource. In other words, M may be less than or equal to $v \sum_{n=1}^{N} 2L_n M_v$, or M may be less than or equal to $v \sum_{n=1}^{N} K_{1,n} M_v$. For example, a coefficient whose value is 0 or whose value is small may be filtered out from the $v \sum_{n=1}^{N} 2L_n M_v$ or $v \sum_{n=1}^{N} K_{1,n} M_v$ linear combination coefficients, to obtain the M coefficients. In this case, M is less than $v \sum_{n=1}^{N} 2L_n M_v$ or M is less than $v \sum_{n=1}^{N} K_{1,n} M_v$.

Optionally, priorities of the M coefficients may be determined based on priorities of the N reference signal resources. For details, refer to the following descriptions. Both M and N are integers greater than 1. The M coefficients are used to determine a joint precoding matrix corresponding to the N reference channel resources. It should be noted that the precoding matrix further needs to be determined based on precoding information corresponding to spatial domain basis vectors/selected reference signal ports of the reference signal resources corresponding to the M coefficients, and frequency domain basis vectors for the transmission layers and the reference signal resources corresponding to the M coefficients. Each reference signal resource may correspond to one TRP. In this case, the N reference signal resources may correspond to N TRPs. In other words, the N TRPs may simultaneously serve one UE, where N may be any integer greater than 1. For example, N is 3, or N is set to another value. This is not specifically limited herein. The reference signal resource may be a CSI-RS resource, in other words, each TRP may correspond to one CSI-RS resource.

In a possible implementation, the priorities of the M coefficients may be further determined based on one or more of the following: a transmission layer sequence number, a spatial domain basis vector sequence number, a reference signal port sequence number, and a frequency domain basis vector sequence number. For details, refer to the following descriptions. In other words, the priorities of the M coefficients may be determined with reference to one or more of the transmission layer sequence number, the spatial domain basis vector sequence number, the reference signal port sequence number, and the frequency domain basis vector sequence number based on the priorities of the N reference signal resources.

S402: The UE sends first information, where the first information includes indication information of K coefficients, and the K coefficients are determined from the M coefficients based on the priorities of the M coefficients.

Correspondingly, the base station receives the first information.

It may be understood that before reporting CSI, the UE may first compare a size of a resource occupied by the to-be-reported CSI with a size of a CSI reporting resource allocated by the base station. If overheads of the to-be-reported CSI exceed the size of the CSI reporting resource allocated by the base station, the UE may discard indication information of some coefficients, to ensure that other more important information (for example, indication information of a high-priority coefficient) can be effectively transmitted. The other more important information may further include spatial domain basis vector indication information, frequency domain basis vector indication information, strongest coefficient indication information, and the like. In this case, the K coefficients are K coefficients with higher priorities in the M coefficients, and K is less than M. If the overheads of the to-be-reported CSI do not exceed the size of the CSI reporting resource allocated by the base station, the UE may not discard the indication information of the coefficients, but report all the indication information of the M coefficients. In this case, K is equal to M.

In a possible implementation, the M coefficients may be grouped into J groups based on the priorities of the M coefficients, where J is greater than or equal to 2. Amplitude, phase, and coefficient position indication information of a same coefficient are placed in a same group. A priority of a coefficient in a $1^{st}$ group is higher than a priority of a coefficient in a $2^{nd}$ group, the priority of the coefficient in the $2^{nd}$ group is higher than a priority of a coefficient in a $3^{rd}$ group, and the rest can be deduced by analogy. In addition, for a higher-priority coefficient in each group, amplitude, phase, and coefficient position indication information of the coefficient are placed more forward in the CSI reporting resource. When the CSI reporting resource is limited, the UE may preferentially ignore a lower-priority group, and preferentially report indication information of a coefficient corresponding to a higher-priority group. In this case, K is less than M, and the indication information that is of the K coefficients and that is included in the first information is indication information of coefficients in one or more higher-priority groups.

It should be noted that, n=1, ..., N is used as an example, and position indication information of the M coefficients indicates that the M coefficients are specific M coefficients in the $v \sum_{n=1}^{N} 2L_n M_v$ or $v \sum_{n=1}^{N} K_{1,n} M_v$ linear combination coefficients corresponding to the $v$ transmission layers and the N reference signal resources. In a possible implementation, a position of the coefficient may be indicated in a form of a bitmap, and a length of the bitmap is $v \sum_{n=1}^{N} 2L_n M_v$ or $v \sum_{n=1}^{N} K_{1,n} M_v$. For ease of description, a coefficient corresponding to an $l^{th}$ transmission layer, an $n^{th}$ reference signal resource, an $i^{th}$ spatial domain basis vector/selected reference signal port, and an $f^{th}$ frequency domain basis vector that are used to determine a precoding matrix is represented as $C_{l,i,f,n}$, and a bit value of a bitmap corresponding to the coefficient $C_{l,i,f,n}$ is represented as $K_{l,i,f,n}$. $K_{l,i,f,n}$ corresponding to the M coefficients are all set to a first value (for example, set to 0 or 1), and $K_{l,i,f,n}$ corresponding to remaining coefficients are all set to a second value (for example, set to 1 or 0). Optionally, coefficient indication information includes coefficient position indication information, and the position indication information provides an indication in a form of a bitmap. When the coefficient position indication information is reported, bits in the bitmap are also sorted based on priorities of the bits, and a higher-priority bit is ranked higher. A priority of $K_{l,i,f,n}$ is the same as a priority of a coefficient corresponding to $K_{l,i,f,n}$.

A grouping manner of the coefficient position information is described below by using J=2 as an example. In a possible implementation, a first group includes amplitude, phase, and position indication information of $K_1$ coefficients with highest priorities in the M coefficients, and a second group includes amplitude, phase, and position indication information of K2 (K2=M-K1) coefficients with lower priorities in the M nonzero indication coefficients. For example, n=1, ..., N. The position indication information of the K1 coefficients in the first group includes $v\sum_{n=1}^{N}2L_nM_v - K_2$ or $v\sum_{n=1}^{N}K_{1,n}M_v - K_2$ bits $K_{l,i,f,n}$ with highest priorities, to ensure that positions of the K1 coefficients can be completely indicated. The position indication information of the K2 coefficients in the second group includes $K_2$ bits $K_{l,i,f,n}$ with lower priorities, and positions of the $K_2$ coefficients with the lower priorities may be indicated with reference to the bits included in the first group. It may be understood that when the UE reports only the first group, K=K1; or when the UE reports the first group and the second group, K=K1+K2. For example, the N reference signal resources correspond to eight linear combination coefficients in total, and the linear combination coefficients are sorted in descending order of priorities, in other words, a $1^{st}$ coefficient has a highest priority, a $2^{nd}$ coefficient has a second highest priority, and the rest can be deduced by analogy. The terminal device determines six coefficients for reporting from the eight linear combination coefficients, that is, M=6, and the six coefficients are respectively a $3^{rd}$ coefficient, a $4^{th}$ coefficient, a $5^{th}$ coefficient, a $6^{th}$ coefficient, a $7^{th}$ coefficient, and an $8^{th}$ coefficient. The six coefficients may be grouped into two groups, where a first group includes K1 coefficients, and a second group includes K2 coefficients. For example, K1=K2=3, where the first group includes amplitudes, phases, and corresponding position indication information of the $3^{rd}$ $4^{th}$, and $5^{th}$ coefficients, and the corresponding position indication information is 5 bits in total and is 00111, and may indicate that coefficients included in the current group are the $3^{rd}$ $4^{th}$, and $5^{th}$ coefficients; and the second group includes amplitudes, phases, and corresponding position indication information of the $6^{th}$, $7^{th}$, and $8^{th}$ coefficients, and the corresponding position indication information is 3 bits and is 111. 111 of the second group and 00111 of the first group are combined into a complete bitmap 00111111, to indicate that the coefficients included in the second group are the $6^{th}$, $7^{th}$, and $8^{th}$ coefficients.

Optionally, the first information may be carried in UCI, MAC-CE, RRC signaling, PUSCH, or the like.

It may be understood that, in a CJT scenario, a plurality of TRPs (base stations) may simultaneously serve one UE, and the plurality of TRPs all need to obtain joint downlink CSI of the plurality of TRPs. Optionally, when reporting CSI to the base stations, the UE may separately send the first information to each base station, in other words, the UE may separately report the CSI to each base station, so that all the plurality of base stations participating in CJT can obtain the joint downlink CSI. Alternatively, the UE may send the first information to a base station in the plurality of base stations, in other words, the UE may report CSI to the base station in the plurality of base stations, so that the base station may obtain the downlink CSI, and another base station participating in the CJT and the base station may share the downlink CSI through communication. In this way, each of the plurality of base stations participating in the CJT may obtain the downlink CSI.

In a possible implementation, after the foregoing steps S400 to S402, the channel state information reporting method may further include the following steps.

S403: The base station determines a precoding matrix based on the indication information that is of the K coefficients and that is included in the first information.

Optionally, the base station may determine the precoding matrix based on the CSI reported by the UE. It should be noted that when K is less than M, the precoding matrix determined by the base station based on the indication information of the K coefficients may be different from the precoding matrix indicated by the indication information of the M coefficients. In other words, if the UE discards indication information of some coefficients when reporting the CSI, a precoding matrix determined by the base station based on effectively transmitted indication information of remaining coefficients may be different from a precoding matrix required by the UE. It may be understood that when K is equal to M, the precoding matrix determined by the base station based on the indication information of the K coefficients may be the same as or similar to the precoding matrix indicated by the indication information of the M coefficients.

In conclusion, in comparison with only a coefficient priority definition solution during CSI reporting for a single TRP (corresponding to a single reference signal resource) being considered in a current Rel-16 eType-II codebook and a Rel-17 FeType-II codebook, in embodiments of this application, when CSI reporting is performed in a multi-TRP CJT scenario, a TRP dimension (namely, a reference signal resource dimension) is additionally introduced, so that a UE can report joint downlink CSI of all TRPs, and multi-TRP coherent joint transmission is enabled. Optionally, priority functions of coefficients corresponding to different transmission layers, different TRPs (or reference signal resources), different spatial domain basis vectors/reference signal ports, and different frequency domain basis vectors may be specified, to reflect a difference in priorities of the coefficients corresponding to the different TRPs. This can effectively resolve a problem of determining a reporting sequence of related information of the different coefficients corresponding to the different TRPs, and ensure as much as possible that important information is preferentially transmitted, to reduce a performance loss of a communication system.

Manners of determining the priorities of the M coefficients in embodiments of this application are described below by using examples.

When definitions of determining the priorities of the M coefficients are designed, the definitions may be designed with reference to one or more of the following principles:

1. Combine a reference signal resource (corresponding to a TRP, for example, a CSI-RS resource) dimension and a spatial domain basis vector (or reference signal port) dimension. For example, more spatial domain basis vectors may be usually used for a TRP of a stronger channel, or more reference signal ports may be usually selected for a TRP of a stronger channel.

2. Avoid discarding all coefficients of one transmission layer. For example, traversing may be preferentially performed in a transmission layer dimension, then traversing is performed in spatial domain basis vector/reference signal port and reference signal resource dimensions, and finally traversing is performed in a frequency domain basis vector dimension.

3. Preferentially report a coefficient with a larger amplitude value. For example, a position of a frequency domain basis vector may be given, and a coefficient corresponding to a spatial domain basis vector of a stronger TRP (corresponding to a reference signal resource, for example, a CSI-RS resource) is preferentially reported. Alternatively, a feature of a Rel-16 Type-II codebook may be referenced, and cyclic shift is performed on frequency domain basis vectors of all TRPs (or CSI-RS resources) based on an index of a frequency domain basis vector corresponding to a strongest coefficient of a strongest TRP (or CSI-RS resource). A coefficient corresponding to a strongest frequency domain basis vector is preferentially reported, and then coefficients corresponding to frequency domain basis vectors on two sides of the strongest frequency domain basis vector are reported. Optionally, cyclic shift is performed on a frequency domain basis vector of each TRP (or CSI-RS resource) based on an index of a frequency domain basis vector corresponding to a strongest coefficient of the TRP (or CSI-RS resource).

In a possible implementation, the priorities of the M coefficients may be determined based on the priorities of the N reference signal resources. For example, if a priority of an $n_1^{th}$ reference signal resource in the N reference signal resources is higher than a priority of an $n_2^{th}$ reference signal resource in the N reference signal resources, a priority of any coefficient associated with the $n_1^{th}$ reference signal resource is higher than a priority of any coefficient associated with the $n_2^{th}$ reference signal resource. For example, M is 9 and N is 3. Three reference signal resources respectively correspond to three TRPs (for example, a TRP 1, a TRP 2, and a TRP 3), coefficients associated with the TRP 1 are 1, 2, and 3, coefficients associated with the TRP 2 are 4, 5, and 6, and coefficients associated with the TRP 3 are 7, 8, and 9. If a priority of the TRP 1 is higher than that of the TRP 2, priorities of the coefficients 1, 2, and 3 are all higher than those of the coefficients 4, 5, and 6, and the UE may preferentially report the coefficients 1, 2, and 3 associated with the TRP 1. There may be no priority distinction between a plurality of coefficients associated with one TRP. For example, the coefficients 1, 2, and 3 associated with the TRP 1 have a same priority. It should be noted that, although there is no priority distinction between a plurality of coefficients associated with one TRP, when reporting amplitude, phase, and coefficient position indication information that correspond to a plurality of coefficients associated with one TRP, a UE may sort positions of the amplitude, phase, and coefficient position indication information in a CSI reporting field according to a specific rule. The rule may be pre-configured, or may be predefined in a protocol. In other words, the rule is well known to a base station and the UE, so that the base station can also determine the coefficients according to the rule. For example, the rule may be that the reported coefficients are first sorted in ascending order of sequence numbers of corresponding transmission layers, then sorted in ascending order of sequence numbers of corresponding spatial domain basis vectors, and finally sorted in ascending order of sequence numbers in corresponding frequency domain basis vectors. This is not specifically limited herein. In the foregoing manner of determining the priority of the coefficient only based on the reference signal resource, the rule is simple, and complexity for the UE can be simplified.

In a possible implementation, when the reference signal resource dimension and the spatial domain basis vector (or reference signal port) dimension are combined, a priority of a coefficient associated with a spatial domain basis vector or a reference signal port that corresponds to any one of the N reference signal resources may be determined according to any one or more items of the following first preset rule:

Rule 1.1: If a priority of an $n_1^{th}$ reference signal resource in the N reference signal resources is higher than a priority of an $n_2^{th}$ reference signal resource in the N reference signal resources, a priority of a coefficient associated with any spatial domain basis vector corresponding to the $n_1^{th}$ reference signal resource is higher than a priority of a coefficient associated with any spatial domain basis vector corresponding to the $n_2$th reference signal resource; or a priority of a coefficient associated with any reference signal port corresponding to the $n_1$th reference signal resource is higher than a priority of a coefficient associated with any reference signal port corresponding to the $n_2$th reference signal resource. For example, N is 3. Three reference signal resources respectively correspond to three TRPs (for example, a TRP 1, a TRP 2, and a TRP 3). If a priority of the TRP 1 is higher than that of the TRP 2, a priority of a coefficient associated with any spatial domain basis vector (or reference signal port) corresponding to the TRP 1 is higher than a priority of a coefficient associated with any spatial domain basis vector (or reference signal port) corresponding to the TRP 2. For another example, three reference signal resources may include a reference signal resource 1, a reference signal resource 2, and a reference signal resource 3. If a priority of the reference signal resource 1 is higher than a priority of the reference signal resource 2, priorities of coefficients (for example, coefficients of the coefficient matrix 2 in FIG. 3b) associated with a plurality of spatial domain basis vectors (for example, column vectors (2L1 in total) of the spatial domain matrix 2 in FIG. 3b) corresponding to the reference signal resource 1 (corresponding to a TRP 1) in CSI are all higher than a priority of a coefficient associated with any spatial domain basis vector corresponding to the reference signal resource 2. It may be understood that the reference signal resource 2 may also correspond to a precoding matrix similar to that in FIG. 3b. The precoding matrix may also be decomposed into three matrices (a spatial domain matrix, a coefficient matrix, and a frequency domain matrix) that are multiplied, and details are not described herein.

Rule 1.2: If a priority of an $n_1$th reference signal resource in the N reference signal resources is higher than a priority of an $n_2$th reference signal resource in the N reference signal resources, a priority of a coefficient associated with an $i$th spatial domain basis vector corresponding to the $n_1$th reference signal resource is higher than a priority of a coefficient associated with an $i$th spatial domain basis vector that is with an identical sequence number and that corresponds to the $n_2$th reference signal resource; or a priority of a coefficient associated with an $i$th reference signal port corresponding to the $n_1$th reference signal resource is higher than a priority of a coefficient associated with an $i$h reference signal port that is with an identical sequence number and that corresponds to the $n_2$th reference signal resource, where $i$ represents the sequence number of the spatial domain basis vector or the reference signal port. For example, if the priority of the TRP 1 is higher than that of the TRP 2, a priority of a coefficient associated with a spatial domain basis vector (or reference signal port) whose sequence number is $i$ (for example, $i$ may be set to 1) and that corresponds to the TRP 1 is higher than a priority of a coefficient associated with a spatial domain basis vector (or reference signal port) whose sequence number is $i$ (for example, $i$ is set to 1) and that corresponds to the TRP 2.

Optionally, the comparison of the coefficient priorities in any item of the foregoing first preset rule satisfies the following premise: During comparison, sequence numbers of frequency domain basis vectors associated with two reference signal resources are the same or cyclic shifted indexes of frequency domain basis vectors associated with two reference signal resources are the same.

Optionally, when a coefficient reporting priority of a multi-station codebook is defined, a frequency domain dimension may be used as a prioritized dimension, as a last dimension for traversing during priority calculation. The following uses a Rel-16 eType-II-based multi-station codebook and a Rel-17 FeType-II-based multi-station codebook as examples for brief description.

For the Rel-16 eType-II-based multi-station codebook, a sequence number combination ($l, i, f, n$) may be given. A priority of a coefficient corresponding to the combination is determined based on a priority function Pri($l, i, f, n$), and priorities of amplitude, phase, and position indication information of the coefficient are also determined accordingly. A smaller value of Pri($l, i, f, n$) indicates that the amplitude, phase, and position indication information of the coefficient corresponding to the combination have higher priorities, and are preferentially reported. For ease of description, a coefficient corresponding to an $l$th transmission layer, an $n$th reference signal resource, an $i$h spatial domain basis vector, and an $f$th frequency domain basis vector that are used to determine a precoding matrix is represented as $C_{l,i,f,n}$.

For example, a priority function of any coefficient $C_{l,i,f,n}$ in the M coefficients satisfies:

$$\mathrm{Pri}(l, i, f, n) = 2L_{max} \cdot X \cdot v \cdot \pi(f) + v \cdot \varphi(i, n) + l,$$

where

$l$ represents a transmission layer sequence number, and $l$ is set to 1, 2, ..., $v$; $v$ represents a quantity of transmission layers; $i$ represents a spatial domain basis vector sequence number (for example, a spatial domain basis vector in an $i$th column in the spatial domain matrix 2 in FIG. 3b), in other words, a spatial domain basis vector corresponding to the coefficient $C_{l,i,f,n}$ is an $i$th spatial domain basis vector of $2L_n$, selected spatial domain basis vectors corresponding to the $n$th reference signal resource, and $i$ is set to 0, 1, ..., $2L_n - 1$; $L_n$ represents a quantity of spatial domain basis vectors in each polarization direction corresponding to the $n$th reference signal resource (two polarization directions share a same spatial domain basis vector); $f$ represents a frequency domain basis vector sequence number (for example, a frequency domain basis vector in an $f$th row or a conjugate transposition of the frequency domain basis vector in the $f$th row in the frequency domain matrix 2 in FIG. 3b), in other words, a frequency domain basis vector corresponding to the coefficient $C_{l,i,f,n}$ is an $f$th frequency domain basis vector of $M_v$ selected frequency domain basis vectors corresponding to the $l$th transmission layer and the $n$th

reference signal resource, and $f$ is set to 0, 1, ... , $M_v$ - 1; $M_v$ represents a quantity of frequency domain basis vectors; $n$ represents sequence numbers of the N reference signal resources, where optionally, $n$ = 1, 2, ... , $N$, $n$ = 0, 1, ... , $N$ - 1, or $n$ may be set to another value; $\varphi(i, n)$ represents a priority of a coefficient set associated with the $i^{th}$ spatial domain basis vector corresponding to the $n^{th}$ reference signal resource, and satisfies $\varphi(i, n) < 2L_{max} \cdot X$; $X$ is an integer greater than or equal to $N$; $L_{max}$ is greater than or equal to a maximum value of quantities of spatial domain basis vectors respectively corresponding to the N reference signal resources; $\pi(f)$ represents a first remapping function, which is used to remap a sequence number or an index of a frequency domain basis vector selected for the $l^{th}$ transmission layer and the $n^{th}$ reference signal resource; and Pri($l, i, f, n$) represents a priority of a coefficient corresponding to a given combination of the $l^{th}$ transmission layer, the $n^{th}$ reference signal resource, the $i^{th}$ spatial domain basis vector, and the $f^{th}$ frequency domain basis vector, namely, a coefficient corresponding to the $i^{th}$ spatial domain basis vector and the $f^{th}$ frequency domain basis vector of the $n^{th}$ reference signal resource corresponding to the $l^{th}$ transmission layer.

It should be noted that priorities of the foregoing $v \sum_{n=1}^{N} 2L_n M_v$ or $v \sum_{n=1}^{N} K_{1,n} M_v$ linear combination coefficients also satisfy the foregoing priority function Pri($l, i, f, n$) = $2L_{max} \cdot X \cdot v \cdot \pi(f) + v \cdot \varphi(i, n) + l$.

Optionally, sequence numbers of the spatial domain basis vectors are internal rankings of 2L spatial domain basis vectors corresponding to two polarization directions. Usually, the sequence numbers are determined based on index values and polarization direction numbers of $L_n$ selected spatial domain basis vectors in a spatial domain basis vector universal set. Sequence numbers of the selected reference signal ports are internal rankings of the $K_{1,n}$ selected reference channel ports, and are usually determined in ascending order of numbers of the selected reference channel ports. Sequence numbers of the frequency domain basis vectors are internal rankings of the $M_v$ selected frequency domain basis vectors, and are usually determined based on index sizes of the selected frequency domain basis vectors in a frequency domain basis vector universal set.

Optionally, when the N reference signal resources are reference signal resources selected by the UE from the plurality of reference signal resources (for example, N0) configured by the base station, $n$ may be sequence numbers of the N reference signal resources in the N0 reference signal resources configured by the base station, and the nth reference signal resource represents an nth reference signal resource in the N0 reference signal resources. In this case, a value range of n may be *1, 2, ... , N*0 or 0, 1, ..., *N*0 - 1. For example, if *N*0 is 4, sequence numbers of the plurality of reference signal resources configured by the base station may be 1, 2, 3, and 4; and if N is 3, the UE selects, from the four reference signal resources, three reference signal resources whose sequence numbers are respectively 1, 3, and 4, where n may be set to 1, 3, and 4, in other words, the reference signal resource whose sequence number is 3 is a 2nd reference signal resource in the three reference signal resources selected by the UE. Alternatively, *n* may be internal sequence numbers of the N reference signal resources, and represents a ranking of the reference signal resource in the N reference signal resources. In this case, $n$ = 1, 2, ..., $N$. For example, in the foregoing example, the UE selects the three reference signal resources whose sequence numbers are respectively 1, 3, and 4 (namely, sequence numbers in the N0 reference signal resources, which are referred to as original sequence numbers below), and internal sequence numbers of the three reference signal resources are 1, 2, and 3 (namely, sequence numbers in the *N* reference signal resources, which are referred to as new sequence numbers below), where a new sequence number of the reference signal resource whose original sequence number is 1 is 1, a new sequence number of the reference signal resource whose original sequence number is 3 is 2, and a new sequence number of the reference signal resource whose original sequence number is 4 is 3. Alternatively, *n* may be sequence numbers obtained by sorting, according to a rule (for example, a second preset rule below), the N reference signal resources (for example, CSI-RS resources) selected by the UE. In this case, $n$ = 1, 2, ..., $N$. It may be understood that a value of the sequence number *n* may start from 1, or may start from 0, that is, $n$ = 0, 1, ... , $N$ - 1. Certainly, n may alternatively be set to any value, provided that the N reference signal resources can be distinguished. This is not specifically limited herein. For ease of understanding, n = 1, 2, ... , *N* or n = 0, 1, ... , *N* - 1 is used as an example for description in embodiments of this application, but should not constitute any limitation on embodiments of this application.

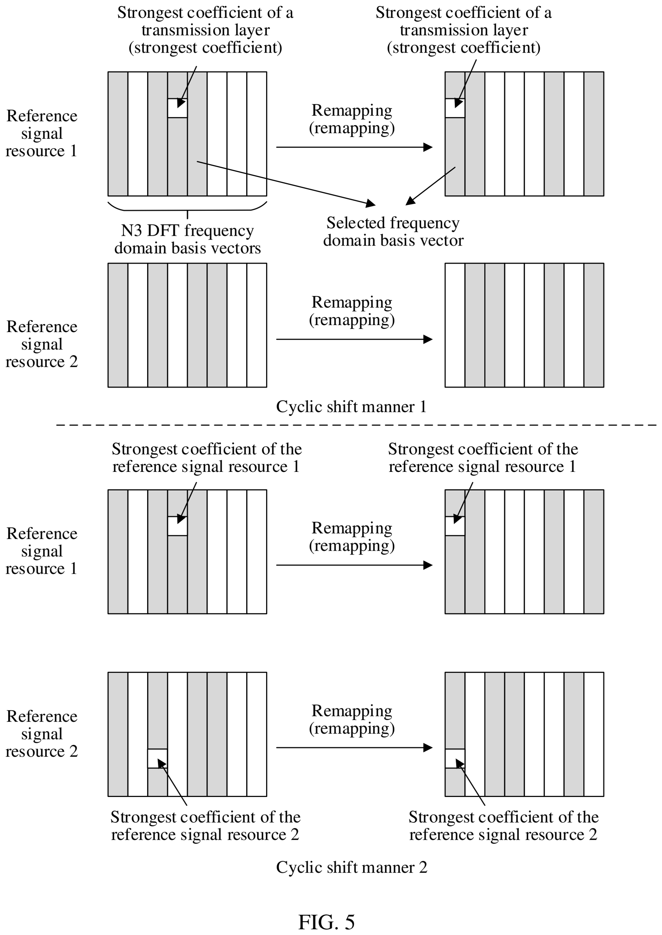

In a possible implementation, for the Rel-16 eType-II-based multi-station codebook, when calculating the priority of the coefficient corresponding to the given combination ($l, i, f, n$), the UE may first remap, by using the first remapping function $\pi(f)$, the sequence number or the index of the frequency domain basis vector selected for the $l^{th}$ transmission layer and the nth reference signal resource. FIG. 5 is a diagram of frequency domain basis vector cyclic shift according to an embodiment of this application. A UE may perform overall cyclic shift on a frequency domain basis vector selected for each reference signal resource corresponding to each transmission layer (a cyclic shift manner 1), so that a frequency domain basis vector corresponding to a strongest coefficient of each transmission layer is always located at a position of a $1^{st}$ frequency domain basis vector (a corresponding index may be 0); or may perform cyclic shift on a frequency domain basis vector selected for each reference signal resource corresponding to each transmission layer (a cyclic shift manner 2), so that a frequency domain basis vector corresponding to a strongest coefficient of each reference signal resource corresponding to each transmission layer is always located at a position of a $1^{st}$ frequency domain basis vector (a corresponding index may be 0) of the reference signal resource. Usually, coefficients corresponding to frequency domain basis vectors adjacent to two sides of a frequency domain basis vector corresponding to a strongest coefficient have large amplitudes and strong energy. Therefore, the UE may preferentially report the coefficient corresponding to the frequency domain basis vector (whose index is 0) corresponding to the strongest coefficient, and then report the coefficients corresponding to the frequency domain basis vectors on the two sides of the frequency domain basis vector corresponding to the strongest coefficient.

For example, a value range of the first remapping function $\pi(f)$ is 0 to $N_3$ - 1, where $N_3$ is a quantity of frequency domain units of a PMI. A value range of the sequence number of the frequency domain basis vector is 0 to $M_v$ - 1, and a value range of the index of the frequency domain basis vector is 0 to $N_3$ - 1, because the frequency domain basis vector is usually selected from the $N_3$ frequency domain units. Optionally, the first remapping function $\pi(f)$ may be defined with reference to the following manners:

(1) $\pi(f) = \min\ \left(2 \cdot k_{3,l,n}^{(f)}, 2 \cdot \left(N_3 - k_{3,l,n}^{(f)}\right) - 1\right)$, where $k_{3,l,n}^{(f)}$ represents an index, in the frequency domain basis vector universal set, of the $f$th frequency domain basis vector of the $n$th reference signal resource corresponding to the $l$th transmission layer. $k_{3,l,n}^{(f)}$ may be a remapped index after the frequency domain basis vector is cyclically shifted, that is, $k_{3,l,n}^{(f)} = \left(k_{3,l,n}^{(f)} - k_{3,l,n^*}^{(f_l^*)}\right)\ \mathrm{mod}\ N_3$, and this corresponds to the cyclic shift manner 1. $k_{3,l,n^*}^{(f_l^*)}$ represents an original index of a frequency domain basis vector corresponding to a strongest coefficient in the foregoing N reference signal resources corresponding to the $l$th transmission layer, namely, an index before the cyclic shift, and $k_{3,l,n^*}^{(f_l^*)} = 0$ after the cyclic shift. $f_l^*$ represents a sequence number of the frequency domain basis vector corresponding to the strongest coefficient of the $l$th transmission layer. $n^*$ represents a reference signal resource sequence number corresponding to the strongest coefficient of the $l$th transmission layer. Correspondingly, for each reference signal resource corresponding to each transmission layer, remapping may be performed for $f$, that is, $f = (f - f_l^*)\ \mathrm{mod}\ M_v$, so that a frequency domain basis vector sequence number corresponding to the strongest coefficient of each transmission layer is $f_l^* = 0$.

(2) $\pi(f) = \min\ \left(2 \cdot k_{3,l,n}^{(f)}, 2 \cdot \left(N_3 - k_{3,l,n}^{(f)}\right) - 1\right)$, where $k_{3,l,n}^{(f)}$ represents an index, in the frequency domain basis vector universal set, of the $f$th frequency domain basis vector of the $n$th reference signal resource corresponding to the $l$th transmission layer. $k_{3,l,n}^{(f)}$ may be a remapped index after the frequency domain basis vector is cyclically shifted, that is, $k_{3,l,n}^{(f)} = \left(k_{3,l,n}^{(f)} - k_{3,l,n}^{(f_{l,n}^*)}\right)\ \mathrm{mod}\ N_3$, and this corresponds to the cyclic shift manner 2. $k_{3,l,n}^{(f_{l,n}^*)}$ represents an original index of a frequency domain basis vector corresponding to a strongest coefficient of the $n$th reference signal resources corresponding to the $l$th transmission layer, namely, an index before the cyclic shift, and $k_{3,l,n}^{(f_{l,n}^*)} = 0$ after the cyclic shift. $f_{l,n}^*$ represents a sequence number of the frequency domain basis vector corresponding to the strongest coefficient of the $n$th reference signal resources corresponding to the $l$th transmission layer. Correspondingly, for each reference signal resource corresponding to each transmission layer, remapping may be performed for $f$, that is, $f = \left(f - f_{l,n}^*\right)\ \mathrm{mod}\ M_v$, so that a frequency domain basis vector sequence number corresponding to a strongest coefficient of an $n$th reference signal resource corresponding to each transmission layer is $f_{l,n}^* = 0$.

(3)

$$\pi(f) = f.$$

It should be noted that, for the foregoing manner (1), $\pi(f)$ may also be represented as $\pi_l(f)$. When the transmission layer sequence number $l$ is set to different values, values of $\pi(f)$ may be different, and for different reference signal resources, values of $\pi(f)$ are the same. For the foregoing manner (2), $\pi(f)$ may be represented as $\pi_{l,n}(f)$. When a combination of the transmission layer sequence number $l$ and the reference signal resource sequence number n are set to different values, values of $\pi(f)$ may be different.

When the reference signal resource (for example, CSI-RS resource) dimension and the spatial domain basis vector (or reference signal port) dimension are combined, optionally, a mapping relationship $G(n)$ of reference signal resource rankings is first introduced, and $G(n)$ indicates a sequence number obtained by sorting the N reference signal resources according to a rule (for example, the second preset rule below). A higher priority of the reference signal resource indicates a smaller value of corresponding $G(n)$. Optionally, a value range of $G(n)$ may be 0 to N-1 or 1 to N, or may be the same as the value range of n.

For example, the priorities of the N reference signal resources may be determined according to any one or more items of the following second preset rule:

Rule 2.1: A larger quantity of spatial domain basis vectors or reference signal ports that correspond to the reference signal resource indicates a higher priority of the reference signal resource. For example, a priority of each reference signal resource may be determined based on a quantity $L_n$ of spatial domain basis vectors corresponding to the reference signal resource. A larger value of $L_n$ indicates a smaller sequence number $G(n)$ of a corresponding sorted reference signal resource, that is, a higher priority of the reference signal resource. If values of $L_n$ are the same, sorting may be performed based on original sequence numbers of the reference signal resources. For example, if values of quantities $L_1$, $L_2$, and $L_3$ of spatial domain basis vectors of three reference signal resources (corresponding to a TRP 1, a TRP 2, and a TRP 3) are 1, 3, and 2 respectively, the three reference signal resources may be correspondingly sorted as 2, 0, and 1, in other words, a priority ranking of the TRP 2 is the highest, and a priority ranking of the TRP 1 is the lowest.

It should be noted that, because each spatial domain basis vector quantity/reference signal port quantity used to determine the priority of the reference signal resource in the rule 1 is configured by a network device or reported by a terminal device, the UE may not need to additionally report priority rankings of the plurality of reference signal resources.

Rule 2.2: For each transmission layer, a larger amplitude of a strongest coefficient corresponding to a reference signal resource corresponding to the transmission layer indicates a higher priority of the reference signal resource corresponding to the transmission layer. In other words, a priority of each reference signal resource corresponding to each transmission layer may be determined based on an amplitude of a strongest coefficient of the reference signal resource corresponding to the transmission layer. A larger amplitude of the strongest coefficient indicates a higher ranking of the reference signal resource corresponding to the transmission layer. In this case, the priority ranking of the reference signal resource is further related to a sequence number of the transmission layer. In this case, $G(n)$ may be written as $G_l(n)$, indicating that values of $G(n)$ are different for different transmission layers, in other words, priority rankings of reference signal resources corresponding to different transmission layers are different. It should be noted that, for this manner, a position for placing amplitude indication information of the strongest coefficient of each reference signal resource corresponding to each transmission layer in UCI may be moved more forward, to a position before position indication information and amplitude/phase indication information of another coefficient. Alternatively, only an amplitude of a strongest coefficient of each reference signal resource corresponding to a 1st transmission layer may be used as a basis for determining a priority of the reference signal resource. In this case, priority rankings of reference signal resources corresponding to all transmission layers are the same. In this case, only an amplitude position of amplitude indication information of the strongest coefficient of each reference signal resource corresponding to the 1st transmission layer in UCI needs to be moved more forward, to a position before position indication information and amplitude/phase indication information of another coefficient.

Rule 2.3: The UE determines a priority ranking of the reference signal resource in a specific manner, and adds a reporting quantity to the CSI, to indicate the priority ranking of the reference signal resource, so as to ensure policy consistency between the UE and the base station. A determining manner is not limited herein. For example, the priority ranking may be determined based on a signal strength of a reference signal corresponding to the reference signal resource. For example, a higher signal strength of the reference signal corresponding to the reference signal resource indicates a higher priority of the reference signal resource. In other words, the UE may determine the priority of the reference signal resource based on the signal strength of the reference signal, and a reference signal resource for a stronger signal is ranked higher, in other words, a priority of the reference signal resource is higher.

Rule 2.4: The priority of the reference signal resource is directly determined based on a sequence number of the reference signal resource. A smaller sequence number of the reference sequence number resource indicates a higher priority and a smaller value of corresponding $G(n)$. In a possible implementation, $G(n) = n$.

It should be noted that, if $n$ in the priority Pri($l, i, f, n$) is defined as a sequence number obtained by sorting, according to a rule, the N reference signal resources selected by the UE, $G(n) = n$.

Optionally, after the priority ranking of the reference signal resource (for example, the CSI-RS resource) is determined, for a priority design principle in which the reference signal resource dimension and the spatial domain basis vector dimension are combined and a corresponding definition of $\varphi(i, n)$, refer to one or more of the following manners.

Manner 1: A sequence number of the priority ranking of the reference signal resource is given, and priorities of coefficient sets corresponding to spatial domain basis vectors are defined in ascending order of sequence numbers of the spatial domain basis vectors. For example, $\varphi(i, n) = 2L_{max} \cdot G(n) + i$, to be specific, if the priority of the $n_1$th reference signal resource is higher than the priority of the $n_2$th reference signal resource, that is, $G(n_1) < G(n_2)$, the priority of the coefficient associated with any spatial domain basis vector corresponding to the $n_1$th reference signal resource is higher than the priority of the coefficient associated with any spatial domain basis vector corresponding to the $n_2$th reference signal resource. In addition, for each reference signal resource, a smaller sequence number of a spatial domain basis vector indicates a higher priority of a coefficient associated with the spatial domain basis vector. In other words, for the $n^{th}$ reference signal resource, if sequence numbers of two spatial domain basis vectors satisfy $i_1 < i_2$, $\varphi(i_1, n) < \varphi(i_2, n)$.

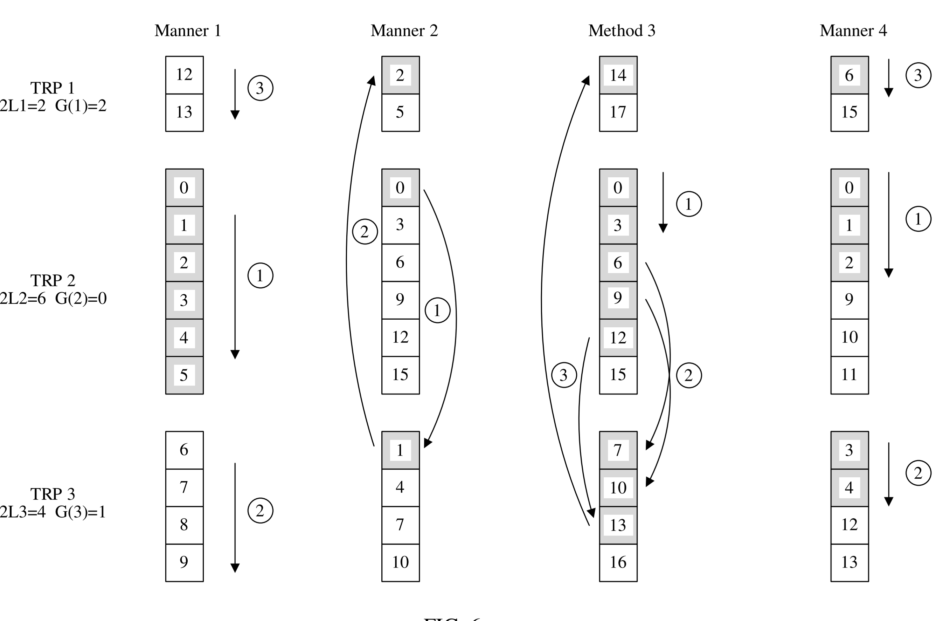

Refer to illustrations of a manner 1 in FIG. 6. FIG. 6 is a diagram of a priority definition in which a spatial domain and a reference signal resource are combined according to an embodiment of this application. For example, N is 3, and n=1, 2, 3. Three reference signal resources may correspond to three TRPs (for example, a TRP 1, a TRP 2, and a TRP 3), and a priority of the TRP is determined based on a quantity of corresponding spatial domain basis vectors or reference signal ports. Therefore, a priority of the TRP 2 is the highest ($G(2) = 0$), a priority of the TRP 3 is the second highest ($G(3) = 1$), and a priority of the TRP 1 is the lowest ($G(1) = 2$). As shown in the illustrations of the manner 1 in FIG. 6, a priority of a coefficient set associated with a spatial domain basis vector or a reference signal port that corresponds to the TRP 2 is higher than a priority of a coefficient set associated with a spatial domain basis vector or a reference signal port that correspond to the TRP 3. In addition, for the TRP 1, a smaller sequence number of a spatial domain basis vector indicates a higher priority of a coefficient associated with the spatial domain basis vector. 0, 1, 2, 3, 4, 5, 6, 7, 8, 9, 12, and 13 represent results of priorities $\varphi(i, n)$ of coefficient sets associated with $(i, n)$ when values of $(i, n)$ are different, and $\varphi(i, n) = 2L_{max} \cdot G(n) + i$. For example, when $i$ is 0 and $n$ is 2, $\varphi(0, 2) = 2L_{max} \cdot G(2) + 0$, where $G(2) = 0$, and therefore, $\varphi(0, 2)=0$. For another example, when $i$ is 0 and $n$ is 1, $\varphi(0, 1) = 2L_{max} \cdot G(1) + 0$, where $G(1) = 2$, and therefore, $\varphi(0, 1)=12$.

Manner 2: The sequence number of the spatial domain basis vector is given, and priorities of coefficient sets corresponding to the spatial domain basis vector are defined in ascending order of the sequence numbers of the reference signal resources. For example, $\varphi(i, n) = N \cdot i + G(n)$, to be specific, if the priority of the $n_1^{th}$ reference signal resource is higher than the priority of the $n_2^{th}$ reference signal resource, that is, $G(n_1) < G(n_2)$, for each spatial domain basis vector, $\varphi(i, n_1) < \varphi(i, n_2)$. In addition, for each reference signal resource, a smaller sequence number of a spatial domain basis vector indicates a higher priority of a coefficient associated with the spatial domain basis vector. In other words, for the $n^{th}$ reference signal resource, if sequence numbers of two spatial domain basis vectors satisfy $i_1 < i_2$, $\varphi(i_1, n) < \varphi(i_2, n)$. As shown in illustrations of a manner 2 in FIG. 6, for example, n=1, 2, 3. A priority of a TRP 2 is the highest ($G(2) = 0$), a priority of a TRP 3 is the second highest ($G(3) = 1$), and a priority of a TRP 1 is the lowest ($G(1) = 2$). In this case, for a given number of a spatial domain basis vector, a coefficient corresponding to the TRP 2 may be preferentially reported, then a coefficient corresponding to the TRP 3 is reported, and finally, a coefficient corresponding to the TRP 1 is reported. 0, 1, 2, 3, 4, 5, 6, 7, 9, 10, 12, and 15 represent results of priorities $\varphi(i, n)$ of coefficient sets associated with $(i, n)$ when values of $(i, n)$ are different, and $\varphi(i, n) = N \cdot i + G(n)$. For example, when $i$ is 0 and $n$ is 2, $\varphi(0, 2) = N \cdot 0 + G(2)$, where $G(2) = 0$, and therefore, $\varphi(0, 2)=0$. For another example, when $i$ is 0 and $n$ is 1, $\varphi(0, 1) = N \cdot 0 + G(1)$, where $G(1) = 2$, and therefore, $\varphi(0, 1)=2$.

Manner 3: The sequence number of the spatial domain basis vector is remapped, a remapped sequence number of the spatial domain basis vector is given, and priorities of coefficient sets corresponding to the spatial domain basis vector are defined in ascending order of the sequence numbers of the reference signal resources. For example, a sequence number of each spatial domain basis vector may be remapped first. For example, $\varphi(i, n) = N \cdot \phi_n(i) + G(n)$, where $\phi_n(i)$ represents a remapping function, and is used to remap the sequence number of the spatial domain basis vector. Optionally, if the priority of the $n_1^{th}$ reference signal resource is higher than the priority of the $n_2^{th}$ reference signal resource, that is, $G(n_1) < G(n_2)$, for spatial domain basis vectors with a same remapping value, that is, when $\phi_{n1}(i_1) = \phi_{n2}(i_2)$, $\varphi(i_1, n_1) < \varphi(i_2, n_2)$. In addition, for each reference signal resource, a smaller result of the remapping function $\phi_n(i)$ corresponding to a spatial domain basis vector indicates a higher priority of a coefficient associated with the spatial domain basis vector. In other words, for the $n^{th}$ reference signal resource, if $\phi_n(i_1) < \phi_n(i_2)$, $\varphi(i_1, n) < \varphi(i_2, n)$. $\phi_n(i)$ satisfies $\phi_n(i) < 2L_{max}$, for example, $\phi_n(i) = i + 2L_{max} - 2L_n$, that is, $\varphi(i, n) = N \cdot (i + 2L_{max} - 2L_n) + G(n)$. In this case, it can be ensured that priorities of coefficient sets corresponding to some spatial domain basis vectors, with smaller sequence numbers, of a reference signal resource with a larger value of $L_n$ are higher than a priority of a coefficient corresponding to a spatial domain basis vector of another reference signal resource.

Refer to illustrations of a manner 3 in FIG. 6. For example, n=1, 2, 3. A quantity of spatial domain basis vectors corresponding to a TRP 2 is the largest (for example, 6), a quantity of spatial domain basis vectors corresponding to a TRP 3 is the second largest (for example, 4), and a quantity of spatial domain basis vectors corresponding to a TRP 1 is the smallest (for example, 2). Therefore, coefficient sets corresponding to some spatial domain basis vectors corresponding to the TRP 2 (for example, coefficient sets corresponding to spatial domain basis vectors for which values of $\varphi(i, n)$ are set to 0 and 3) may be preferentially reported, in other words, a coefficient set corresponding to a $0^{th}$ spatial domain basis vector of a $2^{nd}$ reference signal resource has a highest priority (corresponding to $\varphi(0, 2) = 0$), and a coefficient set corresponding to a $1^{st}$ spatial domain basis vector of the $2^{nd}$ reference signal resource has a second highest priority (corresponding to $\varphi(1, 2) = 3$). In this case, for remaining four spatial domain basis vectors of the TRP 2 and remaining four spatial domain basis vectors of the TRP 3, priorities of coefficient sets of spatial domain basis vectors with same remapped sequence numbers may be determined based on rankings of reference signal resources (namely, TRPs). For example, a coefficient set corresponding to a spatial domain basis vector, with $\varphi(2, 2) = 6$, corresponding to the TRP 2 is preferentially reported, and then a coefficient set corresponding to a spatial domain basis vector, with $\varphi(0, 3) = 7$, corresponding to the TRP 3 is reported. 0, 3, 6, 7, 9, 10, 12, 13, 14, 15, 16, and 17 represent results of priorities $\varphi(i, n)$ of coefficient sets associated with $(i, n)$ when values of $(i, n)$ are different, and $\varphi(i, n) = N \cdot (i + 2L_{max} - 2L_n) + G(n)$. For example, when $i$ is 0 and $n$ is 2, $\varphi(0, 2) = N \cdot 0$

+ $G(2)$, where $G(2) = 0$, and therefore, $\varphi(0, 2)=0$. For another example, when $i$ is 1 and $n$ is 2, $\varphi(0, 1) = N \cdot (1 + 2L_{max} - 2L_n) + G(2)$, where $G(2) = 0$, and therefore, $\varphi(1, 2)=3$. It should be noted that, when $\phi_n(i) = i$, $\varphi(i, n) = N \cdot \phi_n(i) + G(n)$ satisfies the manner 2, that is, $\varphi(i, n) = N \cdot i + G(n)$.

Manner 4: A priority of a coefficient set corresponding to a spatial domain basis vector of the reference signal resource is determined based on a proportion of a quantity $L_n$ of spatial domain basis vectors of the reference signal resource. For example, spatial domain basis vectors corresponding to each reference signal resource may be grouped into Z groups in ascending order of sequence numbers. In other words, a smaller group number indicates a smaller spatial domain basis vector sequence number in the group. A quantity of spatial domain basis vectors included in one or more spatial domain basis vector groups corresponding to each reference signal resource is $Q_n$, and $Z \cdot Q_n = 2L_n$ is satisfied. Optionally, for a given group number, a priority of a coefficient associated with a spatial domain basis vector corresponding to a reference signal resource with a higher priority is higher. For each reference signal resource, a priority of a coefficient set associated with a spatial domain basis vector with a smaller group number is higher. For a same spatial domain basis vector group, a smaller sequence number of a spatial domain basis vector indicates a higher priority of a coefficient set associated with the spatial domain basis vector. For example, $\varphi(i, n) = N \cdot a_{max} \cdot \left\lfloor \frac{i}{a_n} \right\rfloor + G(n) \cdot a_{max} + i \bmod a_n$, where $a_n$ is a positive integer greater than or equal to 1 and is in direct proportion to a value of $L_n$, a greatest common divisor of all $a_n$ is 1, and $a_{max}$ is the maximum value of all $a_n$.

Refer to the illustrations of the manner 4 in FIG. 6. For example, n=1, 2, 3. Spatial domain basis vectors corresponding to each TRP (or CSI-RS resource) may be grouped into two groups in ascending order of sequence numbers. For example, spatial domain basis vectors for which values of $\varphi(i, n)$ are set to 6 and that correspond to a TRP 1 are as one group, and spatial domain basis vectors for which values of $\varphi(i, n)$ are set to 15 and that correspond to the TRP 1 are as one group; spatial domain basis vectors for which values of $\varphi(i, n)$ are set to 0, 1, and 2 and that correspond to a TRP 2 are as one group, and spatial domain basis vectors for which values of $\varphi(i, n)$ are set to 9, 10, and 11 and that correspond to the TRP 2 are as one group; and spatial domain basis vectors for which values of $\varphi(i, n)$ are set to 3 and 4 and that correspond to a TRP 3 are as one group, and spatial domain basis vectors for which values of $\varphi(i, n)$ are set to 12 and 13 and that correspond to the TRP 3 are as one group. A coefficient set corresponding to the group of spatial domain basis vectors for which values of $\varphi(i, n)$ are set to 0, 1, and 2 and that correspond to the TRP 2 may be preferentially reported, then a coefficient set corresponding to the group of spatial domain basis vectors for which values of $\varphi(i, n)$ are set to 3 and 4 and that correspond to the TRP 3 may be reported, and the rest can be deduced by analogy.

It may be understood that, for the foregoing manner 3 and manner 4, the value of $\varphi(i, n)$ is related to a quantity of spatial domain basis vectors corresponding to each reference signal resource. Optionally, the comparison of the coefficient priorities in any one of the foregoing four manners satisfies the following premise: During comparison, sequence numbers of frequency domain basis vectors associated with two reference signal resources are the same or cyclic shifted indexes of frequency domain basis vectors associated with two reference signal resources are the same.

Optionally, $\varphi(i, n)$ satisfies $\varphi(i, n) < 2L_{max} \cdot X$. A value of X is related to a value of a priority ranking G(n) of a reference signal resource. X is greater than a maximum value of values of G(n) corresponding to all the reference signal resources. In this way, it can be ensured that when each of $l, i, f, n$ in different given sequence number combinations $(l, i, f, n)$ is set to different values, priority values Pri($l, i, f, n$) of coefficients corresponding to all the combinations are different. For example, when a value range of G(n) is 0 to N-1, X may be set to N; or when a value range of G(n) is 1 to N, X may be set to N+1.

For the foregoing manner in which the frequency domain dimension is used as a preferentially considered dimension for an example in which the Rel-16 eType-II-based multi-station codebook is used, that is Pri($l, i, f, n$) = $2L_{max} \cdot X \cdot \upsilon \cdot \pi(f) + v \cdot \varphi(i, n) + l$. A value of Pri($l, i, f, n$) is described by using one transmission layer (v=1) and two reference signal resources (N=2) as an example. It is assumed that a value of a reference signal resource sequence number is n=1 or 2, and each reference signal resource corresponds to two frequency domain basis vectors. A quantity of spatial domain basis vectors of a 1st reference signal resource is L1=1, and a quantity of spatial domain basis vectors of a 2nd reference signal resource is L2=2. In this case, a value of Lmax may be 2. For example, if priority rankings of the reference signal resources are determined based on the quantities of spatial domain basis vectors, G(1)=1 and G(2)=0. In this case, the value of X may be 2. Cyclically shifted index numbers of a frequency domain basis vector corresponding to the 1st reference signal resource corresponding to the 1st transmission layer are 0 and 2, in other words, for the 1st reference signal resource corresponding to the 1st transmission layer, $\pi(0) = 0$ and $\pi(1) = 2$; and cyclically shifted index numbers of a frequency domain basis vector corresponding to the 2nd reference signal resource corresponding to the 1st transmission layer are 1 and 4, in other words, for the 2nd reference signal resource corresponding to the 1st transmission layer, $\pi(0) = 1$ and $\pi(1) = 4$. For example, if $\varphi(i, n) = 2L_{max} \cdot G(n) + i$, $\varphi(0, 1) = 4$, $\varphi(1, 1) = 5$, $\varphi(0, 2) = 0$, $\varphi(1, 2) = 1$, $\varphi(2, 2) = 2$, and $\varphi(3, 2) = 3$. In this case, values corresponding to different sequence number combinations $(l, i, f, n)$ are determined according to Pri($l, i, f, n$) = $2L_{max} \cdot X \cdot \upsilon \cdot \pi(f) + v \cdot \varphi(i, n) + l$, to obtain Pri(1, 0, 0, 1) = 5, Pri(1, 1, 0, 1) = 6, Pri(1, 0, 0, 2) = 1, Pri(1, 1, 0, 2) = 2, Pri(1, 2, 0, 2) = 3, Pri(1, 3, 0, 2) = 4, Pri(1, 0, 1, 1) = 13, Pri(1, 1, 1, 1) = 14, Pri(1, 0, 1, 2) = 9, Pri(1, 1, 1, 2) = 10, Pri(1, 2, 1, 2) = 11, and Pri(1, 3, 1, 2) = 12, so as to determine priority rankings of different corresponding coefficients. It may be understood that, for a value calculation process of a priority function in the following embodiments, refer to the value calculation process of the foregoing function Pri($l, i, f, n$) = $2L_{max} \cdot X \cdot \upsilon \cdot \pi(f) + v \cdot \varphi(i,n) + l$.

The foregoing uses the Rel-16 eType-II-based multi-station codebook as an example to describe a manner in which the frequency domain dimension is used as a preferentially considered dimension when the coefficient reporting priority of the multi-station codebook is defined. Similarly, for the Rel-17 FeType-II-based multi-station codebook, a sequence number combination ($l, i, f, n$) may be given. A priority of a coefficient corresponding to the combination is determined based on the priority function Pri($l, i, f, n$), and priorities of amplitude, phase, and position indication information of the coefficient are also determined accordingly. A smaller value of Pri($l, i, f, n$) indicates that the amplitude, phase, and position indication information of the coefficient corresponding to the combination have higher priorities, and are preferentially reported. For ease of description, a coefficient corresponding to an $l$th transmission layer, an $n$th reference signal resource, an $i$th spatial domain basis vector, and an $f$th frequency domain basis vector that are used to determine a precoding matrix is represented as $C_{l,i,f,n}$. Specifically, a priority function of any coefficient $C_{l,i,f,n}$ in the M coefficients satisfies:

$$\mathrm{Pri}(l, i, f, n) = K_{1,max} \cdot \upsilon \cdot X \cdot f + v \cdot \varphi(i, n) + l,$$

where $l$ represents a transmission layer sequence number, and $l$ is set to 1, 2, ... , $\upsilon$; $\upsilon$ represents a quantity of transmission layers; $i$ represents a sequence number of a reference signal port, and $i$ is set to 0,1, ..., $K_{1,n}$ - 1, to be specific, a reference signal port corresponding to the coefficient $C_{l,i,f,n}$ is an $i$th reference signal port of $K_{1,n}$ selected reference signal ports corresponding to an $n$th reference signal resource; $K_{1,n}$ represents a quantity of selected reference signal ports corresponding to the $n$th reference signal resource; $f$ represents a frequency domain basis vector sequence number, and $f$ is set to $0, 1, ..., M_v$ - 1, to be specific, a frequency domain basis vector corresponding to the coefficient $C_{l,i,f,n}$ is an $f$th frequency domain basis vector of $M_v$ selected frequency domain basis vectors corresponding to the $l$th transmission layer and the $n$th reference signal resource; $M_v$ represents a quantity of frequency domain basis vectors; $n$ represents sequence numbers of the N reference signal resources, where optionally, $n$ is set to 1, 2, ... , $N$, $n$ is set to 0, 1, ... ,$N$ - 1, or $n$ may be set to another value. $\varphi(i, n) < 2L_{max} \cdot X$ represents a priority of a coefficient set associated with the $i$th reference signal port corresponding to the $n$th reference signal resource; $K_{1,max}$ is greater than or equal to a maximum value of quantities of selected reference signal ports respectively corresponding to the foregoing N reference signal resources; and Pri($l, i, f, n$) represents a priority of a coefficient corresponding to a given combination of the $l$th transmission layer, the $n$th reference signal resource, the $i$th reference signal port, and the $f$th frequency domain basis vector.

It should be noted that priorities of the foregoing $v \sum_{n=1}^{N} 2L_n M_v$ or $v \sum_{n=1}^{N} K_{1,n} M_v$ linear combination coefficients also satisfy the foregoing priority function Pri($l, i, f, n$) = $K_{1,max} \cdot \upsilon \cdot X \cdot f + v \cdot \varphi(i, n) + l$.

For the sequence number of the spatial domain basis vector/reference signal port, the sequence number of the frequency domain basis vector, and the sequence number of the reference signal resource (the value of $n$), refer to corresponding descriptions of the foregoing function Pri($l, i, f, n$) = $2L_{max} \cdot X \cdot \upsilon \cdot \pi(f) + v \cdot \varphi(i, n) + l$. Details are not described herein again.

It may be understood that a priority definition manner of the Rel-17 FeType-II-based multi-station codebook may be similar to that of the Rel-16 eType-II-based multi-station codebook. A main difference between them is as follows: In the priority definition manner of the Rel-17 FeType-II-based multi-station codebook, the spatial domain basis vector sequence number is replaced with the selected reference signal port sequence number; in addition, in the priority definition manner of the Rel-17 FeType-II-based multi-station codebook, because a quantity of frequency domain basis vectors is small, frequency domain permutation may not be performed. It should be noted that, in the priority definition manner of the Rel-17 FeType-II-based multi-station codebook, a definition of $\varphi(i, n)$ may be similar to that of the Rel-16 eType-II-based multi-station codebook, and $L_{max}$ and $L_n$ need to be correspondingly replaced with $K_{1,max}$ and $K_{1,n}$.

Optionally, when the reference signal resource (CSI-RS resource) dimension and the spatial domain basis vector (or reference signal port) dimension are combined, a mapping relationship $G(n)$ of reference signal resource priority rankings may be first introduced. A value range of $G(n)$ is the same as a value range of $n$, and may indicate a sequence number obtained by sorting the N reference signal resources according to a rule. If the reference signal resource has a higher priority, a value of corresponding $G(n)$ is smaller. For a rule of determining the priority rankings of the reference signal resources, refer to the foregoing rule of determining the priority rankings of the reference signal resources of the Rel-16 eType-II-based multi-station codebook.

Optionally, in the priority definition manner of the Rel-17 FeType-II-based multi-station codebook, after the priority rankings of the reference signal resources (for example, CSI-RS resources) are determined, for a priority design principle in which the reference signal resource dimension and the reference signal port dimension are combined a definition of corresponding $\varphi(i, n)$, refer to one or more of the foregoing priority definition manners of the Rel-16 eType-II-based multi-station codebook (for example, the manner 1, the manner 2, and the manner 4 shown in FIG. 6), and the spatial domain basis vector dimension is replaced with the reference signal port dimension.

For example, in the priority definition manner of the Rel-17 FeType-II-based multi-station codebook, $\varphi(i, n)$ may satisfy any one of the following formulas:

$$\varphi(i, n) = K_{1,max} \cdot G(n) + i,$$

where $G(n)$ represents a priority ranking of the $n^{th}$ reference signal resource in the N reference signal resources; $K_{1,max}$ is greater than or equal to the maximum value of the quantities of selected reference signal ports respectively corresponding to the N reference signal resources; $i$ represents the reference signal port sequence number, and $i$ is set to 0,1, ... , $K_{1,n}$ - 1; and $K_{1,n}$ represents the quantity of selected reference signal ports corresponding to the $n^{th}$ reference signal resource;

$$\varphi(i, n) = N \cdot i + G(n),$$

where $G(n)$ represents a priority ranking of the $n^{th}$ reference signal resource in the N reference signal resources; $i$ represents the reference signal port sequence number, and $i$ is set to 0,1, ... , $K_{1,n}$ - 1; and $K_{1,n}$ represents the quantity of selected reference signal ports corresponding to the $n^{th}$ reference signal resource;

$$\varphi(i, n) = N \cdot \phi_n(i) + G(n),$$

where $G(n)$ represents a priority ranking of the $n^{th}$ reference signal resource in the N reference signal resources; $i$ represents the reference signal port sequence number, and $i$ is set to 0, 1, ... , $K_{1,n}$ - 1; $K_{1,n}$ represents the quantity of selected reference signal ports corresponding to the $n^{th}$ reference signal resource; and $\phi_n(i) = i$ or $\phi_n(i) = i + K_{1,max} - K_{1,n}$, where $\phi_n(i)$ represents a third remapping function, used to remap the reference signal port sequence number; or

$$\varphi(i, n) = N \cdot a_{max} \cdot \left\lfloor \frac{i}{a_n} \right\rfloor + G(n) \cdot a_{max} + i \bmod a_n,$$

where $a_n$ is a positive integer greater than or equal to 1 and is in direct proportion to a value of $K_{1,n}$, and a greatest common divisor of all $a_n$ is 1; $i$ represents the reference signal port sequence number, and $i$ is set to 0,1, ... , $K_{1,n}$ - 1; $K_{1,n}$ represents the quantity of selected reference signal ports corresponding to the $n^{th}$ reference signal resource; and $a_{max}$ is a maximum value of all $a_n$.

In a possible implementation, when the coefficient reporting priority of the multi-station codebook is defined, in addition to the foregoing manner in which the frequency domain dimension is used as a preferentially considered dimension, the reference signal resource dimension may also be used as a preferentially considered dimension. In other words, if the priority of the $n_1^{th}$ reference signal resource in the N reference signal resources is higher than the priority of the $n_2^{th}$ reference signal resource in the N reference signal resources, the priority of any coefficient associated with the $n_1^{th}$ reference signal resource is higher than the priority of any coefficient associated with the $n_2^{th}$ reference signal resource.

Optionally, in a possible implementation, for priority grouping for CSI reporting, amplitude, phase, and coefficient indication information of the M coefficients may be grouped into N groups based on the priorities of the M coefficients, where N is equal to a quantity of reference signal resources that are selected and reported by the UE and that are used for CJT. A 1st group includes amplitude, phase, and position indication information of M1 coefficients corresponding to a reference signal resource with a highest priority, a 2nd group includes amplitude, phase, and position indication information of M2 coefficients corresponding to a reference signal resource with a second highest priority, and the rest can be deduced by analogy. In addition, in a same group, amplitude, phase, and coefficient position indication information of a coefficient with a higher priority are placed more forward in a CSI reporting resource. When the CSI reporting resource is limited, the UE may preferentially ignore a lower-priority group, and preferentially report indication information of a coefficient corresponding to a higher-priority group. Optionally, frequency domain basis vector indication information corresponding to all the reference signal resources and indication information of the coefficient corresponding to the reference signal resource with the highest priority may be placed together in the 1st group for reporting; or frequency domain basis vector indication information corresponding to each reference signal resource may be placed in a group in which a reporting coefficient corresponding to the reference signal resource is located for reporting.

Optionally, in another possible implementation of priority grouping for CSI reporting, amplitude, phase, and coefficient indication information of the M coefficients are grouped into two groups based on the priorities of the M coefficients. A 1st group includes amplitude, phase, and position indication information of M1 coefficients corresponding to a reference signal resource with a highest priority, a 2nd group includes amplitude, phase, and position indication information of remaining M-M1 coefficients, and the rest can be deduced by analogy. In addition, in a same group, amplitude, phase, and coefficient position indication information of a coefficient with a higher priority are placed more forward in a CSI reporting resource. When the CSI reporting resource is limited, the UE may preferentially ignore a lower-priority group, and preferentially report indication information of a coefficient corresponding to a higher-priority group. Optionally, frequency domain basis vector indication information corresponding to all the reference signal resources and indication information of the coefficient corresponding to the reference signal resource with the highest priority may be placed together in the 1st group for reporting; or frequency domain basis vector indication information corresponding to each reference signal resource may be placed in a group in which a reporting coefficient corresponding to the reference signal resource is located for reporting, in other words, frequency domain basis vector indication information corresponding to the reference signal resource with the highest priority is placed in the 1st group for reporting, and frequency domain basis vector indication information corresponding to the other reference signal resources is placed in the 2nd group for reporting. For frequency domain basis vector reference information in the 2nd group, fields thereof may be sorted based on reference signal resource sequence numbers, or may be sorted based on reference signal resource priorities.

For ease of understanding, the following also uses the Rel-16 eType-II-based multi-station codebook and the Rel-17 FeType-II-based multi-station codebook as examples for brief description.

Optionally, for the Rel-16 eType-II-based multi-station codebook, a sequence number combination ($l, i, f, n$) may be given. A priority of a coefficient corresponding to the combination is determined based on a priority function Pri($l, i, f, n$), and priorities of amplitude, phase, and position indication information of the coefficient are also determined accordingly. A smaller value of Pri($l, i, f, n$) indicates that the amplitude, phase, and position indication information of the coefficient corresponding to the combination have higher priorities, and are preferentially reported. For ease of description, a coefficient corresponding to an $l$th transmission layer, an $n$th reference signal resource, an $i$th spatial domain basis vector, and an $f$th frequency domain basis vector that are used to determine a precoding matrix is represented as $C_{l,i,f,n}$. Specifically, a priority of any coefficient $C_{l,i,f,n}$ in the M coefficients satisfies:

$$\mathrm{Pri}(l, i, f, n) = 2L_{max} \cdot v \cdot Y \cdot G(n) + 2L_{max} \cdot v \cdot \pi(f) + v \cdot i + l,$$

where $l$ represents a transmission layer sequence number, and $l$ is set to 1, 2, ... , $v$; $v$ represents a quantity of transmission layers; $i$ represents a spatial domain basis vector sequence number (for example, a spatial domain basis vector in an $i$th column in the spatial domain matrix 2 in FIG. 3b), in other words, a spatial domain basis vector corresponding to the coefficient $C_{l,i,f,n}$ is an $i$th spatial domain basis vector of $2L_n$ selected spatial domain basis vectors corresponding to the $n$th reference signal resource, and $i$ is set to 0,1, ... , $2L_n$ - 1; $L_n$ represents a quantity of spatial domain basis vectors in each polarization direction corresponding to the $n$th reference signal resource (two polarization directions share a same spatial domain basis vector); $f$ represents a frequency domain basis vector sequence number (for example, a frequency domain basis vector in an $f$th row or a conjugate transposition of the frequency domain basis vector in the $f$th row in the frequency domain matrix 2 in FIG. 3b), in other words, a frequency domain basis vector corresponding to the coefficient $C_{l,i,f,n}$ is an $f$th frequency domain basis vector of $M_v$ selected frequency domain basis vectors corresponding to the $l$th transmission layer and the $n$th reference signal resource, and $f$ is set to 0,1, ... , $M_v$ - 1; $M_v$ represents a quantity of frequency domain basis vectors, and $n$ represents sequence numbers of the N reference signal resources. Optionally, $n$ is set to 1, 2, ... , $N$, $n$ is set to 0, 1, ... , N - 1, or $n$ may be set to another value. $G(n)$ indicates a priority ranking of the $n$th reference signal resource in the N reference signal resources. Optionally, the mapping relationship $G(n)$ of the reference signal resource ranking may be determined with reference to any one or more items of the foregoing second preset rule. $L_{max}$ is an integer greater than or equal to a maximum value of quantities of spatial domain basis vectors respectively corresponding to the N reference signal resources; $Y$ is an integer greater than or equal to $M_v$, or $Y$ is an integer greater than or equal to $N_3$; $N_3$ is a quantity of subbands or a quantity of frequency domain units; $\pi(f)$ represents a first remapping function, which is used to remap a sequence number or an index of a frequency domain basis vector selected for the $l$th transmission layer and the $n$th reference signal resource; and Pri($l, i, f, n$) represents a priority of a coefficient corresponding to a given combination of the $l$th transmission layer, the $n$th reference signal resource, the $i$th spatial domain basis vector, and the $f$th frequency domain basis vector, namely, a coefficient corresponding to the $i$th spatial domain basis vector and the $f$th frequency domain basis vector of the $n$th reference signal resource corresponding to the $l$th transmission layer.

It should be noted that priorities of the foregoing $v \sum_{n=1}^{N} 2L_n M_v$ or $v \sum_{n=1}^{N} K_{1,n} M_v$ linear combination coefficients also satisfy the foregoing priority function Pri($l, i, f, n$) = $2L_{max} \cdot v \cdot Y \cdot G(n) + 2L_{max} \cdot v \cdot \pi(f) + v \cdot i + l$.

For the sequence number of the spatial domain basis vector/reference signal port, the sequence number of the frequency domain basis vector, and the sequence number of the reference signal resource (the value of $n$), refer to corresponding descriptions of the foregoing function Pri($l, i, f, n$) = $2L_{max} \cdot X \cdot v \cdot \pi(f) + v \cdot \varphi(i, n) + l$. Details are not described herein again.

Optionally, in addition to the foregoing several definition manners, the first remapping function $\pi(f)$ may be further defined as follows: Because the reference signal resource dimension is a preferentially considered dimension, remapping may not be performed in frequency domain, in other words, the first remapping function $\pi(f)$ may be defined according to $\pi(f) = f$. In this case, a value range of $\pi(f)$ is 0 to $M_v$ - 1, and a value of $Y$ is a positive integer greater than or equal to $M_v$.

For example, for the Rel-17 FeType-II-based multi-station codebook, a sequence number combination ($l, i, f, n$)

may be given. A priority of a coefficient corresponding to the combination is determined based on the priority function Pri($l$, $i$, $f$, $n$), and priorities of amplitude, phase, and position indication information of the coefficient are also determined accordingly. A smaller value of Pri($l$, $i$, $f$, $n$) indicates that the amplitude, phase, and position indication information of the coefficient corresponding to the combination have higher priorities, and are preferentially reported. For ease of description, a coefficient corresponding to an $l^{th}$ transmission layer, an $n^{th}$ reference signal resource, an $i^{th}$ spatial domain basis vector, and an $f^{th}$ frequency domain basis vector that are used to determine a precoding matrix is represented as $C_{l,i,f,n}$. Specifically, a priority function of any coefficient $C_{l,i,f,n}$ in the M coefficients satisfies:

$$\mathrm{Pri}(l, i, f, n) = K_{1,max} \cdot \upsilon \cdot Y \cdot G(n) + K_{1,max} \cdot \upsilon \cdot f + \upsilon \cdot i + l,$$

where $l$ represents a transmission layer sequence number, and $l$ is set to 1, 2, ... , $\upsilon$; $\upsilon$ represents a quantity of transmission layers; $i$ represents a sequence number of a reference signal port, and $i$ is set to 0,1, ..., $K_{1,n}$ - 1, to be specific, a reference signal port corresponding to the coefficient $C_{l,i,f,n}$ is an $i^{th}$ reference signal port of $K_{1,n}$ selected reference signal ports corresponding to an $n^{th}$ reference signal resource; $K_{1,n}$ represents a quantity of selected reference signal ports corresponding to the $n^{th}$ reference signal resource; $f$ represents a frequency domain basis vector sequence number, and $f$ is set to 0, 1, ..., $M_v$ - 1, to be specific, a frequency domain basis vector corresponding to the coefficient $C_{l,i,f,n}$ is an $f^{th}$ frequency domain basis vector of $M_v$ selected frequency domain basis vectors corresponding to the $l^{th}$ transmission layer and the $n^{th}$ reference signal resource; $M_v$ represents a quantity of frequency domain basis vectors; $n$ represents sequence numbers of the N reference signal resources. Optionally, $n$ is set to 1, 2, ... , $N$, $n$ is set to 0, 1, ... , $N$ - 1, or $n$ may be set to another value. $G(n)$ indicates a priority ranking of the $n^{th}$ reference signal resource in the N reference signal resources. Optionally, the mapping relationship $G(n)$ of the reference signal resource ranking may be determined with reference to any one or more items of the foregoing second preset rule. $K_{1,max}$ is greater than or equal to a maximum value of quantities of selected reference signal ports respectively corresponding to the foregoing N reference signal resources; $Y$ is an integer greater than or equal to $M_v$; and Pri($l$, $i$, $f$, $n$) represents a priority of a coefficient corresponding to a given combination of the $l^{th}$ transmission layer, the $n^{th}$ reference signal resource, the $i^{th}$ reference signal port, and the $f^{th}$ frequency domain basis vector.

It should be noted that priorities of the foregoing $\upsilon \sum_{n=1}^{N} 2L_n M_v$ or $\upsilon \sum_{n=1}^{N} K_{1,n} M_v$ linear combination coefficients also satisfy the foregoing priority function Pri($l$, $i$, $f$, $n$) = $K_{1,max} \cdot \upsilon \cdot Y \cdot G(n) + K_{1,max} \cdot \upsilon \cdot f + \upsilon \cdot i + l$.

For the sequence number of the spatial domain basis vector/reference signal port, the sequence number of the frequency domain basis vector, and the sequence number of the reference signal resource (the value of $n$), refer to corresponding descriptions of the foregoing function Pri($l$, $i$, $f$, $n$) = $2L_{max} \cdot X \cdot \upsilon \cdot \pi(f) + \upsilon \cdot \varphi(i, n) + l$. Details are not described herein again.

It may be understood that in the manner in which the reference signal resource dimension is used as a preferentially considered dimension, a priority definition manner of the Rel-17 FeType-II-based multi-station codebook may be similar to that of the Rel-16 eType-II-based multi-station codebook. A main difference between them is as follows: In the priority definition manner of the Rel-17 FeType-II-based multi-station codebook, the spatial domain basis vector sequence number is replaced with the selected reference signal port sequence number; in addition, in the priority definition manner of the Rel-17 FeType-II-based multi-station codebook, because a quantity of frequency domain basis vectors is small, frequency domain permutation may not be performed.

The foregoing uses the Rel-16 eType-II-based multi-station codebook and the Rel-17 FeType-II-based multi-station codebook as examples to separately describe two coefficient priority definition manners in which the UE uses the frequency domain dimension as a preferentially considered dimension and the UE uses the reference signal resource dimension as a preferentially considered dimension. It should be noted that, the UE may support only the manner in which the frequency domain dimension is used as a preferentially considered dimension or the manner in which the reference signal resource dimension is used as a preferentially considered dimension; or the UE may also support both the two manners. When a specific condition is satisfied, the UE may select one of the manners to define a priority of a coefficient. For example, it may be specified in a protocol that the UE uses the frequency domain dimension as a preferentially considered dimension or uses the reference signal resource dimension as a preferentially considered dimension to define a priority of a coefficient during CSI reporting. Alternatively, the base station may configure the manner. For example, the base station indicates, by using specific configuration information, the UE to use the frequency domain dimension as a preferentially considered dimension or use the reference signal resource dimension as a preferentially considered dimension to define a priority of a coefficient during CSI reporting. Alternatively, the UE may select a coefficient priority definition manner based on an actual situation of a communication network, and report the selected manner to the base station by using manner indication information. For example, the UE may add 1-bit manner indication information to a CSI Part 2. When the manner indication information is of a third value (for example, 0 or 1), it indicates that a priority is defined by using the frequency domain dimension as a preferentially considered dimension. When the manner indication information is of a fourth value (for example, 1 or 0), it indicates that a priority is defined by using the reference signal resource dimension as a preferentially considered dimension. It may be understood that a position of the manner indication information in the CSI Part 2 needs to be located before the indication information of the M coefficients, or the manner indication information and indication information of a coefficient with a highest priority in the M coefficients need to be placed in a CSI Part 2 group at a same level.

For example, the UE may select a coefficient priority definition manner based on an actual situation of a communication network. For example, after measuring channel state information of the plurality of TRPs, the UE may select a corresponding coefficient priority definition manner based on a channel strength difference between the TRPs. For example, when the channel strength difference between the TRPs is not large (for example, less than a specific threshold), the UE may define a priority of a coefficient in a manner in which the frequency domain dimension is used as preferentially considered dimension, and report a coefficient of each TRP as much as possible. In this case, the priorities of the M coefficients satisfy any one of the following formulas:

$$\mathrm{Pri}(l, i, f, n) = 2L_{max} \cdot X \cdot v \cdot \pi(f) + v \cdot \varphi(i, n) + l;$$

or

$$\mathrm{Pri}(l, i, f, n) = K_{1,max} \cdot v \cdot X \cdot f + v \cdot \varphi(i, n) + l.$$

When the channel strength difference between the TRPs is large (for example, greater than or equal to a threshold), the UE may choose to define a priority of a coefficient in a manner in which the reference signal resource dimension is used as a preferentially considered dimension, and preferentially report a coefficient corresponding to a TRP with a strong channel. In this case, the priorities of the M coefficients satisfy any one of the following formulas:

$$\mathrm{Pri}(l, i, f, n) = 2L_{max} \cdot v \cdot Y \cdot G(n) + 2L_{max} \cdot v \cdot \pi(f) + v \cdot i + l;$$

or

$$\mathrm{Pri}(l, i, f, n) = K_{1,max} \cdot v \cdot Y \cdot G(n) + K_{1,max} \cdot v \cdot f + v \cdot i + l.$$

It should be noted that the foregoing embodiments are all expanded for a case in which a precoding matrix is reported by using a PMI. The solution in this application is also applicable to a case in which a channel matrix is reported by using a PMI, where a transmission layer is replaced with a receive antenna port, a quantity of transmission layers corresponds to a quantity of receive antenna ports, and a $l^{th}$ transmission layer corresponds to a $l^{th}$ receive antenna port. In other words, the coefficient priority definition solution in the foregoing embodiments that is performed for a case in which the channel matrix, instead of the precoding matrix, is reported by using the PMI should also fall within the protection scope of this application.

The foregoing content describes in detail the method provided in this application. To facilitate implementation of the foregoing solutions in embodiments of this application, embodiments of this application further provide corresponding apparatuses or devices.

In this application, the apparatus is divided into functional modules according to the foregoing method embodiments. For example, functional modules corresponding to functions may be obtained through division, or two or more functions may be integrated into one processing module. The integrated module may be implemented in a form of hardware, or may be implemented in a form of a software functional module. It should be noted that, in this application, module division is an example, and is merely a logical function division. In an actual implementation, another division manner may be used. The following describes apparatuses in embodiments of this application with reference to the accompanying drawings.

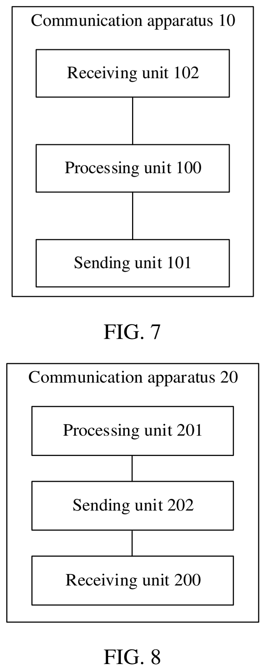

FIG. 7 is a diagram of a structure of a communication apparatus according to an embodiment of this application. The communication apparatus 10 may be configured to implement a function of the UE or the access network device in the foregoing method embodiments, and therefore can also implement beneficial effects of the foregoing method embodiments. In this embodiment of this application, the communication apparatus 10 may be one of the terminals 120a to 120j shown in FIG. 1a, or may be a module (for example, a chip) used in the terminal.

As shown in FIG. 7, the communication apparatus 10 may include a processing unit 100, a sending unit 101, and a receiving unit 102. The communication apparatus 10 may be configured to implement a function of the UE in the method embodiment shown in FIG. 4. The receiving unit 102 may be configured to receive reference signals on N reference signal resources. The processing unit 100 may be configured to determine indication information of M coefficients based on the reference signals on the N reference signal resources, where priorities of the M coefficients are determined based on priorities of the N reference signal resources, both M and N are integers greater than 1, and the M coefficients are used to determine a precoding matrix. The sending unit 101 may be configured to send first information, where the first information includes indication information of K coefficients, the K coefficients are determined from the M coefficients based on the priorities of the M coefficients, and K is a positive integer less than or equal to M.

FIG. 8 is a diagram of a structure of another communication apparatus according to an embodiment of this application. The communication apparatus 20 may be configured to implement a function of the access network device (base station) in the foregoing method embodiments, and therefore can also implement beneficial effects of the foregoing method embodiments. In this embodiment of this application, the communication apparatus 20 may be the radio access network device 110a or 110b shown in FIG. 1a.

As shown in FIG. 8, the communication apparatus 20 may include a processing unit 201, a receiving unit 200, and a sending unit 202. The communication apparatus 20 may be configured to implement a function of the access network device (base station) in the method embodiment shown in FIG. 4. The processing unit 201 may be configured to generate a reference signal. The sending unit 202 may be configured to send the reference signal on a reference signal resource. The receiving unit 200 may be configured to receive first information, where the first information includes indication information of K coefficients, the K coefficients are determined from the M coefficients based on priorities of the M coefficients, the reference signal resource is any one of N reference signal resources, both M and N are integers greater than 1, K is a positive integer less than or equal to M, the priorities of the M coefficients are determined based on priorities of the N reference signal resources, and the M coefficients are used to determine a precoding matrix.

In a possible implementation, the processing unit 201 may be further configured to determine the precoding matrix based on the indication information that is of the K coefficients and that is included in the first information.

In a possible implementation, the priorities of the M coefficients are further determined based on one or more of the following: a transmission layer sequence number, a spatial domain basis vector sequence number, a reference signal port sequence number, and a frequency domain basis vector sequence number.

In a possible implementation, a priority of a coefficient associated with a spatial domain basis vector or a reference signal port that corresponds to any one of the N reference signal resources is determined according to any one or more items of the following first preset rule:

if a priority of an $n_1{}^{th}$ reference signal resource in the N reference signal resources is higher than a priority of an $n_2{}^{th}$ reference signal resource in the N reference signal resources, a priority of a coefficient associated with any spatial domain basis vector corresponding to the $n_1{}^{th}$ reference signal resource is higher than a priority of a coefficient associated with any spatial domain basis vector corresponding to the $n_2{}^{th}$ reference signal resource; a priority of a coefficient associated with any reference signal port corresponding to the $n_1{}^{th}$ reference signal resource is higher than a priority of a coefficient associated with any reference signal port corresponding to the $n_2{}^{th}$ reference signal resource; or

if a priority of an $n_1{}^{th}$ reference signal resource in the N reference signal resources is higher than a priority of an $n_2{}^{th}$ reference signal resource in the N reference signal resources, a priority of a coefficient associated with an $i^{th}$ spatial domain basis vector corresponding to the $n_1{}^{th}$ reference signal resource is higher than a priority of a coefficient associated with an $i^{th}$ spatial domain basis vector that is with the same sequence number and that corresponds to the $n_2{}^{th}$ reference signal resource; or a priority of a coefficient associated with an $i^{th}$ reference signal port corresponding to the $n_1{}^{th}$ reference signal resource is higher than a priority of a coefficient associated with an $i^{th}$ reference signal port that is with the same sequence number and that corresponds to the $n_2{}^{th}$ reference signal resource, where $i$ represents the sequence number of the spatial domain basis vector or the reference signal port.

In a possible implementation, the priorities of the M coefficients satisfy:

$$\mathrm{Pri}(l, i, f, n) = 2L_{max} \cdot X \cdot v \cdot \pi(f) + v \cdot \varphi(i, n) + l,$$

where $l$ represents the transmission layer sequence number, and $l$ is set to 1, 2, ..., $v$; $v$ represents a quantity of transmission layers; $i$ represents the spatial domain basis vector sequence number, and $i$ is set to 0, 1, ..., $2L_n$ - 1; $L_n$ represents a quantity of spatial domain basis vectors corresponding to an $n^{th}$ reference signal resource; $f$ represents the frequency domain basis vector sequence number, and $f$ is set to 0, 1, ... , $M_v$ - 1; $M_v$ represents a quantity of frequency domain basis vectors; $n$ represents sequence numbers of the N reference signal resources; $\varphi(i, n)$ represents a priority of a coefficient set associated with an $i^{th}$ spatial domain basis vector corresponding to the $n^{th}$ reference signal resource, and satisfies $\varphi(i, n) < 2L_{max} \cdot X$; $X$ is an integer greater than or equal to $N$; $L_{max}$ is greater than or equal to a maximum value of quantities of spatial domain basis vectors respectively corresponding to the N reference signal resources; $\pi(f)$ represents a first remapping function, which is used to remap a sequence number or an index of a frequency domain basis vector selected for the $l^{th}$ transmission layer and the $n^{th}$ reference signal resource; and Pri($l, i, f, n$) represents a priority of a coefficient corresponding to a given combination of the $l^{th}$ transmission layer, the $n^{th}$ reference signal resource, the $i^{th}$ spatial domain basis vector, and the $f^{th}$ frequency domain basis vector.

In a possible implementation, $\varphi(i, n)$ satisfies any one of the following formulas:

$$\varphi(i, n) = 2L_{max} \cdot G(n) + i,$$

where G($n$) represents a priority ranking of the $n^{th}$ reference signal resource in the N reference signal resources; $L_{max}$ is greater than or equal to the maximum value of the quantities of spatial domain basis vectors respectively corresponding to the N reference signal resources; $i$ represents the spatial domain basis vector sequence number, and $i$ is set to 0, 1, ..., $2L_n$ - 1; and $L_n$ represents the quantity of spatial domain basis vectors corresponding to the $n^{th}$ reference signal resource;

$$\varphi(i, n) = N \cdot \phi_n(i) + G(n),$$

where $G(n)$ represents a priority ranking of the $n^{th}$ reference signal resource in the N reference signal resources; $i$ represents the spatial domain basis vector sequence number, and $i$ is set to 0, 1, ..., $2L_n$ - 1; $L_n$ represents the quantity of spatial domain basis vectors corresponding to the $n^{th}$ reference signal resource; and $\phi_n(i) = i$ or $\phi_n(i) = i + 2L_{max} - 2L_n$, where $\phi_n(i)$ represents a second remapping function, which is used to remap the spatial domain basis vector sequence number; or

$$\varphi(i, n) = N \cdot a_{max} \cdot \left\lfloor \frac{i}{a_n} \right\rfloor + G(n) \cdot a_{max} + i \mod a_n,$$

where $a_n$ is a positive integer greater than or equal to 1 and is in direct proportion to a value of $L_n$, and a greatest common divisor of all $a_n$ is 1; $i$ represents the spatial domain basis vector sequence number, and $i$ is set to 0, 1, ..., $2L_n$ - 1; $L_n$ represents the quantity of spatial domain basis vectors corresponding to the $n^{th}$ reference signal resource; and $a_{max}$ is a maximum value of all $a_n$.

In a possible implementation, if a priority of an $n_1^{th}$ reference signal resource in the N reference signal resources is higher than a priority of an $n_2^{th}$ reference signal resource in the N reference signal resources, a priority of any coefficient associated with the $n_1^{th}$ reference signal resource is higher than a priority of any coefficient associated with the $n_2^{th}$ reference signal resource.

In a possible implementation, the priorities of the M coefficients satisfy:

$$\mathrm{Pri}(l, i, f, n) = 2L_{max} \cdot v \cdot Y \cdot G(n) + 2L_{max} \cdot v \cdot \pi(f) + v \cdot i + l,$$

where $l$ represents the transmission layer sequence number, and $l$ is set to 1, 2, ..., $v$; $v$ represents a quantity of transmission layers; $i$ represents the spatial domain basis vector sequence number, and $i$ is set to 0, 1, ..., $2L_n$ - 1; $L_n$ represents a quantity of spatial domain basis vectors corresponding to an $n^{th}$ reference signal resource; $f$ represents the frequency domain basis vector sequence number, and $f$ is set to 0, 1, ... , $M_v$ - 1; $M_v$ represents a quantity of frequency domain basis vectors; $n$ represents sequence numbers of the N reference signal resources; $G(n)$ represents a priority ranking of the $n^{th}$ reference signal resource in the N reference signal resources; $L_{max}$ is greater than or equal to a maximum value of quantities of spatial domain basis vectors respectively corresponding to the N reference signal resources; Y is an integer greater than or equal to $M_v$, or Y is an integer greater than or equal to $N_3$; $N_3$ is a quantity of subbands or a quantity of frequency domain units; $\pi(f)$ represents a first remapping function, which is used to remap a sequence number or an index of a frequency domain basis vector selected for the $l^{th}$ transmission layer and the $n^{th}$ reference signal resource; and Pri($l, i, f, n$) represents a priority of a coefficient corresponding to a given combination of the $l^{th}$ transmission layer, the $n^{th}$ reference signal resource, the $i^{th}$ spatial domain basis vector, and the $f^{th}$ frequency domain basis vector.

In a possible implementation, $\pi(f)$ satisfies any one of the following formulas:

$$\pi(f) = f;$$

$$\pi(f) = \min\left(2 \cdot k_{3,l,n}^{(f)}, 2 \cdot \left(N_3 - k_{3,l,n}^{(f)}\right) - 1\right), \quad \text{where} \quad k_{3,l,n}^{(f)} = \left(k_{3,l,n}^{(f)} - k_{3,l,n^*}^{(f_l^*)}\right) \mod N_3 \; ; \quad k_{3,l,n}^{(f)}$$

represents an index, in a frequency domain basis vector universal set, of the $f^{th}$ frequency domain basis vector of the $n^{th}$ reference signal resource corresponding to the $l^{th}$ transmission layer; $k_{3,l,n^*}^{(f_l^*)}$ represents an original index of a frequency domain basis vector corresponding to a strongest coefficient in the N reference signal resources corresponding to the $l^{th}$

transmission layer; $f_l^*$ represents a sequence number of the frequency domain basis vector corresponding to the strongest coefficient of the $l^{th}$ transmission layer; and $n^*$ represents a reference signal resource sequence number corresponding to the strongest coefficient of the $l^{th}$ transmission layer; or

$$\pi(f) = \min\ \left(2 \cdot k_{3,l,n}^{(f)}, 2 \cdot \left(N_3 - k_{3,l,n}^{(f)}\right) - 1\right)\ ,\quad \text{where}\quad k_{3,l,n}^{(f)} = \left(k_{3,l,n}^{(f)} - k_{3,l,n}^{(f_{l,n}^*)}\right)\ \mathrm{mod}\ N_3\ ;\quad k_{3,l,n}^{(f)}$$

represents an index, in a frequency domain basis vector universal set, of the $f^{th}$ frequency domain basis vector of the $n^{th}$ reference signal resource corresponding to the $l^{th}$ transmission layer; $k_{3,l,n}^{(f_{l,n}^*)}$ represents an original index of a frequency domain basis vector corresponding to a strongest coefficient of the $n^{th}$ reference signal resource corresponding to the $l^{th}$ transmission layer; and $f_{l,n}^*$ represents a sequence number of the frequency domain basis vector corresponding to the strongest coefficient of the $n^{th}$ reference signal resource corresponding to the $l^{th}$ transmission layer.

In a possible implementation, the priorities of the M coefficients satisfy:

$$\mathrm{Pri}(l, i, f, n) = K_{1,max} \cdot v \cdot Y \cdot G(n) + K_{1,max} \cdot v \cdot f + v \cdot i + l,$$

where $l$ represents the transmission layer sequence number, and $l$ is set to 1, 2, ..., $v$; $v$ represents a quantity of transmission layers; $i$ represents the reference signal port sequence number, and $i$ is set to 0, 1, ... , $K_{1,n}$ - 1; $K_{1,n}$ represents a quantity of selected reference signal ports corresponding to an $n^{th}$ reference signal resource; $f$ represents the frequency domain basis vector sequence number, and $f$ is set to 0, 1, ... , $M_v$ - 1; $M_v$ represents a quantity of frequency domain basis vectors; $n$ represents sequence numbers of the N reference signal resources; $G(n)$ represents a priority ranking of the $n^{th}$ reference signal resource in the N reference signal resources; $K_{1,max}$ is greater than or equal to a maximum value of a quantity of selected reference signal ports corresponding to each of the N reference signal resources; $Y$ is an integer greater than or equal to $M_v$; and Pri($l, i, f, n$) represents a priority of a coefficient corresponding to a given combination of the $l^{th}$ transmission layer, the $n^{th}$ reference signal resource, the $i^{th}$ reference signal port, and the $f^{th}$ frequency domain basis vector.

In a possible implementation, the priorities of the M coefficients satisfy:

$$\mathrm{Pri}(l, i, f, n) = K_{1,max} \cdot v \cdot X \cdot f + v \cdot \varphi(i, n) + l,$$

where $l$ represents the transmission layer sequence number, and $l$ is set to 1, 2, ..., $v$; $v$ represents a quantity of transmission layers; $i$ represents the reference signal port sequence number, and $i$ is set to 0, 1, ..., $K_{1,n}$ - 1; $K_{1,n}$ represents a quantity of selected reference signal ports corresponding to an $n^{th}$ reference signal resource; $f$ represents the frequency domain basis vector sequence number, and $f$ is set to 0, 1, ..., $M_v$ - 1; $M_v$ represents a quantity of frequency domain basis vectors; $X$ is an integer greater than or equal to $N$; n represents sequence numbers of the N reference signal resources; $\varphi(i, n)$ represents a priority of a coefficient set associated with an $i^{th}$ reference signal port corresponding to the $n^{th}$ reference signal resource, and satisfies $\varphi(i, n) < 2L_{max} \cdot X$; $K_{1,max}$ is greater than or equal to a maximum value of a quantity of selected reference signal ports corresponding to each of the N reference signal resources; and Pri($l, i, f, n$) represents a priority of a coefficient corresponding to a given combination of the $l^{th}$ transmission layer, the $n^{th}$ reference signal resource, the $i^{th}$ reference signal port, and the $f^{th}$ frequency domain basis vector.

In a possible implementation, $\varphi(i, n)$ satisfies any one of the following formulas:

$\varphi(i, n) = K_{1,max} \cdot G(n) + i$, where $G(n)$ represents a priority ranking of the $n^{th}$ reference signal resource in the N reference signal resources; $K_{1,max}$ is greater than or equal to the maximum value of the quantities of spatial domain basis vectors respectively corresponding to the N reference signal resources; $i$ represents the reference signal port sequence number, and $i$ is set to 0, 1, ..., $K_{1,n}$ - 1; and $K_{1,n}$ represents the quantity of selected reference signal ports corresponding to the $n^{th}$ reference signal resource;

$\varphi(i, n) = N \cdot i + G(n)$, where $G(n)$ represents a priority ranking of the $n^{th}$ reference signal resource in the N reference signal resources; $i$ represents the reference signal port sequence number, and $i$ is set to 0, 1, ... , $K_{1,n}$ - 1; and $K_{1,n}$ represents the quantity of selected reference signal ports corresponding to the $n^{th}$ reference signal resource;

$\varphi(i, n) = N \cdot \phi_n(i) + G(n)$, where $G(n)$ represents a priority ranking of the $n^{th}$ reference signal resource in the N reference signal resources; $i$ represents the reference signal port sequence number, and $i$ is set to 0, 1, ..., $K_{1,n}$ - 1; $K_{1,n}$ represents the quantity of selected reference signal ports corresponding to the $n^{th}$ reference signal resource; and $\phi_n(i)$ = $i$ or $\phi_n(i) = i + K_{1,max} - K_{1,n}$, where $\phi_n(i)$ represents a third remapping function, used to remap the reference signal port sequence number; or

$\varphi(i, n) = N \cdot a_{max} \cdot \left\lfloor \frac{i}{a_n} \right\rfloor + G(n) \cdot a_{max} + i\ \mathrm{mod}\ a_n$, where $a_n$ is a positive integer greater than or equal to 1 and is in direct proportion to a value of $K_{1,n}$, and a greatest common divisor of all $a_n$ is 1; $i$ represents the reference signal port sequence number, and $i$ is set to 0, 1, ... , $K_{1,n}$ - 1; $K_{1,n}$ represents the quantity of selected reference signal ports corresponding to the $n^{th}$ reference signal resource; and $a_{max}$ is a maximum value of all $a_n$.

In a possible implementation, a smaller value of Pri($l$, $i$, $f$, $n$) indicates a higher priority of a coefficient corresponding to a given sequence number combination of the $l^{th}$ transmission layer, the $n^{th}$ reference signal resource, the $i^{th}$ spatial domain basis vector or reference signal port, and the $f^{th}$ frequency domain basis vector.

In a possible implementation, the priorities of the N reference signal resources are determined according to any one or more items of the following second preset rule:

the reference signal resource corresponding to a larger quantity of spatial domain basis vectors or the reference signal resource for which a larger quantity of reference signal ports is selected, has a higher priority;
the reference signal resource corresponding to a larger amplitude of a strongest coefficient has a higher priority;
the reference signal resource corresponding to a higher signal strength of a reference signal has a higher priority; or
the reference signal resource corresponding to a smaller sequence number of the reference signal resource has a higher priority.

In a possible implementation, where a smaller value of $G(n)$ indicates a higher priority of the $n^{th}$ reference signal resource.

In a possible implementation, indication information of any one of the coefficients described above includes one or more of amplitude indication information of the coefficient, phase indication information of the coefficient, and position indication information of the coefficient.

In a possible implementation, a smaller value of $\varphi(i, n)$ indicates a higher priority of the coefficient set associated with the $i^{th}$ spatial domain basis vector or reference signal port that corresponds to the $n^{th}$ reference signal resource.

In a possible implementation, when the preset condition is satisfied, the priorities of the M coefficients are determined based on a function that is in a preset function and that corresponds to the preset condition, and the preset function includes one or more of the following functions:

$$\mathrm{Pri}(l, i, f, n) = 2L_{max} \cdot X \cdot v \cdot \pi(f) + v \cdot \varphi(i, n) + l;$$

$$\mathrm{Pri}(l, i, f, n) = K_{1,max} \cdot v \cdot X \cdot f + v \cdot \varphi(i, n) + l;$$

$$\mathrm{Pri}(l, i, f, n) = 2L_{max} \cdot v \cdot Y \cdot G(n) + 2L_{max} \cdot v \cdot \pi(f) + v \cdot i + l;$$

or

$$\mathrm{Pri}(l, i, f, n) = K_{1,max} \cdot v \cdot Y \cdot G(n) + K_{1,max} \cdot v \cdot f + v \cdot i + l.$$

In the foregoing apparatus embodiment, for descriptions of the reference signal resource, CSI, and the like, refer to the descriptions in the foregoing method embodiments (including FIG. 4). Details are not described herein again.

It may be understood that specific descriptions of the receiving unit, the sending unit, and the processing unit shown in the foregoing apparatus embodiment are merely examples. For specific functions of the receiving unit, the sending unit, and the processing unit, steps performed by the receiving unit, the sending unit, and the processing unit, or the like, refer to the foregoing method embodiments. Details are not described herein again.

The foregoing describes the communication apparatus in embodiments of this application. The following describes a possible product form of the communication apparatus. It should be understood that a product, in any form, with a function of the communication apparatus described in FIG. 7 or FIG. 8 shall fall within the protection scope of embodiments of this application. It should be further understood that the following descriptions are merely examples, and the product form of the communication apparatus in embodiments of this application is not limited thereto.

In a possible implementation, in the communication apparatus shown in FIG. 7 or FIG. 8, the processing unit 100 or the processing unit 201 may be one or more processors; and the sending unit 101, the receiving unit 102, the sending unit 202, or the receiving unit 200 may be a transceiver; or the sending unit 101 and the sending unit 202 may be transmitters, and the receiving unit 102 and the receiving unit 200 may be receivers. In embodiments of this application, the processor and the transceiver may be coupled, or the like. A manner of connection between the processor and the transceiver is not limited in embodiments of this application. In a process of performing the foregoing method, a process of sending information in the foregoing method may be understood as a process of outputting the information by the processor. When outputting the information, the processor outputs the information to a transceiver, so that the transceiver transmits the information. After the information is output by the processor, other processing may further need to be performed on the information before the information arrives at the transceiver. Similarly, a process of receiving information in the foregoing method may be understood as a process of receiving the input information by the processor. When the processor receives the input information, the transceiver receives the information, and inputs the information into the processor. Still further, after the transceiver receives the information, other processing may need to be performed on the information before the information is input into the processor.

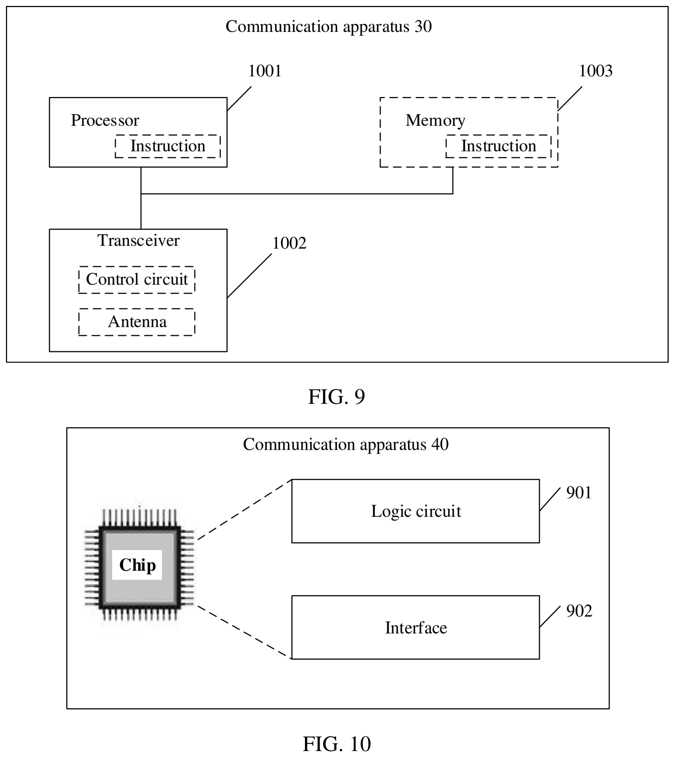

FIG. 9 is a diagram of a structure of another communication apparatus according to an embodiment of this application. The communication apparatus 30 may be the communication apparatus 10, the communication apparatus 20, or a chip in the communication apparatus 10 or the communication apparatus 20. FIG. 9 shows only main components in the communication apparatus 30. In addition to a processor 1001 and a transceiver 1002, the communication apparatus 30 may further include a memory 1003 and an input/output apparatus (not shown in the figure).

The processor 1001 is mainly configured to: process a communication protocol and communication data, control the entire communication apparatus, execute a software program, and process data of the software program. The memory 1003 is mainly configured to store the software program and data. The transceiver 1002 may include a control circuit and an antenna. The control circuit is mainly configured to: perform conversion between a baseband signal and a radio frequency signal and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user and output data to the user.

After the communication apparatus is powered on, the processor 1001 may read the software program in the memory 1003, interpret and execute instructions of the software program, and process the data of the software program. When data needs to be sent in a wireless manner, the processor 1001 performs baseband processing on the to-be-sent data, and then outputs a baseband signal to a radio frequency circuit. The radio frequency circuit performs radio frequency processing on the baseband signal, and then sends the radio frequency signal in an electromagnetic wave form through the antenna. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

The transceiver 1002 may include a receiver and a transmitter. The receiver is configured to perform a receiving function (or operation), and the transmitter is configured to perform a transmitting function (or operation). In addition, the transceiver is configured to communicate with another device/apparatus through a transmission medium.

The processor 1001, the transceiver 1002, and the memory 1003 may be connected through a communication bus.

For example, when the communication apparatus 30 is configured to perform the step, the method, or the function performed by the communication apparatus 10, the transceiver 1002 is configured to receive reference signals on N reference signal resources; the processor 1001 is configured to determine indication information of M coefficients based on the reference signals on the N reference signal resources, where priorities of the M coefficients are determined based on priorities of the N reference signal resources, both M and N are integers greater than 1, and the M coefficients are used to determine a precoding matrix; and the transceiver 1002 is further configured to send first information, where the first information includes indication information of K coefficients, the K coefficients are determined from the M coefficients based on the priorities of the M coefficients, and K is a positive integer less than or equal to M.

For example, when the communication apparatus 30 is configured to perform the step, the method, or the function performed by the communication apparatus 20, the processor 1001 is configured to generate a reference signal; the transceiver 1002 is configured to send the reference signal on a reference signal resource; and the transceiver 1002 is further configured to receive first information, where the first information includes indication information of K coefficients, the K coefficients are determined from M coefficients based on priorities of the M coefficients, and the reference signal resource is any one of N reference signal resources, both M and N are integers greater than 1, the priorities of the M coefficients are determined based on priorities of the N reference signal resources, K is a positive integer less than or equal to M, and the M coefficients are used to determine a precoding matrix. Optionally, the processor 1001 is further configured to determine the precoding matrix based on the indication information that is of the K coefficients and that is included in the first information.

In this embodiment of this application, for descriptions of the reference signal resource, reference signal, CSI, and the like, refer to the descriptions in the foregoing embodiments (including FIG. 4). Details are not described herein again. It may be understood that for specific descriptions of the processor and the transceiver, refer to the descriptions of the processing unit, the receiving unit, and the sending unit shown in FIG. 7 or FIG. 8. Details are not described herein again.

Optionally, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

Optionally, the processor 1001 may store instructions. The instructions may be a computer program. The computer program is run on the processor 1001, to enable the communication apparatus 30 to perform the methods described in the foregoing method embodiments. The computer program may be fixed in the processor 1001. In this case, the processor 1001 may be implemented by hardware.

In an implementation, the communication apparatus 30 may include a circuit. The circuit may implement the sending, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application specific integrated circuit (application specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-channel metal-oxide-semiconductor (nMetal-oxide-semiconductor, NMOS), a P-channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

It may be understood that the communication apparatus described in this embodiment of this application may further have more components and the like than those in FIG. 9. This is not limited in embodiments of this application. The foregoing methods performed by the processor and the transceiver are merely examples. For specific steps performed by the processor and the transceiver, refer to descriptions in the foregoing method embodiments.

In another possible implementation, in the communication apparatus shown in FIG. 7 or FIG. 8, the processing unit 100 or the processing unit 201 may be one or more logic circuits, and the sending unit 101, the receiving unit 102, the sending unit 202, or the receiving unit 200 may be an input/output interface, or may be referred to as a communication interface, an interface circuit, an interface, or the like. Alternatively, the sending unit may be an output interface, the receiving unit may be an input interface, and the sending unit and the receiving unit are integrated into one unit, for example, an input/output interface. FIG. 10 is a diagram of a structure of still another communication apparatus according to an embodiment of this application. As shown in FIG. 10, the communication apparatus 40 includes a logic circuit 901 and an interface 902. To be specific, the processing unit 100 or the processing unit 201 may be implemented by using the logic circuit 901, and the sending unit 101, the receiving unit 102, the sending unit 202, or the receiving unit 200 may be implemented by using the interface 902. The logic circuit 901 may be a chip, a processing circuit, an integrated circuit, a system on chip (system on chip, SoC) chip, or the like. The interface 902 may be a communication interface, an input/output interface, a pin, or the like. For example, FIG. 10 shows an example in which the communication apparatus 40 is a chip. The chip includes the logic circuit 901 and the interface 902.

In this embodiment of this application, the logic circuit and the interface may be coupled to each other. A specific manner of connection between the logic circuit and the interface is not limited in embodiments of this application.

For example, when the communication apparatus 40 is configured to perform the method, the function, or the step performed by the communication apparatus 10, the interface 902 is configured to receive reference signals on N reference signal resources; the logic circuit 901 is configured to determine indication information of M coefficients based on the reference signals on the N reference signal resources, where priorities of the M coefficients are determined based on priorities of the N reference signal resources, both M and N are integers greater than 1, and the M coefficients are used to determine a precoding matrix; and the interface 902 is further configured to send first information, where the first information includes indication information of K coefficients, the K coefficients are determined from the M coefficients based on the priorities of the M coefficients, and K is a positive integer less than or equal to M.

For example, when the communication apparatus 40 is configured to perform the step, the method, or the function performed by the communication apparatus 20, the logic circuit 901 is configured to generate a reference signal; the interface 902 is configured to send the reference signal on a reference signal resource; and the interface 902 is further configured to receive first information, where the first information includes indication information of K coefficients, the K coefficients are determined from M coefficients based on priorities of the M coefficients, and the reference signal resource is any one of N reference signal resources, both M and N are integers greater than 1, K is a positive integer less than or equal to M, the priorities of the M coefficients are determined based on priorities of the N reference signal resources, and the M coefficients are used to determine a precoding matrix. Optionally, the logic circuit 901 is further configured to determine the precoding matrix based on the indication information that is of the K coefficients and that is included in the first information.

In this embodiment of this application, for descriptions of the reference signal resource, reference signal, CSI, and the like, refer to the descriptions in the foregoing method embodiments (including FIG. 4). Details are not described herein again. It may be understood that for specific descriptions of the logic circuit 901 and the interface 902, refer to the descriptions of the processing unit, the sending unit, and the receiving unit shown in FIG. 7 or FIG. 8. Details are not described herein again.

It may be understood that the communication apparatus shown in embodiments of this application may implement the methods provided in embodiments of this application in a form of hardware, or may implement the methods provided in embodiments of this application in a form of software. This is not limited in embodiments of this application.

For specific implementations of the embodiments shown in FIG. 10, refer to the foregoing embodiments. Details are not described herein again.

An embodiment of this application further provides a wireless communication system. The wireless communication system includes a communication apparatus 10 and a communication apparatus 20. The communication apparatus 10 and the communication apparatus 20 may be configured to perform the method in any one of the foregoing embodiments (FIG. 4).

In addition, this application further provides a computer program. The computer program is used to implement operations and/or processing performed by the communication apparatus 10 in the methods provided in this application.

This application further provides a computer program. The computer program is used to implement operations and/or processing performed by the communication apparatus 20 in the methods provided in this application.

This application further provides a readable storage medium. The readable storage medium stores computer code. When the computer code is run on a computer, the computer is enabled to perform operations and/or processing performed by the communication apparatus 10 in the method provided in the methods provided in this application.

This application further provides a readable storage medium. The readable storage medium stores computer code. When the computer code is run on a computer, the computer is enabled to perform operations and/or processing performed by the communication apparatus 20 in the method provided in the methods provided in this application.

This application further provides a computer program product. The computer program product includes computer code or a computer program. When the computer code or the computer program is run on a computer, operations and/or processing performed by the communication apparatus 10 in the methods provided in this application are/is performed.

This application further provides a computer program product. The computer program product includes computer code or a computer program. When the computer code or the computer program is run on a computer, operations and/or processing performed by the communication apparatus 20 in the methods provided in this application are/is performed.

In the several embodiments provided in this application, it should be understood that the disclosed system, apparatus, and method may be implemented in other manners. For example, the described apparatus embodiment is merely an example. For example, division into the units is merely logical function division and may be other division in actual implementations. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on an actual requirement to implement the technical effects of the solutions provided in embodiments of this application.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The foregoing readable storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A channel state information reporting method, wherein the method comprises:

    receiving reference signals on N reference signal resources;
    determining indication information of M coefficients based on the reference signals on the N reference signal resources, wherein priorities of the M coefficients are determined based on priorities of the N reference signal resources, both M and N are integers greater than 1, and the M coefficients are used to determine a precoding matrix; and
    sending first information, wherein the first information comprises indication information of K coefficients, the K coefficients are determined from the M coefficients based on the priorities of the M coefficients, and K is a positive integer less than or equal to M.

2.  A channel state information reporting method, wherein the method comprises:

    sending a reference signal on a reference signal resource; and
    receiving first information, wherein the first information comprises indication information of K coefficients, the K coefficients are determined from M coefficients based on priorities of the M coefficients, the reference signal resource is any one of N reference signal resources, both M and N are integers greater than 1, K is a positive integer less than or equal to M, the priorities of the M coefficients are determined based on priorities of the N reference signal resources, and the M coefficients are used to determine a precoding matrix.

3.  The method according to claim 2, wherein the method further comprises:
    determining the precoding matrix based on the indication information that is of the K coefficients and that is comprised in the first information.

4.  The method according to any one of claims 1 to 3, wherein the priorities of the M coefficients are further determined based on one or more of the following: a transmission layer sequence number, a spatial domain basis vector sequence number, a reference signal port sequence number, and a frequency domain basis vector sequence number.

5.  The method according to any one of claims 1 to 4, wherein a priority of a coefficient associated with a spatial domain basis vector or a reference signal port that corresponds to any one of the N reference signal resources is determined according to any one or more items of a first preset rule below:

    if a priority of an $n_1$th reference signal resource in the N reference signal resources is higher than a priority of an $n_2$th reference signal resource in the N reference signal resources, a priority of a coefficient associated with any spatial domain basis vector corresponding to the $n_1$th reference signal resource is higher than a priority of a coefficient associated with any spatial domain basis vector corresponding to the $n_2$th reference signal resource; or a priority of a coefficient associated with any reference signal port corresponding to the $n_1$th reference signal resource is higher than a priority of a coefficient associated with any reference signal port corresponding to the $n_2$th reference signal resource; or
    if a priority of an $n_1$th reference signal resource in the N reference signal resources is higher than a priority of an $n_2$th reference signal resource in the N reference signal resources, a priority of a coefficient associated with an $i$th spatial domain basis vector corresponding to the $n_1$th reference signal resource is higher than a priority of a coefficient associated with an $i$th spatial domain basis vector that is with an identical sequence number and that corresponds to the $n_2$th reference signal resource; or a priority of a coefficient associated with an $i$th reference signal port corresponding to the $n_1$th reference signal resource is higher than a priority of a coefficient associated with an $i$th reference signal port that is with an identical sequence number and that corresponds to the $n_2$th reference signal resource, wherein $i$ represents the sequence number of the spatial domain basis vector or the reference signal port.

6.  The method according to any one of claims 1 to 5, wherein the priorities of the M coefficients satisfy:

$$\mathrm{Pri}(l, i, f, n) = 2L_{max} \cdot X \cdot v \cdot \pi(f) + v \cdot \varphi(i, n) + l,$$

wherein $l$ represents the transmission layer sequence number, and $l$ is set to 1, 2, ... , $\upsilon$; $\upsilon$ represents a quantity of transmission layers; $i$ represents the spatial domain basis vector sequence number, and $i$ is set to 0,1, ... , $2L_n$ - 1; $L_n$ represents a quantity of spatial domain basis vectors corresponding to an $n^{th}$ reference signal resource; $f$ represents the frequency domain basis vector sequence number, and $f$ is set to 0, 1, ... , $M_v$ - 1; $M_v$ represents a quantity of frequency domain basis vectors; $n$ represents sequence numbers of the N reference signal resources; $\varphi(i, n)$ represents a priority of a coefficient set associated with an $i^{th}$ spatial domain basis vector corresponding to the $n^{th}$ reference signal resource, and satisfies $\varphi(i, n) < 2L_{max} \cdot X$; $X$ is an integer greater than or equal to $N$; $L_{max}$ is greater than or equal to a maximum value of quantities of spatial domain basis vectors respectively corresponding to the N reference signal resources; $\pi(f)$ represents a first remapping function, which is used to remap a sequence number or an index of a frequency domain basis vector selected for an $l^{th}$ transmission layer and the $n^{th}$ reference signal resource; and Pri($l, i, f, n$) represents a priority of a coefficient corresponding to a given combination of the $l^{th}$ transmission layer, the $n^{th}$ reference signal resource, the $i^{th}$ spatial domain basis vector, and an $f^{th}$ frequency domain basis vector.

7. The method according to claim 6, wherein $\varphi(i, n)$ satisfies any one of the following formulas:

$\varphi(i, n) = 2L_{max} \cdot G(n) + i$, wherein $G(n)$ represents a priority ranking of the $n^{th}$ reference signal resource in the N reference signal resources; $L_{max}$ is greater than or equal to the maximum value of the quantities of spatial domain basis vectors respectively corresponding to the N reference signal resources; $i$ represents the spatial domain basis vector sequence number, and $i$ is set to 0, 1, ... , $2L_n$ - 1; and $L_n$ represents the quantity of spatial domain basis vectors corresponding to the $n^{th}$ reference signal resource;

$\varphi(i, n) = N \cdot \phi_n(i) + G(n)$, wherein $G(n)$ represents a priority ranking of the $n^{th}$ reference signal resource in the N reference signal resources; $i$ represents the spatial domain basis vector sequence number, and $i$ is set to 0,1, ..., $2L_n$ - 1; $L_n$ represents the quantity of spatial domain basis vectors corresponding to the $n^{th}$ reference signal resource; and $\phi_n(i) = i$ or $\phi_n(i) = i + 2L_{max} - 2L_n$, wherein $\phi_n(i)$ represents a second remapping function, which is used to remap the spatial domain basis vector sequence number; or

$$\varphi(i,n) = N \cdot a_{max} \cdot \left\lfloor \frac{i}{a_n} \right\rfloor + G(n) \cdot a_{max} + i \mod a_n$$, wherein $a_n$ is a positive integer greater than or equal to 1 and is in direct proportion to a value of $L_n$, and a greatest common divisor of all $a_n$ is 1; $i$ represents the spatial domain basis vector sequence number, and $i$ is set to 0, 1, ..., $2L_n$ - 1; $L_n$ represents the quantity of spatial domain basis vectors corresponding to the $n^{th}$ reference signal resource; and $a_{max}$ is a maximum value of all $a_n$.

8. The method according to any one of claims 1 to 4, wherein if a priority of an $n_1^{th}$ reference signal resource in the N reference signal resources is higher than a priority of an $n_2^{th}$ reference signal resource in the N reference signal resources, a priority of any coefficient associated with the $n_1^{th}$ reference signal resource is higher than a priority of any coefficient associated with the $n_2^{th}$ reference signal resource.

9. The method according to any one of claims 1 to 4 and 8, wherein the priorities of the M coefficients satisfy:

$$\mathrm{Pri}(l, i, f, n) = 2L_{max} \cdot v \cdot Y \cdot G(n) + 2L_{max} \cdot v \cdot \pi(f) + v \cdot i + l,$$

wherein $l$ represents the transmission layer sequence number, and $l$ is set to 1, 2, ... , $\upsilon$; $\upsilon$ represents a quantity of transmission layers; $i$ represents the spatial domain basis vector sequence number, and $i$ is set to 0, 1, ... , $2L_n$ - 1; $L_n$ represents a quantity of spatial domain basis vectors corresponding to an $n^{th}$ reference signal resource; $f$ represents the frequency domain basis vector sequence number, and $f$ is set to 0, 1, ... , $M_v$ - 1; $M_v$ represents a quantity of frequency domain basis vectors; n represents sequence numbers of the N reference signal resources; $G(n)$ represents a priority ranking of the $n^{th}$ reference signal resource in the N reference signal resources; $L_{max}$ is greater than or equal to a maximum value of quantities of spatial domain basis vectors respectively corresponding to the N reference signal resources; $Y$ is an integer greater than or equal to $M_v$, or $Y$ is an integer greater than or equal to $N_3$; $N_3$ is a quantity of subbands or a quantity of frequency domain units; $\pi(f)$ represents a first remapping function, which is used to remap a sequence number or an index of a frequency domain basis vector selected for an $l^{th}$ transmission layer and the $n^{th}$ reference signal resource; and Pri($l, i, f, n$) represents a priority of a coefficient corresponding to a given combination of the $l^{th}$ transmission layer, the $n^{th}$ reference signal resource, an $i^{th}$ spatial domain basis vector, and an $f^{th}$ frequency domain basis vector.

10. The method according to any one of claims 6, 7, and 9, wherein $\pi(f)$ satisfies any one of the following formulas:

$$\pi(f) = f;$$

$$\pi(f) = \min\ \left(2 \cdot k_{3,l,n}^{(f)}, 2 \cdot \left(N_3 - k_{3,l,n}^{(f)}\right) - 1\right),\ \text{wherein}\ \ k_{3,l,n}^{(f)} = \left(k_{3,l,n}^{(f)} - k_{3,l,n^*}^{(f_l^*)}\right)\ \bmod\ N_3;$$

$k_{3,l,n}^{(f)}$ **represents** an index, in a frequency domain basis vector universal set, of the $f^{th}$ frequency domain basis vector of the $n^{th}$ reference signal resource corresponding to the $l^{th}$ transmission layer; $k_{3,l,n^*}^{(f_l^*)}$ represents an original index of a frequency domain basis vector corresponding to a strongest coefficient in the N reference signal resources corresponding to the $l^{th}$ transmission layer; $f_l^*$ represents a sequence number of the frequency domain basis vector corresponding to the strongest coefficient of the $l^{th}$ transmission layer; and $n^*$ represents a reference signal resource sequence number corresponding to the strongest coefficient of the $l^{th}$ transmission layer; or

$$\pi(f) = \min\ \left(2 \cdot k_{3,l,n}^{(f)}, 2 \cdot \left(N_3 - k_{3,l,n}^{(f)}\right) - 1\right),\ \text{wherein}\ \ k_{3,l,n}^{(f)} = \left(k_{3,l,n}^{(f)} - k_{3,l,n}^{(f_{l,n}^*)}\right)\ \bmod\ N_3;$$

$k_{3,l,n}^{(f)}$ represents an index, in a frequency domain basis vector universal set, of the $f^{th}$ frequency domain basis vector of the $n^{th}$ reference signal resource corresponding to the $l^{th}$ transmission layer; $k_{3,l,n}^{(f_{l,n}^*)}$ represents an original index of a frequency domain basis vector corresponding to a strongest coefficient of the $n^{th}$ reference signal resource corresponding to the $l^{th}$ transmission layer; and $f_{l,n}^*$ represents a sequence number of the frequency domain basis vector corresponding to the strongest coefficient of the $n^{th}$ reference signal resource corresponding to the $l^{th}$ transmission layer.

11. The method according to any one of claims 6 to 10, wherein a smaller value of Pri(*l, i, f, n*) indicates a higher priority of a coefficient corresponding to a given sequence number combination of the $l^{th}$ transmission layer, the $n^{th}$ reference signal resource, the $i^{th}$ spatial domain basis vector or reference signal port, and the $f^{th}$ frequency domain basis vector.

12. The method according to any one of claims 1 to 11, wherein the priorities of the N reference signal resources are determined according to any one or more items of a second preset rule below:

    the reference signal resource corresponding to a larger quantity of spatial domain basis vectors or the reference signal resource for which a larger quantity of reference signal ports is selected, has a higher priority;
    the reference signal resource corresponding to a larger amplitude of a strongest coefficient has a higher priority;
    the reference signal resource corresponding to a higher signal strength of a reference signal has a higher priority; or
    the reference signal resource corresponding to a smaller sequence number of the reference signal resource has a higher priority.

13. The method according to claim 7 or 9, wherein a smaller value of *G*(*n*) indicates a higher priority of the $n^{th}$ reference signal resource.

14. A communication apparatus, comprising:

    a receiving unit, configured to receive reference signals on N reference signal resources;
    a processing unit, configured to determine indication information of M coefficients based on the reference signals on the N reference signal resources, wherein priorities of the M coefficients are determined based on priorities of the N reference signal resources, both M and N are integers greater than 1, and the M coefficients are used to determine a precoding matrix; and
    a sending unit, configured to send first information, wherein the first information comprises indication information of K coefficients, the K coefficients are determined from the M coefficients based on the priorities of the M coefficients, and K is a positive integer less than or equal to M.

15. A communication apparatus, comprising:

a processing unit, configured to generate a reference signal;

a sending unit, configured to send the reference signal on a reference signal resource; and

a receiving unit, configured to receive first information, wherein the first information comprises indication information of K coefficients, the K coefficients are determined from M coefficients based on priorities of the M coefficients, the reference signal resource is any one of N reference signal resources, both M and N are integers greater than 1, K is a positive integer less than or equal to M, the priorities of the M coefficients are determined based on priorities of the N reference signal resources, and the M coefficients are used to determine a precoding matrix.

16. The apparatus according to claim 15, wherein the processing unit is further configured to determine the precoding matrix based on the indication information that is of the K coefficients and that is comprised in the first information.

17. The apparatus according to any one of claims 14 to 16, wherein the priorities of the M coefficients are further determined based on one or more of the following: a transmission layer sequence number, a spatial domain basis vector sequence number, a reference signal port sequence number, and a frequency domain basis vector sequence number.

18. The apparatus according to any one of claims 14 to 17, wherein a priority of a coefficient associated with a spatial domain basis vector or a reference signal port that corresponds to any one of the N reference signal resources is determined according to any one or more items of the following first preset rule:

if a priority of an $n_1$th reference signal resource in the N reference signal resources is higher than a priority of an $n_2$th reference signal resource in the N reference signal resources, a priority of a coefficient associated with any spatial domain basis vector corresponding to the $n_1$th reference signal resource is higher than a priority of a coefficient associated with any spatial domain basis vector corresponding to the $n_2$th reference signal resource; or a priority of a coefficient associated with any reference signal port corresponding to the $n_1$th reference signal resource is higher than a priority of a coefficient associated with any reference signal port corresponding to the $n_2$th reference signal resource; or

if a priority of an $n_1$th reference signal resource in the N reference signal resources is higher than a priority of an $n_2$th reference signal resource in the N reference signal resources, a priority of a coefficient associated with an $i$th spatial domain basis vector corresponding to the $n_1$th reference signal resource is higher than a priority of a coefficient associated with an $i$th spatial domain basis vector that is with the same sequence number and that corresponds to the $n_2$th reference signal resource; or a priority of a coefficient associated with an $i$th reference signal port corresponding to the $n_1$th reference signal resource is higher than a priority of a coefficient associated with an $i$th reference signal port that is with the same sequence number and that corresponds to the $n_2$th reference signal resource, wherein i represents the sequence number of the spatial domain basis vector or the reference signal port.

19. The apparatus according to any one of claims 14 to 18, wherein the priorities of the M coefficients satisfy:

$$\mathrm{Pri}(l, i, f, n) = 2L_{max} \cdot X \cdot \upsilon \cdot \pi(f) + \upsilon \cdot \varphi(i, n) + l,$$

wherein $l$ represents the transmission layer sequence number, and $l$ is set to 1, 2, ... , $\upsilon$; $\upsilon$ represents a quantity of transmission layers; $i$ represents the spatial domain basis vector sequence number, and $i$ is set to 0,1, ..., $2L_n$ - 1; $L_n$ represents a quantity of spatial domain basis vectors corresponding to an $n$th reference signal resource; $f$ represents the frequency domain basis vector sequence number, and $f$ is set to 0, 1, ... , $M_v$ - 1; $M_v$ represents a quantity of frequency domain basis vectors; n represents sequence numbers of the N reference signal resources; $\varphi(i, n)$ represents a priority of a coefficient set associated with an $i$th spatial domain basis vector corresponding to the $n$th reference signal resource, and satisfies $\varphi(i, n) < 2L_{max} \cdot X$; $X$ is an integer greater than or equal to $N$; $L_{max}$ is greater than or equal to a maximum value of quantities of spatial domain basis vectors respectively corresponding to the N reference signal resources; $\pi(f)$ represents a first remapping function, which is used to remap a sequence number or an index of a frequency domain basis vector selected for the $l$th transmission layer and the $n$th reference signal resource; and Pri($l$, $i$, $f$, $n$) represents a priority of a coefficient corresponding to a given combination of the $l$th transmission layer, the $n$th reference signal resource, the $i$th spatial domain basis vector, and the $f$th frequency domain basis vector.

20. The apparatus according to claim 19, wherein $\varphi(i, n)$ satisfies any one of the following formulas:

$$\varphi(i,n) = 2L_{max} \cdot G(n) + i, \text{ wherein } G(n)$$

represents a priority ranking of the $n^{th}$ reference signal resource in the N reference signal resources; $L_{max}$ is greater than or equal to the maximum value of the quantities of spatial domain basis vectors respectively corresponding to the N reference signal resources; $i$ represents the spatial domain basis vector sequence number, and $i$ is set to $0, 1, \ldots, 2L_n - 1$; and $L_n$ represents the quantity of spatial domain basis vectors corresponding to the $n^{th}$ reference signal resource;

$$\varphi(i,n) = N \cdot \phi_n(i) + G(n),$$

wherein $G(n)$ represents a priority ranking of the $n^{th}$ reference signal resource in the N reference signal resources; $i$ represents the spatial domain basis vector sequence number, and $i$ is set to $0, 1, \ldots, 2L_n - 1$; $L_n$ represents the quantity of spatial domain basis vectors corresponding to the $n^{th}$ reference signal resource; and $\phi_n(i) = i$ or $\phi_n(i) = i + 2L_{max} - 2L_n$, wherein $\phi_n(i)$ represents a second remapping function, which is used to remap the spatial domain basis vector sequence number; or

$$\varphi(i,n) = N \cdot a_{max} \cdot \left\lfloor \frac{i}{a_n} \right\rfloor + G(n) \cdot a_{max} + i \mod a_n,$$

wherein $a_n$ is a positive integer greater than or equal to 1 and is in direct proportion to a value of $L_n$, and a greatest common divisor of all $a_n$ is 1; $i$ represents the spatial domain basis vector sequence number, and $i$ is set to $0, 1, \ldots, 2L_n - 1$; $L_n$ represents the quantity of spatial domain basis vectors corresponding to the $n^{th}$ reference signal resource; and $a_{max}$ is a maximum value of all $a_n$.

21. The apparatus according to any one of claims 14 to 17, wherein if a priority of an $n_1^{th}$ reference signal resource in the N reference signal resources is higher than a priority of an $n_2^{th}$ reference signal resource in the N reference signal resources, a priority of any coefficient associated with the $n_1^{th}$ reference signal resource is higher than a priority of any coefficient associated with the $n_2^{th}$ reference signal resource.

22. The apparatus according to any one of claims 14 to 17 and 21, wherein the priorities of the M coefficients satisfy:

$$\text{Pri}(l,i,f,n) = 2L_{max} \cdot v \cdot Y \cdot G(n) + 2L_{max} \cdot v \cdot \pi(f) + v \cdot i + l,$$

wherein $l$ represents the transmission layer sequence number, and $l$ is set to $1, 2, \ldots, v$; $v$ represents a quantity of transmission layers; $i$ represents the spatial domain basis vector sequence number, and $i$ is set to $0, 1, \ldots, 2L_n - 1$; $L_n$ represents a quantity of spatial domain basis vectors corresponding to an $n^{th}$ reference signal resource; $f$ represents the frequency domain basis vector sequence number, and $f$ is set to $0, 1, \ldots, M_v - 1$; $M_v$ represents a quantity of frequency domain basis vectors; $n$ represents sequence numbers of the N reference signal resources; $G(n)$ represents a priority ranking of the $n^{th}$ reference signal resource in the N reference signal resources; $L_{max}$ is greater than or equal to a maximum value of quantities of spatial domain basis vectors respectively corresponding to the N reference signal resources; $Y$ is an integer greater than or equal to $M_v$, or $Y$ is an integer greater than or equal to $N_3$; $N_3$ is a quantity of subbands or a quantity of frequency domain units; $\pi(f)$ represents a first remapping function, which is used to remap a sequence number or an index of a frequency domain basis vector selected for the $l^{th}$ transmission layer and the n$^{th}$ reference signal resource; and Pri($l, i, f, n$) represents a priority of a coefficient corresponding to a given combination of the $l^{th}$ transmission layer, the $n^{th}$ reference signal resource, the $i^{th}$ spatial domain basis vector, and the $f^{th}$ frequency domain basis vector.

23. The apparatus according to any one of claims 19, 20, and 22, wherein $\pi(f)$ satisfies any one of the following formulas:

$$\pi(f) = f;$$

$$\pi(f) = \min \left( 2 \cdot k_{3,l,n}^{(f)}, 2 \cdot \left( N_3 - k_{3,l,n}^{(f)} \right) - 1 \right), \text{ wherein } k_{3,l,n}^{(f)} = \left( k_{3,l,n}^{(f)} - k_{3,l,n^*}^{(f_l^*)} \right) \mod N_3;$$

$k_{3,l,n}^{(f)}$ represents an index, in a frequency domain basis vector universal set, of the $f^{th}$ frequency domain basis vector of the $n^{th}$ reference signal resource corresponding to the $l^{th}$ transmission layer; $k_{3,l,n^*}^{(f_l^*)}$ represents an original index of a frequency domain basis vector corresponding to a strongest coefficient in the N reference signal resources corresponding to the $l^{th}$ transmission layer; $f_l^*$ represents a sequence number of a frequency domain basis vector corresponding to the strongest coefficient of the $l^{th}$ transmission layer; and $n^*$ represents a reference signal resource sequence number corresponding to the strongest coefficient of the $l^{th}$ transmission layer; or

$$\pi(f) = \min\ \left(2 \cdot k_{3,l,n}^{(f)}, 2 \cdot \left(N_3 - k_{3,l,n}^{(f)}\right) - 1\right),\ \text{wherein}\ k_{3,l,n}^{(f)} = \left(k_{3,l,n}^{(f)} - k_{3,l,n}^{(f_{l,n}^*)}\right)\ \text{mod}\ N_3;$$

$k_{3,l,n}^{(f)}$ represents an index, in a frequency domain basis vector universal set, of the $f^{th}$ frequency domain basis vector of the $n^{th}$ reference signal resource corresponding to the $l^{th}$ transmission layer; $k_{3,l,n}^{(f_{l,n}^*)}$ represents an original index of a frequency domain basis vector corresponding to a strongest coefficient of the $n^{th}$ reference signal resource corresponding to the $l^{th}$ transmission layer; and $f_{l,n}^*$ represents a sequence number of the frequency domain basis vector corresponding to the strongest coefficient of the $n^{th}$ reference signal resource corresponding to the $l^{th}$ transmission layer.

24. The apparatus according to any one of claims 19 to 23, wherein a smaller value of Pri($l, i, f, n$) indicates a higher priority of a coefficient corresponding to a given sequence number combination of the $l^{th}$ transmission layer, the $n^{th}$ reference signal resource, the $i^{th}$ spatial domain basis vector or reference signal port, and the $f^{th}$ frequency domain basis vector.

25. The apparatus according to any one of claims 14 to 24, wherein the priorities of the N reference signal resources are determined according to any one or more items of a second preset rule below:

the reference signal resource corresponding to a larger quantity of spatial domain basis vectors or the reference signal resource for which a larger quantity of reference signal ports is selected, has a higher priority;
the reference signal resource corresponding to a larger amplitude of a strongest coefficient has a higher priority;
the reference signal resource corresponding to a higher signal strength of a reference signal has a higher priority; or
the reference signal resource corresponding to a smaller sequence number of the reference signal resource has a higher priority.

26. The apparatus according to claim 20 or 22, wherein a smaller value of $G(n)$ indicates a higher priority of the $n^{th}$ reference signal resource.

27. A communication apparatus, comprising a processor and an interface circuit, wherein the interface circuit is configured to receive a signal from another communication apparatus and transmit the signal to the processor, or send a signal from the processor to another communication apparatus, and the processor is configured to implement the method according to any one of claims 1 to 13 by using a logic circuit or by executing code instructions.

28. A readable storage medium, wherein the readable storage medium stores a computer program or instructions; and when the computer program or the instructions are executed by a communication apparatus, the method according to any one of claims 1 to 13 is implemented.

29. A computer program, wherein the computer program comprises instructions; and when the computer program is executed by a communication apparatus, the method according to any one of claims 1 to 13 is implemented.

30. A chip system, wherein the chip system comprises a processor configured to support a device in implementing a function related to the method according to any one of claims 1 to 13.

FIG. 1a

FIG. 1b

Base station

111 — Interface (interface)

112 — Processor (processor)

114 — Program/Program

113 — Memory (memory)

115 — Program/Program

110

UE

Interface (interface)

Processor (processor)

Program/Program

Memory (memory)

Program/Program

120

FIG. 2

```
┌─────────────┐                                    ┌─────────────┐
│Base station │                                    │     UE      │
└─────────────┘                                    └─────────────┘
      │                                                  │
      │  Send channel measurement configuration information
      │─────────────────────────────────────────────────▶│
      │                                                  │
      │                                                  │
      │           Send a channel measurement pilot       │
      │─────────────────────────────────────────────────▶│
      │                                                  │
      │   Feed back CSI based on a channel measurement pilot
      │                        result                    │
      │◀─────────────────────────────────────────────────│
      │                                                  │
      │      Send data based on the CSI fed back by the UE
      │─────────────────────────────────────────────────▶│
      │                                                  │
```

FIG. 3a

$N_3$

P | Precoding matrix ($P \times N_3$) → Decomposition → Spatial domain matrix 1 ($P \times P$) × Coefficient matrix 1 ($P \times N_3$) × Frequency domain matrix 1 ($N_3 \times N_3$)

Dimension reduction ⇓   Dimension reduction ⇓   Dimension reduction ⇓

Spatial domain matrix 2 ($P \times 2L$) × Coefficient matrix 2 ($2L \times M_v$) × Frequency domain matrix 2 ($M_v \times N_3$)

FIG. 3b

```
┌──────────────┐                                    ┌──────────────┐
│ Base station │                                    │      UE      │
└──────────────┘                                    └──────────────┘
```

S400: Send a reference signal on a reference signal resource, where the reference signal resource is any one of N reference signal resources

S401: Determine indication information of M coefficients based on reference signals on the N reference signal resources

S402: Send first information, where the first information includes indication information of K coefficients, and the K coefficients are determined from the M coefficients based on priorities of the M coefficients

S403: Determine a precoding matrix based on the indication information that is of the K coefficients and that is included in the first information

FIG. 4

Strongest coefficient of a
transmission layer
(strongest coefficient)

Strongest coefficient of a
transmission layer
(strongest coefficient)

Reference
signal
resource 1

Remapping
(remapping)

N3 DFT frequency
domain basis vectors

Selected frequency
domain basis vector

Reference
signal
resource 2

Remapping
(remapping)

Cyclic shift manner 1

Strongest coefficient of the
reference signal resource 1

Strongest coefficient of the
reference signal resource 1

Reference
signal
resource 1

Remapping
(remapping)

Reference
signal
resource 2

Remapping
(remapping)

Strongest coefficient of the
reference signal resource 2

Strongest coefficient of the
reference signal resource 2

Cyclic shift manner 2

FIG. 5

TRP 1
2L1=2 G(1)=2

TRP 2
2L2=6 G(2)=0

TRP 3
2L3=4 G(3)=1

**Manner 1**

TRP 1: | 12 | 13 | ③
TRP 2: | 0 | 1 | 2 | 3 | 4 | 5 | ①
TRP 3: | 6 | 7 | 8 | 9 | ②

**Manner 2**

TRP 1: | 2 | 5 |
TRP 2: | 0 | 3 | 6 | 9 | 12 | 15 | ① ②
TRP 3: | 1 | 4 | 7 | 10 |

**Method 3**

TRP 1: | 14 | 17 | ①
TRP 2: | 0 | 3 | 6 | 9 | 12 | 15 | ② ③
TRP 3: | 7 | 10 | 13 | 16 |

**Manner 4**

TRP 1: | 6 | 15 | ③
TRP 2: | 0 | 1 | 2 | 9 | 10 | 11 | ①
TRP 3: | 3 | 4 | 12 | 13 | ②

Communication apparatus 10

Receiving unit 102

Processing unit 100

Sending unit 101

FIG. 7

Communication apparatus 20

Processing unit 201

Sending unit 202

Receiving unit 200

FIG. 8

FIG. 9

FIG. 10

# INTERNATIONAL SEARCH REPORT

| International application No. |
|---|
| **PCT/CN2024/074580** |

| A. | CLASSIFICATION OF SUBJECT MATTER |
|---|---|

H04L5/00(2006.01)i

According to International Patent Classification (IPC) or to both national classification and IPC

| B. | FIELDS SEARCHED |
|---|---|

Minimum documentation searched (classification system followed by classification symbols)

IPC: H04W; H04L

Documentation searched other than minimum documentation to the extent that such documents are included in the fields searched

Electronic data base consulted during the international search (name of data base and, where practicable, search terms used)

3GPP, CNTXT, ENTXTC, VEN, WPABSC, CJFD: 参考信号, 导频, 权重, 加权, 系数, 优先级, CJT, CSI, FDD, RS, TRP, priority, coefficient?

| C. | DOCUMENTS CONSIDERED TO BE RELEVANT |
|---|---|

| Category* | Citation of document, with indication, where appropriate, of the relevant passages | Relevant to claim No. |
|---|---|---|
| A | US 2021051508 A1 (LG ELECTRONICS INC.) 18 February 2021 (2021-02-18) entire document | 1-30 |
| A | US 2022360312 A1 (NTT DOCOMO, INC.) 10 November 2022 (2022-11-10) entire document | 1-30 |
| A | WO 2021203373 A1 (HUAWEI TECHNOLOGIES CO., LTD.) 14 October 2021 (2021-10-14) entire document | 1-30 |
| A | WO 2023005989 A1 (HUAWEI TECHNOLOGIES CO., LTD.) 02 February 2023 (2023-02-02) entire document | 1-30 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 March 2024** | **11 April 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/074580**

| Patent document cited in search report | | | Publication date (day/month/year) | Patent family member(s) | | | Publication date (day/month/year) |
|---|---|---|---|---|---|---|---|
| US | 2021051508 | A1 | 18 February 2021 | WO | 2021029702 | A1 | 18 February 2021 |
| US | 2022360312 | A1 | 10 November 2022 | WO | 2021030442 | A1 | 18 February 2021 |
| | | | | EP | 4014351 | A1 | 22 June 2022 |
| | | | | JP | 2022544505 | A | 19 October 2022 |
| | | | | JP | 7301216 | B2 | 30 June 2023 |
| WO | 2021203373 | A1 | 14 October 2021 | None | | | |
| WO | 2023005989 | A1 | 02 February 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310127389